# EUROPEAN PATENT APPLICATION

(11) **EP 4 737 141 A1**
(43) Date of publication of application: **06.05.2026**
(21) Application number: 24831864.4
(22) Date of filing: 21.06.2024
(51) Int. Cl.: B60G 17/015, B60K 1/00, B60K 1/04, B62D 21/00

(54) **WORK VEHICLE**

(30) Priority: 27.06.2023 JP 2023105377; 27.06.2023 JP 2023105381
(71) Applicant: KUBOTA CORPORATION, Osaka-shi, Osaka 556-8601 (JP)
(72) Inventor: SOEJIMA, Masaru, Sakai-shi, Osaka 590-0908 (JP); MIYAZAKI, Makoto, Sakai-shi, Osaka 590-0908 (JP); TAKEDA, Kazuya, Sakai-shi, Osaka 590-0908 (JP); MAKINO, Ryota, Sakai-shi, Osaka 590-0908 (JP); ITO, Daigo, Sakai-shi, Osaka 590-0908 (JP); MATSUOKA, Ginji, Sakai-shi, Osaka 590-0908 (JP); SAKANO, Tomoyoshi, Sakai-shi, Osaka 590-0908 (JP); YOSHIDOME, Kazuhiro, Sakai-shi, Osaka 590-0908 (JP); FUKUDA, Ryosuke, Sakai-shi, Osaka 590-0908 (JP)
(74) Representative: Cabinet Beau de Loménie
(86) International application number: PCT/JP2024/022578
(87) International publication number: WO 2025/005003

(57) **Abstract**

Provided is a working vehicle to change the height of the vehicle body according to various situations such as the type of work. A working vehicle (1) includes a vehicle body (2), a traveling device (3) to support the vehicle body (2) such that the vehicle body (2) is allowed to travel, and a height changing mechanism (90) to change a height of the vehicle body (2) that is a distance of the vehicle body (2) from a ground surface. The height changing mechanism (90) is configured to change the height of the vehicle body (2) to any height between a first height (HA) and a second height (HB) higher than the first height (HA).

## Description

### Technical Field

The present invention relates to a working vehicle to perform work such as agricultural work.

### Background Art

The working vehicle disclosed in PTL 1 has been known. The working vehicle (management machine) disclosed in PTL 1 includes a vehicle body (machine body), a traveling device, and a working device (spreader). The traveling device includes a left traveling device located leftward of the vehicle body and a right traveling device located rightward of the vehicle body.

### Citation List

### Patent Literature

PTL 1: Japanese Unexamined Patent Application Publication No. 2020-103233

### Summary of Invention

### Technical Problem

The above-described working vehicle is configured to spread a liquid substance by the working device (spreader) to plants and the like planted in an agricultural field, and the working device (spreader) is provided at a height suitable for spraying work. However, this working vehicle cannot change the height of the vehicle body. Thus, for example, even if a working device to perform work different from spraying work is attached to the vehicle body for the work, the height of the vehicle body cannot be changed to a height suitable for the work. In short, the height of the vehicle body cannot be changed according to the type and the like of the work.

The present invention has been made in consideration of the above-described problem, and it is an object to provide working vehicles each of which can change the height of the vehicle body according to various situations such as the type and the like of the work.

The above-described working vehicle may perform work (spraying of an agricultural chemical and the like), for example, while traveling with crops and the like planted in an agricultural field located between the left and right traveling devices. However, the above-described working vehicle cannot change the height of the vehicle body relative to the ground surface. Thus, when the height of crops is higher than an expected height, the working vehicle may be unable to travel with the crops located between the left and right traveling devices. Even if the height of the vehicle body is attempted to be changed, part of the traveling devices, for example, is present between the left and right traveling devices, thus the vehicle body cannot be raised or lowered between the left and right traveling devices. Therefore, it is difficult for the working vehicle to travel with the crops reliably located between the left and right traveling devices.

The present invention has been made in consideration of the above-described problem, and it is an object to provide working vehicles each of which can travel with crops and the like reliably located between the left and right traveling devices.

### Solution to Problem

A working vehicle according to an example embodiment of the present invention includes a vehicle body, a traveling device to support the vehicle body such that the vehicle body is allowed to travel, and a height changing mechanism to change a height of the vehicle body that is a distance of the vehicle body from a ground surface, wherein the height changing mechanism is configured to change the height of the vehicle body to any height between a first height and a second height higher than the first height.

The working vehicle may further include a mount provided on the vehicle body to attach and detach a working device thereto and therefrom. The height changing mechanism may be configured to change the height of the vehicle body according to work performed by the working device.

The working vehicle may further include a recognizer to recognize the working device attached to the mount. The height changing mechanism may be configured to change the height of the vehicle body according to the working device recognized by the recognizer.

The working vehicle may further include a manual operator to be operated to indicate the height of the vehicle body. The height changing mechanism may be configured to change the height of the vehicle body according to the indication of the height via the manual operator.

The height changing mechanism may be configured to control the height of the vehicle body to be a first work height when the working device attached to the mount is a first working device, and control the height of the vehicle body to be a second work height when the working device attached to the mount is a second working device different from the first working device.

The height changing mechanism may be configured to control the height of the vehicle body to be equal to or greater than the first height when a crop planted in the ground surface is a first crop.

The height changing mechanism may be configured to, when the crop planted in the ground surface is a second crop higher than the first crop, control the height of the vehicle body to be greater than a predetermined height of the vehicle body corresponding to the first crop and equal to or less than the second height.

The height changing mechanism may be configured to use the predetermined height of the vehicle body corresponding to the first crop that is higher than the first crop, and a predetermined height of the vehicle body corresponding to the second crop that is higher than the second crop.

The traveling device may include one or more wheels. The height changing mechanism may be configured to change the height of the vehicle body between the first height at which a position of the vehicle body in an up-down direction overlaps a position of the one or more wheels in the up-down direction and the second height at which the vehicle body is located higher than the one or more wheels in the up-down direction.

The height changing mechanism may be configured to change the height of the vehicle body between the first height at which a position of the vehicle body in an up-down direction overlaps a position of the traveling device in the up-down direction and the second height at which the vehicle body is located higher than the traveling device in the up-down direction.

The traveling device may include a left traveling device located leftward of the vehicle body and a right traveling device located rightward of the vehicle body. The vehicle body may be located between the left traveling device and the right traveling device. The height changing mechanism may be configured to change the height of the vehicle body by raising or lowering the vehicle body at a location between the left traveling device and the right traveling device.

The working vehicle may further include a frame structure provided at a periphery of the vehicle body and attached to the vehicle body. The frame structure may include a left frame located leftward of the vehicle body to extend in an up-down direction, a right frame located rightward of the vehicle body to extend in the up-down direction, and a lateral frame connecting an upper portion of the left frame and an upper portion of the right frame. The vehicle body may be positioned such that the vehicle body is in an area defined by the left frame, the right frame, and the lateral frame in a front view. The height changing mechanism may be configured to change the height of the vehicle body that is the distance of the vehicle body from the ground surface by raising or lowering the frame structure.

The height changing mechanism may include a lifting cylinder including a rod to extend and retract in the up-down direction and configured to raise and lower the frame structure. The lifting cylinder may include a lower end positioned at the same or substantially the same height from the ground surface as the height of the vehicle body when the vehicle body is at the first height.

The working vehicle may further include a situation detector to detect a situation in a surrounding area of the vehicle body, a height detector to detect the height of the vehicle body that is the distance of the vehicle body from the ground surface, and a controller configured or programmed to actuate the height changing mechanism based on detection results from the situation detector and the height detector to change the height of the vehicle body.

The situation detector may be configured to detect, as the situation in the surrounding area of the vehicle body, a height of an obstacle on the ground surface that hinders travel. The controller may be configured or programmed to compare the height of the obstacle detected by the situation detector with the height of the vehicle body detected by the height detector, and actuate the height changing mechanism to change the height of the vehicle body such that the changed height of the vehicle body is equal to or greater than the height of the obstacle.

The situation detector may be configured to detect, as the height of the obstacle, a height of a crop planted in the ground surface.

The situation detector may be configured to detect the height of the crop located forward of the vehicle body in a direction of travel of the vehicle body. The controller may be configured or programmed to actuate the height changing mechanism to change the height of the vehicle body during or before travel of the vehicle body to reach the crop located in front of the vehicle body in the direction of travel of the vehicle body.

The situation detector may be configured to, while the vehicle body is traveling along a first row of one or more crops, detect a height of one or more crops in a second row adjacent to the first row. The controller may be configured or programmed to actuate the height changing mechanism to change the height of the vehicle body while the vehicle body which has finished traveling along the first row is turning to start traveling along the second row.

A working vehicle according to an example embodiment of the present invention includes a vehicle body, a traveling device to support the vehicle body such that the vehicle body is allowed to travel, and a height changing mechanism to change a height of the vehicle body that is a distance of the vehicle body from a ground surface, wherein the traveling device includes a left traveling device located leftward of the vehicle body and a right traveling device located rightward of the vehicle body, the vehicle body is located between the left traveling device and the right traveling device, and the height changing mechanism is configured to raise and lower the vehicle body at a location between the left traveling device and the right traveling device in a width direction of the vehicle body.

The working vehicle may further include a power supply apparatus to generate power to drive the traveling device. The vehicle body may include a housing frame to house the power supply apparatus.

The power supply apparatus may include a motor and a battery to store electricity to be supplied to the motor. The height changing mechanism may be configured to raise and lower the housing frame which houses the battery.

The working vehicle may further include a frame structure provided at a periphery of the vehicle body. The left traveling device may include a left front wheel and a left rear wheel. The right traveling device may include a right front wheel and a right rear wheel. The frame structure may include a left frame connecting the left front wheel and the left rear wheel, and a right frame connecting the right front wheel and the right rear wheel.

The frame structure may include a fixed frame which has the traveling device attached thereto and a movable frame attached to the vehicle body. The height changing mechanism may be configured to raise and lower the movable frame relative to the fixed frame.

The height changing mechanism may be configured to change the height of the vehicle body to any height within a predetermined height range.

The height changing mechanism may be configured to change the height of the vehicle body to a height at which the vehicle body is located between the left traveling device and the right traveling device.

The height changing mechanism may be configured to change the height of the vehicle body to a height at which the vehicle body is located higher than the left traveling device and the right traveling device.

The vehicle body may be positioned between the left frame and the right frame.

The frame structure may include a lateral frame connecting the left frame and the right frame.

The lateral frame may connect an upper portion of the left frame and an upper portion of the right frame. The vehicle body may be positioned such that the vehicle body is in an area defined by the left frame, the right frame, and the lateral frame in a front view.

The height changing mechanism may include lifting cylinders to raise and lower a respective plurality of the movable frames. The plurality of movable frames may be included in the left frame and the right frame, respectively, and a plurality of the fixed frames are included in the left frame and the right frame, respectively. The lifting cylinders may include a left lifting cylinder to raise and lower the corresponding movable frame of the left frame, and a right lifting cylinder to raise and lower the corresponding movable frame of the right frame. Advantageous Effects of Invention

The working vehicle according to the present invention can change the height of the vehicle body according to various situations such as the type and the like of work.

The working vehicle according to the present invention can travel with a crop or the like reliably located between the left and right traveling devices.

### Brief Description of Drawings

[FIG. 1] FIG. 1 is a perspective view illustrating an embodiment of a working vehicle.
[FIG. 2] FIG. 2 is a left side view illustrating the embodiment of the working vehicle.
[FIG. 3] FIG. 3 is a right side view illustrating the embodiment of the working vehicle.
[FIG. 4] FIG. 4 is a front view illustrating the embodiment of the working vehicle.
[FIG. 5] FIG. 5 is a rear view illustrating the embodiment of the working vehicle.
[FIG. 6] FIG. 6 is a plan view illustrating the embodiment of the working vehicle.
[FIG. 7] FIG. 7 is a block diagram illustrating an example of an entire configuration of the working vehicle.
[FIG. 8] FIG. 8 is a perspective view of a frame structure.
[FIG. 9] FIG. 9 is an exploded perspective view of side frames (left frame and right frame).
[FIG. 10] FIG. 10 is a perspective view illustrating an upper frame (lateral frame) and the side frames separately.
[FIG. 11] FIG. 11 is a left rear view of a first drive assembly (not including a steering mechanism).
[FIG. 12] FIG. 12 is a right front view of the first drive assembly (not including a steering mechanism).
[FIG. 13] FIG. 13 is a right rear view of a third drive assembly.
[FIG. 14] FIG. 14 is an upper left view of the third drive assembly.
[FIG. 15] FIG. 15 is a right rear view of the first drive assembly (including a steering mechanism).
[FIG. 16] FIG. 16 is a rear view of the first drive assembly (including a steering mechanism).
[FIG. 17] FIG. 17 is a rear view of the first drive assembly (not including a steering mechanism).
[FIG. 18] FIG. 18 is a plan view illustrating a steering mechanism (left steering mechanism) and a wheel (left front wheel).
[FIG. 19] FIG. 19 is a plan view illustrating a state where the rod of a cylinder of the steering mechanism (left steering mechanism) is extended.
[FIG. 20] FIG. 20 is a plan view illustrating a state where the rod of a cylinder of the steering mechanism (left steering mechanism) is retracted.
[FIG. 21] FIG. 21 is a plan view illustrating a change in the position of the left front wheel when the left front wheel is rotated inward.
[FIG. 22] FIG. 22 is a perspective view illustrating another embodiment of the working vehicle.
[FIG. 23] FIG. 23 is a left side view illustrating another embodiment of the working vehicle.
[FIG. 24] FIG. 24 is a schematic front view illustrating the first drive assembly with a first transmission shaft retracted.
[FIG. 25] FIG. 25 is a right rear view of the first drive assembly with the first transmission shaft retracted.
[FIG. 26] FIG. 26 is a left front view of the first drive assembly with the first transmission shaft extended.
[FIG. 27] FIG. 27 is a front view of the first drive assembly with the first transmission shaft extended.
[FIG. 28] FIG. 28 is a left front view of the third drive assembly with a lower transmission shaft extended.
[FIG. 29] FIG. 29 is a right rear view of the third drive assembly with the lower transmission shaft extended.
[FIG. 30] FIG. 30 is a perspective view of the working vehicle with the first transmission shaft and the lower transmission shaft extended.
[FIG. 31] FIG. 31 is a left side view of the working vehicle with the first transmission shaft and the lower transmission shaft extended.
[FIG. 32] FIG. 32 is a front view indicating that at least a portion of the first drive assembly is at an outer overlapping position.
[FIG. 33] FIG. 33 is a plan view indicating that at least a portion of the third drive assembly is at an outer overlapping position.
[FIG. 34] FIG. 34 is a schematic plan view illustrating the working vehicle with the rods of left and right cylinders retracted.
[FIG. 35] FIG. 35 is a plan view illustrating the working vehicle with the rods of left and right cylinders extended.
[FIG. 36] FIG. 36 is a schematic plan view illustrating the working vehicle including a distance changing mechanism including a first changing mechanism, a second changing mechanism, a third changing mechanism and a fourth changing mechanism.
[FIG. 37] FIG. 37 is a schematic rear view for explaining a configuration in which a left changing mechanism and a right changing mechanism are independently actuated.
[FIG. 38] FIG. 38 is a flowchart illustrating an example (first example) of the operation of the distance changing mechanism.
[FIG. 39] FIG. 39 is a schematic plan view for explaining the example (first example) of the operation of the distance changing mechanism.
[FIG. 40] FIG. 40 is a schematic plan view for explaining the example (first example) of the operation of the distance changing mechanism.
[FIG. 41] FIG. 41 is a schematic plan view for explaining the example (first example) of the operation of the distance changing mechanism.
[FIG. 42] FIG. 42 is a flowchart illustrating a variation of the first example.
[FIG. 43] FIG. 43 is a flowchart illustrating other example (second example) of the operation of the distance changing mechanism.
[FIG. 44] FIG. 44 is a schematic plan view for explaining another example (second example) of the operation of the distance changing mechanism.
[FIG. 45] FIG. 45 is a schematic plan view for explaining another example (second example) of the operation of the distance changing mechanism.
[FIG. 46] FIG. 46 is a schematic plan view for explaining another example (second example) of the operation of the distance changing mechanism.
[FIG. 47] FIG. 47 is a flowchart illustrating a variation of the second example.
[FIG. 48] FIG. 48 is a perspective view illustrating a state where the vehicle body is raised in another embodiment of the working vehicle.
[FIG. 49] FIG. 49 is a left side view illustrating a state where the vehicle body is raised in another embodiment of the working vehicle.
[FIG. 50] FIG. 50 is a front view illustrating a state where the vehicle body is raised in another embodiment of the working vehicle.
[FIG. 51] FIG. 51 is a view illustrating a first correspondence table.
[FIG. 52] FIG. 52 is a view illustrating a second correspondence table.
[FIG. 53] FIG. 53 is a front view illustrating the working vehicle with the height of the vehicle body at a first crop correspondence height.
[FIG. 54] FIG. 54 is a front view illustrating the working vehicle with the height of the vehicle body at a second crop correspondence height.
[FIG. 55] FIG. 55 is a flowchart illustrating an example (first example) of the operation of a height changing mechanism.
[FIG. 56] FIG. 56 is a flowchart illustrating a variation of the first example.
[FIG. 57] FIG. 57 is a flowchart illustrating an example (second example) of the operation of the height changing mechanism.
[FIG. 58] FIG. 58 is a flowchart illustrating a variation of the second example.
[FIG. 59] FIG. 59 is a schematic side view for explaining the example (first example) of the operation of the height changing mechanism.
[FIG. 60] FIG. 60 is a schematic side view for explaining the example (first example) of the operation of the height changing mechanism.
[FIG. 61] FIG. 61 is a schematic front view for explaining the example (second example) of the operation of the height changing mechanism.
[FIG. 62] FIG. 62 is a schematic side view illustrating the working vehicle including a position changing mechanism, and a state where a power supply apparatus (battery) is at a rear position.
[FIG. 63] FIG. 63 is a schematic side view illustrating the working vehicle including the position changing mechanism, and a state where the power supply apparatus (battery) is at an optimal position between a front position and a rear position.
[FIG. 64] FIG. 64 is a schematic side view illustrating the working vehicle including the position changing mechanism, and a state where the power supply apparatus (battery) is at a front position.
[FIG. 65] FIG. 65 is a schematic perspective view illustrating a variation of the position changing mechanism, and a state where a housing frame and the power supply apparatus (battery) are at a rear position.
[FIG. 66] FIG. 66 is a schematic perspective view illustrating a variation of the position changing mechanism, and a state where the housing frame and the power supply apparatus (battery) are moved forward.
[FIG. 67] FIG. 67 is a flowchart illustrating an example of a control operation of a position changing control unit in a first embodiment.
[FIG. 68] FIG. 68 is a graph illustrating an example of a change in the slip ratio measured by a slip ratio measurer.
[FIG. 69] FIG. 69 is a flowchart illustrating an example of a control operation of a position changing control unit in a second embodiment.
[FIG. 70] FIG. 70 is a schematic side view for explaining an example of the operation of the position changing mechanism.
[FIG. 71] FIG. 71 is a graph illustrating an example of a change in the torque measured by a torque measurer.
[FIG. 72] FIG. 72 is a schematic side view for explaining an example of the operation of the position changing mechanism.
[FIG. 73] FIG. 73 is a flowchart illustrating another example of the control operation of the position changing control unit in the second embodiment.
[FIG. 74] FIG. 74 is a left side view illustrating still another embodiment of the working vehicle.
[FIG. 75] FIG. 75 is a front view illustrating still another embodiment of the working vehicle.
[FIG. 76] FIG. 76 is a front view for explaining a method of attaching a support frame to the vehicle body from above.
[FIG. 77] FIG. 77 is a left side view for explaining the method of attaching the support frame to the vehicle body from above.
[FIG. 78] FIG. 78 is a front view illustrating a working vehicle in an embodiment not including the height changing mechanism.
[FIG. 79] FIG. 79 is a left side view of a working vehicle including a support frame in another embodiment.
[FIG. 80] FIG. 80 is a front view of the working vehicle including the support frame in another embodiment.
[FIG. 81] FIG. 81 is a plan view illustrating the support frame and the like in another embodiment.
[FIG. 82] FIG. 82 is a left side view for explaining a method of attaching the support frame in another embodiment to the vehicle body from the rear.
[FIG. 83] FIG. 83 is a front view for explaining a method of attaching the support frame in another embodiment to the vehicle body from above.
[FIG. 84] FIG. 84 is a front view illustrating a working vehicle in an embodiment in which the support frame is located below the side frames.

### Description of Embodiments

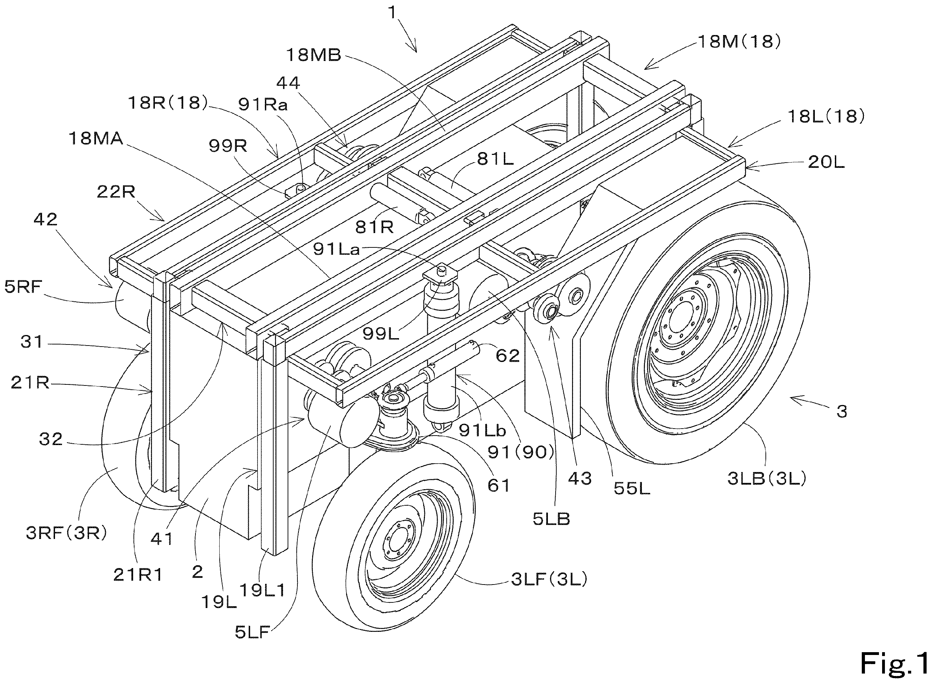

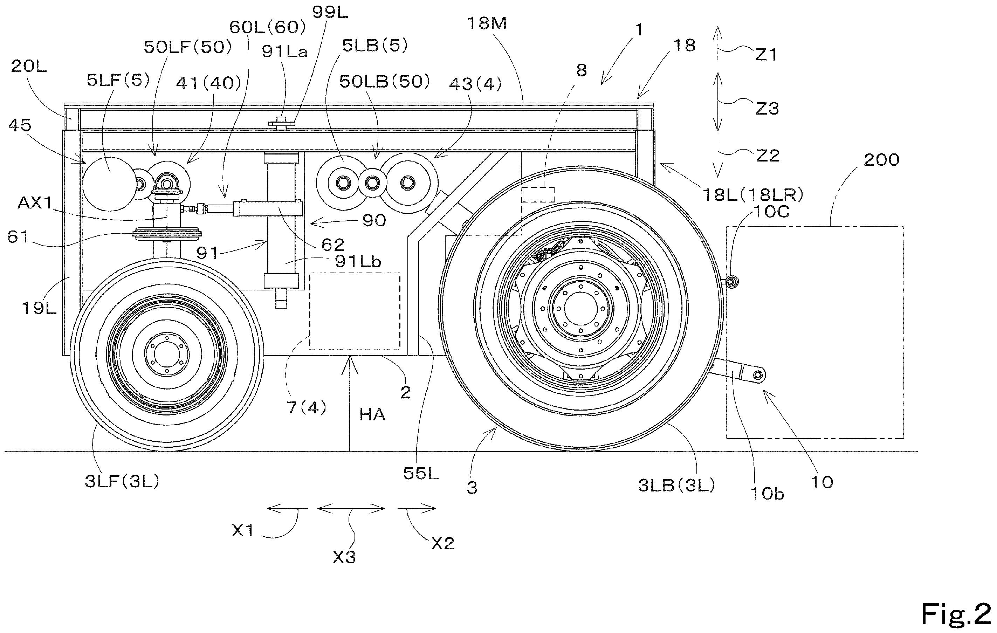

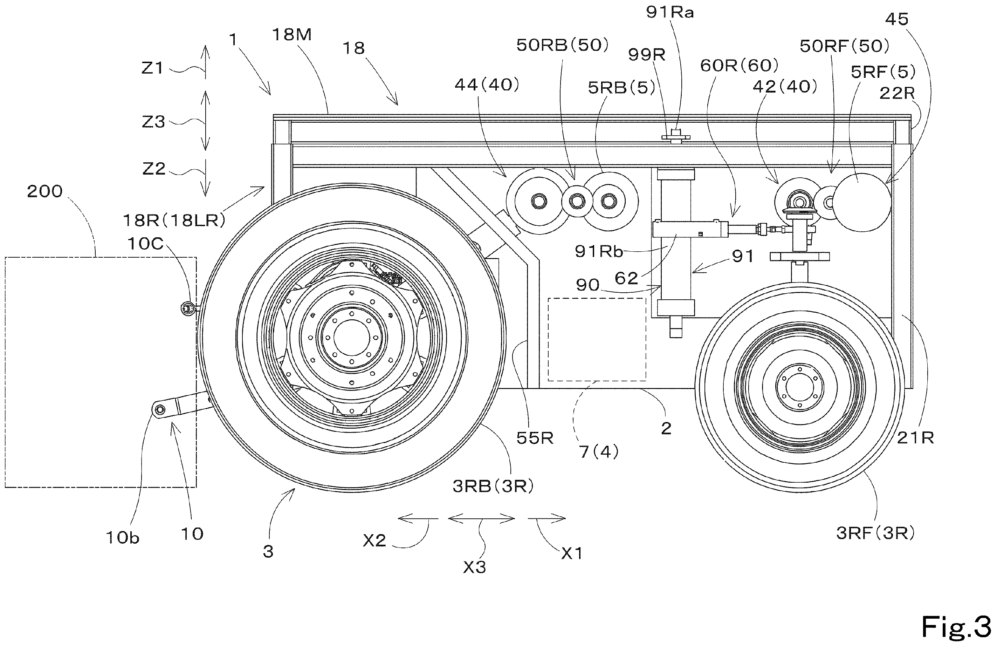

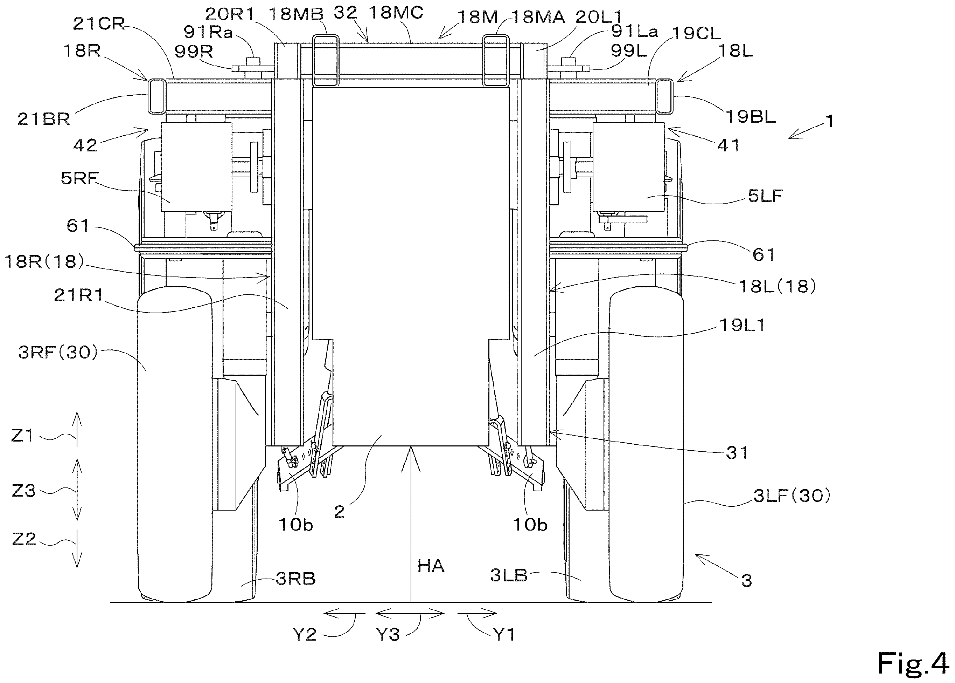

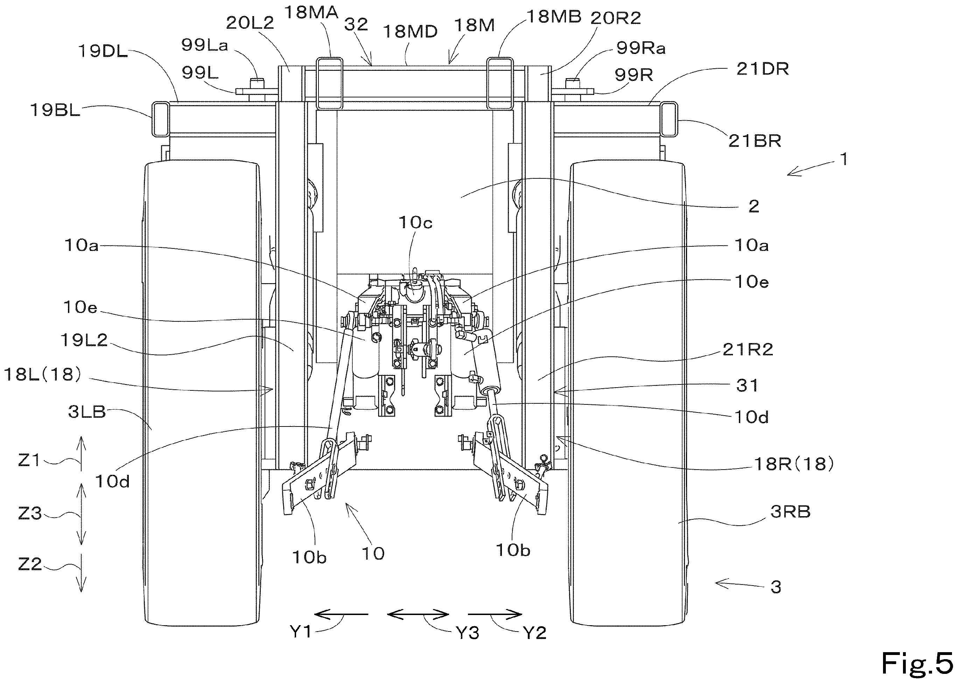

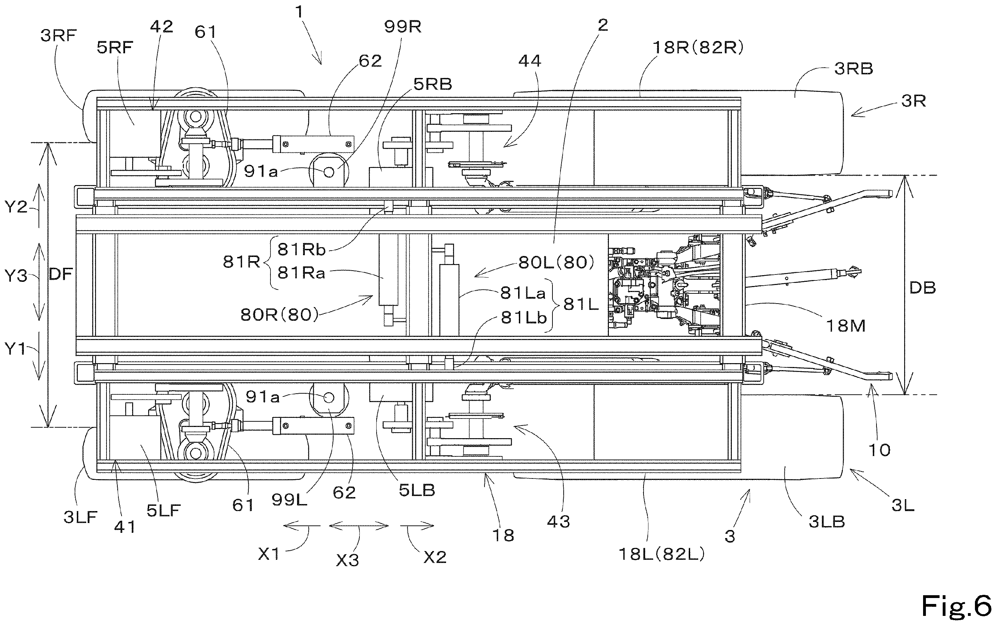

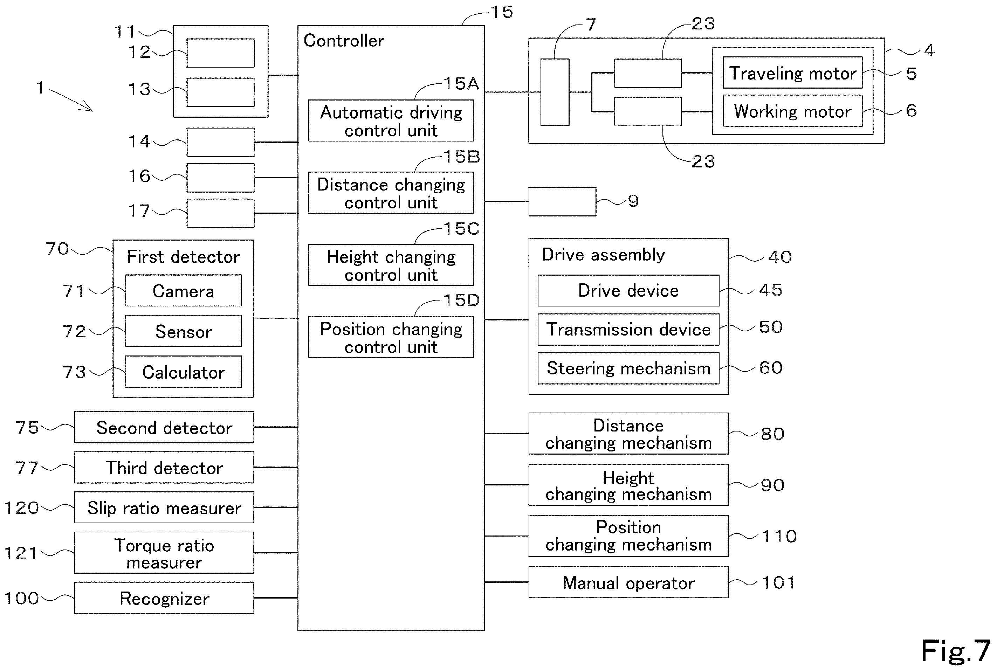

Hereinafter, a preferred embodiment of a working vehicle 1 according to the present invention will be described. FIG. 1 to FIG. 7 illustrate an embodiment of the working vehicle 1. FIG. 1 is a perspective view of the working vehicle 1. FIG. 2 is a left side view of the working vehicle 1. FIG. 3 is a right side view of the working vehicle 1. FIG. 4 is a front view of the working vehicle 1. FIG. 5 is a rear view of the working vehicle 1. FIG. 6 is a plan view of the working vehicle 1. FIG. 7 is a block diagram illustrating the entire configuration of the working vehicle 1.

In the following description, in the drawings, the direction indicated by an arrow X1 is referred to as forward, the direction indicated by an arrow X2 is referred to as rearward, the direction indicated by an arrow Y1 is referred to as leftward, the direction indicated by an arrow Y2 is referred to as rightward, the direction indicated by an arrow Z1 is referred to as upward, and the direction indicated by an arrow Z2 is referred to as downward. In addition, the direction indicated by an arrow X3 is referred to as the front-rear direction, the direction indicated by an arrow Y3 is referred to as the lateral direction, and the direction indicated by an arrow Z3 is referred to as the up-down direction.

The work performed by the working vehicle 1 includes, e.g., work related to agriculture, work related to industry (such as civil engineering or architecture), and work related to transportation, but is not limited to such work. In the preferred embodiment of the present invention, the work performed by the working vehicle 1 is work (agricultural work) related to agriculture. Hereinafter, as an example, the case will be described where the work performed by the working vehicle 1 is agricultural work. In this case, the working vehicle 1 is an agricultural vehicle.

As illustrated in FIG. 1 to FIG. 6, the working vehicle 1 includes a vehicle body 2, and a traveling device 3 to support the vehicle body 2 such that the vehicle body 2 is allowed to travel. In the present embodiment, the vehicle body 2 is in a substantially rectangular parallelepiped shape having an internal space. However, the shape of the vehicle body 2 is not limited to the substantially rectangular parallelepiped shape. Various devices and pieces of equipment are housed in the internal space of the vehicle body 2. Thus, in the following description, the vehicle body 2 may be referred to as the "housing frame 2". In the present embodiment, the housing frame 2 is the entirety of the vehicle body 2. In other words, the housing frame 2 constitutes the vehicle body 2.

As illustrated in FIG. 2 and FIG. 3, a power supply apparatus 4 to drive the traveling device 3 is provided (housed) in the internal space of the vehicle body 2. The power supply apparatus 4 generates power to drive the traveling device 3, and the power is supplied to the traveling device 3. As illustrated in FIG. 7, the power supply apparatus 4 includes a motor 5 and a battery 7. In the present embodiment, as the power supply apparatus 4, the later-described battery 7 is provided (housed) in the vehicle body 2.

The motor 5 is a traveling motor that generates power to drive the traveling device 3. The motor 5 is an electric motor driven by electricity. An inverter 23 (see FIG. 7) is connected to the motor 5. The inverter 23 controls the rotation of the motor 5 based on a control signal from the later-described controller 15. The battery 7 stores the electricity to be supplied to the motor 5. However, the power supply apparatus 4 may include an engine instead of the motor 5. Alternatively, the power supply apparatus 4 may include fuel cells.

As illustrated in FIG. 7, the working vehicle 1 includes a motor 6 serving as a working motor in addition to the motor 5 serving as a traveling motor. The working motor generates power to drive devices and mechanisms which are different from the traveling device 3. The motor 6 is an electric motor driven by the electricity supplied from the battery 7. The rotation of the motor 6 can be controlled by the inverter 23. Hereinafter, the motor 5 may be referred to as the "traveling motor 5", and the motor 6 may be referred to as the "working motor 6".

The traveling motor 5 and the working motor 6 can be driven independently from each other. The working motor 6 is a motor to drive a hydraulic pump for actuating the later-described hydraulic cylinder. In addition, the working motor 6 also serves as a motor to drive an external output shaft 8.

As described above, the battery 7 which is part of the power supply apparatus 4 is housed in the vehicle body 2 (see FIG. 2 and FIG. 3). Although not illustrated, the vehicle body 2 further houses a cooling system (a radiator, a fan, a water pump, a compressor and the like) that cools the power supply apparatus 4 (the motor 5, the motor 6, the battery 7 and the like); and a hydraulic system (a control valve and the like) to actuate the later-described hydraulic cylinders (cylinder 62, left cylinder 81L, right cylinder 81R, lifting cylinder 91, cylinder 113) and the like based on a control signal from the controller 15.

As illustrated in FIG. 2, the external output shaft 8 projects rearward from the rear of the vehicle body 2. Thus, the external output shaft 8 is an output shaft to take the power from the working motor 6 to the outside of the vehicle body 2. The power taken from the external output shaft 8 can be input to a working device (implement) 200 which performs work. Thus, the working device 200 is driven to perform the work.

The working device 200 includes, e.g., a device to perform the work (agricultural work) related to agriculture, a device to perform the work related to civil engineering, a device to perform the work related to architecture, and a device to perform the work related to transportation; however, the working device 200 is not limited to these working devices. In the embodiment shown below, the working device 200 is a device that performs agricultural work.

The working device 200 that performs agricultural work includes, e.g., a spreader to spread a substance to be spread such as a fertilizer or an agricultural chemical, a seeder to plant seeds, a cultivator to cultivate the soil, a tiller (plow) to till the soil, a weed remover to remove weeds, and a ridging machine to ridge the soil surface. However, the working device 200 may be any device that performs agricultural work, and the type thereof is not limited to a specific one. When the working device 200 is an electric working device, the working device 200 may be driven by the electricity taken from the battery 7 to the outside of the vehicle body 2 through an electricity line, instead of being driven by the power taken from the external output shaft 8.

The vehicle body 2 is allowed to travel by driving the traveling device 3. As illustrated in FIG. 4, FIG. 5 and the like, the traveling device 3 includes a left traveling device 3L located leftward of the vehicle body 2, and a right traveling device 3R located rightward of the vehicle body 2. The vehicle body 2 is between the left traveling device 3L and the right traveling device 3R. As illustrated in FIG. 2, the left traveling device 3L includes a left front wheel 3LF and a left rear wheel 3LB. As illustrated in FIG. 3, the right traveling device 3R includes a right front wheel 3RF and a right rear wheel 3RB.

Hereinafter, for the purpose of illustration, the left front wheel 3LF, the right front wheel 3RF, the left rear wheel 3LB, and the right rear wheel 3RB may be collectively referred to as the "wheels 30". Also, the left front wheel 3LF and the right front wheel 3RF may be collectively referred to as the "front wheels 30F", and the left rear wheel 3LB and the right rear wheel 3RB may be collectively referred to as the "rear wheels 30B".

The wheels 30 (left front wheel 3LF, right front wheel 3RF, left rear wheel 3LB, and right rear wheel 3RB) are located at opposite sides of the vehicle body 2. The left front wheel 3LF and the left rear wheel 3LB are located leftward of the vehicle body 2. The right front wheel 3RF and the right rear wheel 3RB are located rightward of the vehicle body 2. In the working vehicle 1 in the present embodiment, the size (the diameter and width) of the rear wheels (the left rear wheel 3LB and the right rear wheel 3RB) is larger than the size (diameter and width) of the front wheels (the left front wheel 3LF and the right front wheel 3RF). However, the size of the front wheels (the left front wheel 3LF and the right front wheel 3RF) may be the same as the size of the rear wheels (the left rear wheel 3LB and the right rear wheel 3RB), or the size of the front wheels may be larger than the size of the rear wheels.

In the present embodiment, the traveling device 3 is a wheel traveling device in which the front wheels (the left front wheel 3LF and the right front wheel 3RF) and the rear wheels (the left rear wheel 3LB and the right rear wheel 3RB) are all tires. However, the traveling device 3 may be a crawler traveling device in which the left traveling device 3L and the right traveling device 3R are crawlers, or the traveling device 3 may be a traveling device in which one of the front wheels and the rear wheels are wheels, and the other are crawlers.

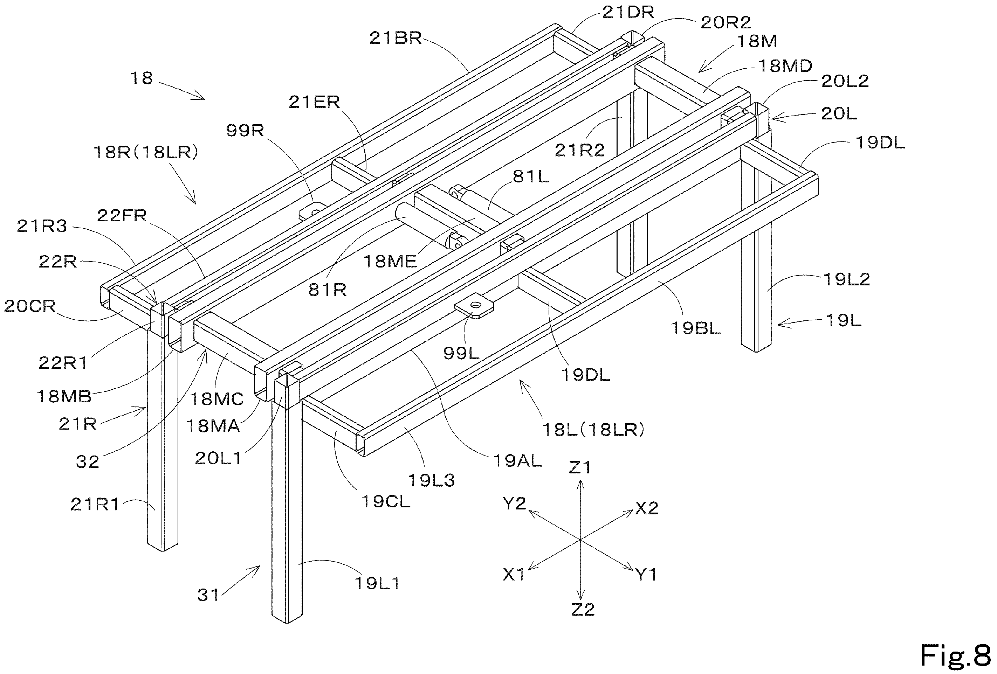

As illustrated in FIG. 1 to FIG. 3, the working vehicle 1 includes a fender 55L to cover upper and forward areas of the left rear wheel 3LB, and a fender 55R to cover upper and forward areas of the right rear wheel 3LR. The fender 55L is attached to a first connector 19L3 (see FIG. 8) of the later-described frame structure 18. The fender 55R is attached to a first connector 21R3 (see FIG. 8) of the later-described frame structure 18. Although not illustrated, the working vehicle 1 may include a fender to cover the front wheels (the left front wheel 3LF and the right front wheel 3RF).

As illustrated in FIG. 7, the working vehicle 1 includes a transmission 9. The transmission 9 can change the driving force of the traveling device 3 by changing speed stages. In addition, the transmission 9 can switch between forward drive and reverse drive of the traveling device 3. The transmission 9 may include a transmission clutch that can switch between a four-wheel drive state (4WD) and a two-wheel drive state (2WD), the four-wheel drive state allowing all four wheels (the left front wheel 3LF, the right front wheel 3RF, the left rear wheel 3LB, and the right rear wheel 3RB) to be driven, and the two-wheel drive state allowing only the rear wheels (the left rear wheel 3LB and the right rear wheel 3RB) or only the front wheels (the left front wheel 3LF and the right front wheel 3RF) to be driven.

As illustrated in FIG. 2, FIG. 3, FIG. 5, and FIG. 6, the working vehicle 1 includes a mount 10 to which the working device 200 to perform the above-mentioned work is attached. The working device 200 is detachably attached to the mount 10. The mount 10 is provided rearward of the vehicle body 2. FIG. 5 is a rear view of the mount 10.

The mount 10 includes a three-point linkage mechanism. Specifically, as illustrated in FIG. 5, the mount 10 includes a lift arm 10a, a lower link 10b, a top link 10c, a lift rod 10d, and a lift cylinder 10e. The front end of the lift arm 10a is supported on a rear upper portion of the vehicle body 2 swingably upward or downward. The lift arm 10a is swung (raised or lowered) by driving the lift cylinder 10e. The lift cylinder 10e includes a hydraulic cylinder. The lift cylinder 10e is connected to a hydraulic pump (not illustrated) via a control valve (not illustrated).

The hydraulic pump is driven by the working motor 6. The control valve is a solenoid valve such that opening and closing of a flow path is controlled by the controller 15. The lift cylinder 10e can be extended and retracted by the control valve controlling the flow of the hydraulic fluid discharged from the hydraulic pump.

The front end of the lower link 10b is supported on a lower rear portion of the vehicle body 2 swingably upward or downward. The front end of the top link 10c is supported on a rear portion of the vehicle body 2 swingably upward or downward, the rear portion being upward of the lower link 10b. The lift rod 10d connects the lift arm 10a and the lower link 10b. The working device 200 is connected to a rear portion of the lower link 10b and a rear portion of the top link 10c. When the lift cylinder 10e is driven (extended or retracted), the lift arm 10a is raised or lowered as well as the lower link 10b connected to the lift arm 10a through the lift rod 10d is raised or lowered. Thus, the working device 200 is swung (raised or lowered) upward or downward around a front portion of the lower link 10b, as a fulcrum.

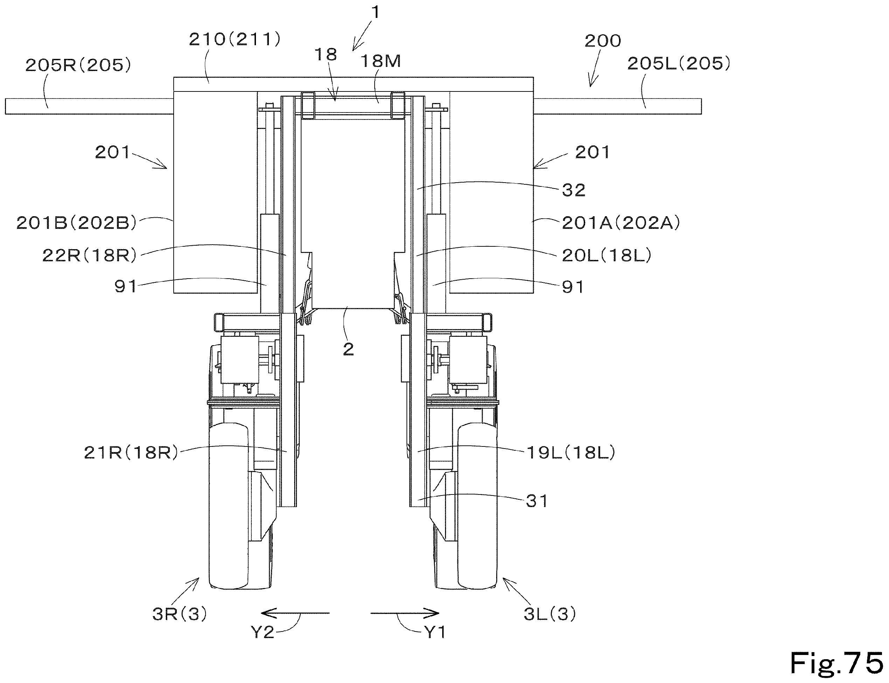

The working device 200 attached to the mount 10 is towed and moved by the working vehicle 1 with travel of the working vehicle 1. Note that instead of the working device 200, a carriage or the like that transports agricultural crops may be attached to the mount 10. The mount 10 may be provided at a portion other than a rear portion (for example, a front portion and a side portion) of the vehicle body 2. The working device 200 may be placed on an upper portion of the working vehicle 1, instead of being attached to the mount 10 (see FIG. 75). In this case, the working device 200 placed on the working vehicle 1 moves with travel of the working vehicle 1.

As illustrated in FIG. 7, the working vehicle 1 includes a positioning device 11. The positioning device 11 can detect the position (measured position information including the latitude and longitude) of the vehicle body 2 by a satellite positioning system (positioning satellites) such as D-GPS, GPS, GLONASS, Hokuto, Galileo, or Michibiki. Specifically, the positioning device 11 receives satellite signals (such as the positions of the positioning satellites, transmission time, and correction information) transmitted from the positioning satellites, and detects the position (for example, the latitude and longitude) of the vehicle body 2 based on the satellite signals.

The positioning device 11 includes a receiver 12, and an inertial measurement unit (IMU) 13. The receiver 12 is a device including an antenna and being configured to receive the satellite signals transmitted from the positioning satellites, and the device is attached to the vehicle body 2. The IMU 13 includes an acceleration sensor to detect an acceleration, and a gyroscope sensor to detect an angular velocity. The IMU 13 is attached to the vehicle body 2. The IMU 13 can detect the roll angle, pitch angle, yaw angle, and the like of the vehicle body 2. Note that the yaw angle may be detected by installing a plurality of positioning devices 11.

As illustrated in FIG. 7, the working vehicle 1 includes a communication device 14. The communication device 14 includes a communication circuit to perform communication through an in-vehicle network, and a wireless communication circuit to perform wireless communication. The wireless communication circuit can directly or indirectly communicate with an external equipment by Wireless Fidelity (Wi-Fi, registered trademark), Bluetooth Low Energy (BLE, registered trademark), Low Power, Wide Area (LPWA), Low-Power Wide-Area Network (LPWAN) and the like of IEEE802.11 series which is a communication standard. As another example, the communication device 14 may be provided with a communication circuit that can indirectly communicate with an external equipment by, e.g., a mobile phone communication network or a data communication network and the like. The external equipment is, e.g., a personal computer, a smartphone, a tablet computer, a PDA or a server and the like. The external equipment may include, e.g., the later-described manual operator 101.

As illustrated in FIG. 7, the working vehicle 1 includes the controller 15. The controller 15 performs various controls on the working vehicle 1. The controller 15 includes an arithmetic unit (such as a CPU) and a storage (such as a RAM or a ROM). The storage may include an external memory provided outside the controller 15. The controller 15 is connected to various devices and mechanisms illustrated in FIG. 7 through an in-vehicle network (in-vehicle LAN) such as a Controller Area Network (CAN), or a communication line.

The controller 15 controls the operation of various devices and mechanisms communicably connected to the controller 15, by the arithmetic unit executing various control programs stored in the storage. The function of the later-described control units (the automatic driving control unit 15A, distance changing control unit 15B, height changing control unit 15C, and position changing control unit 15D) of the controller 15 is implemented by the arithmetic unit executing a predetermined control program stored in the storage.

As illustrated in FIG. 7, the controller 15 includes the automatic driving control unit 15A. The automatic driving control unit 15A controls the automatic driving of the working vehicle 1. The automatic driving control unit 15A can perform line automatic driving control and autonomous driving control. In the line automatic driving control, the automatic driving control unit 15A controls the operation of the later-described steering mechanism 60, transmission 9, motor 5 and the like such that the working vehicle 1 (vehicle body 2) moves along a preset travel scheduled line.

In the autonomous driving control, the automatic driving control unit 15A sets the travel direction (steering direction) and the vehicle speed (speed) of the vehicle body 2 by the positioning device 11 and the like based on a result of sensing (detection of an object) the surroundings of the working vehicle 1 (vehicle body 2), and controls the operation of the steering mechanism 60, the transmission 9, the motor 5 and the like such that the set steering and vehicle speed are achieved. Note that the line automatic driving control and the autonomous driving control may be switched by a switch or the like. Alternatively, the automatic driving control unit 15A may be configured to perform either the line automatic driving control or the autonomous driving control. Note that the configuration of the automatic driving control unit 15A is not limited to the one described above.

The controller 15 includes the automatic driving control unit 15A, and thus the working vehicle 1 can perform automatic driving (unmanned driving) without an operator on board. Thus, the working vehicle 1 in the illustrated embodiment includes no operator's seat where an operator is seated. However, the working vehicle 1 may perform automatic driving with an operator on board. Alternatively, the working vehicle 1 may be driven to travel with an operator on board. When the working vehicle 1 is driven by an operator on board, the vehicle body 2 is provided with an operator's seat.

As illustrated in FIG. 7, the working vehicle 1 includes an illumination device 16. The illumination device 16 is provided in the vehicle body 2. The illumination device 16 includes a headlight that illuminates at least the area ahead of the vehicle body 2. In addition to the headlight, the illumination device 16 may include a plurality of work lights that illuminate the periphery of the vehicle body 2. The work lights can illuminate, for example, the side areas (leftward area and rightward area) of the vehicle body 2 and the rearward area of the vehicle body 2. In addition, the illumination device 16 may include a status indicator light, left and right lights, a brake light and the like.

As illustrated in FIG. 7, the working vehicle 1 includes a notification device 17. The notification device 17 notifies people in the periphery of the vehicle body 2 of danger (such as approach of the vehicle body 2) by sound and light or the like. The notification device 17 is a speaker or a warning light.

As illustrated in FIG. 1 and the like, the working vehicle 1 includes a frame structure 18 that is located in the periphery of the vehicle body 2 and attached to the vehicle body 2. As illustrated in FIG. 8 and the like, the frame structure 18 includes a left frame 18L, a right frame 18R and a lateral frame 18M. As illustrated in FIG. 1, FIG. 4 and the like, the left frame 18L is located leftward of the vehicle body 2. The left frame 18L extends in the up-down direction along the vehicle body 2. The left frame 18L also extends in the front-rear direction along the vehicle body 2. The right frame 18R is located rightward of the vehicle body 2. The right frame 18R extends in the up-down direction along the vehicle body 2. The right frame 18R also extends in the front-rear direction along the vehicle body 2.

The left frame 18L connects the left front wheel 3LF and the left rear wheel 3LB. The right frame 18R connects the right front wheel 3RF and the right rear wheel 3RB. The left frame 18L and the right frame 18R are located on both sides of the vehicle body 2. Thus, the left frame 18L and the right frame 18R may be collectively referred to as the "side frames 18LR".

The lateral frame 18M connects the left frame 18L and the right frame 18R. Specifically, the lateral frame 18M connects an upper portion of the left frame 18L and an upper portion of the right frame 18R. The lateral frame 18M is located above the vehicle body. Thus, the lateral frame 18M may be referred to as the "upper frame 18M".

As illustrated in FIG. 4, the vehicle body 2 is provided between the left frame 18L and the right frame 18R in a front view. In other words, the vehicle body 2 is located in an area between the left frame 18L and the right frame 18R. The vehicle body 2 is located below the lateral frame 18M. Thus, the vehicle body 2 is located in the area surrounded by the left frame 18L, the right frame 18R and the lateral frame 18M in a front view.

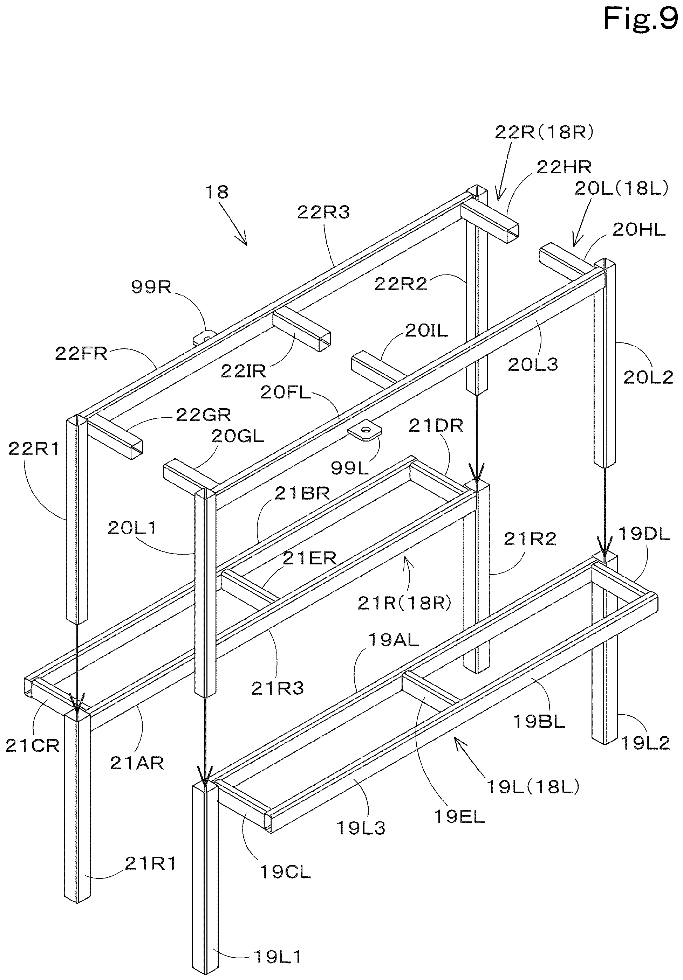

As illustrated in FIG. 9 and the like, the left frame 18L includes a first left frame 19L and a second left frame 20L. The first left frame 19L includes a first front pillar 19L1, a first rear pillar 19L2, and a first connector 19L3. The first front pillar 19L1 and the first rear pillar 19L2 are spaced apart in the front-rear direction, and extend in parallel to each other in the up-down direction. As illustrated in FIG. 1 and FIG. 4, the first front pillar 19L1 is located leftward of the front of the vehicle body 2. As illustrated in FIG. 5, the first rear pillar 19L2 is located leftward of the rear of the vehicle body 2. The first front pillar 19L1 and the first rear pillar 19L2 are in a tubular (square tubular) shape.

As illustrated in FIG. 9, the first connector 19L3 connects the first front pillar 19L1 and the first rear pillar 19L2. The first connector 19L3 includes a frame member 19AL, a frame member 19BL, a frame member 19CL, a frame member 19DL, and a frame member 19EL. The frame member 19AL extends in the front-rear direction, and connects an upper portion of the first front pillar 19L1 and an upper portion of the first rear pillar 19L2. The frame member 19BL is leftward of the frame member 19AL, and extends in the front-rear direction. The frame member 19CL connects a front portion of the frame member 19AL and a front portion of the frame member 19BL. The frame member 19DL connects a rear portion of the frame member 19AL and a rear portion of the frame member 19BL. The frame member 19EL connects an intermediate portion of the frame member 19AL in the front-rear direction and an intermediate portion of the frame member 19BL in the front-rear direction.

As illustrated in FIG. 9, the second left frame 20L includes a second front pillar 20L1, a second rear pillar 20L2, and a second connector 20L3. The second front pillar 20L1 and the second rear pillar 20L2 are spaced apart in the front-rear direction, and extend in parallel to each other in the up-down direction. The second connector 20L3 connects the second front pillar 20L1 and the second rear pillar 20L2. The second connector 20L3 includes a frame member 20FL, a frame member 20GL, a frame member 20HL, and a frame member 20IL. The frame member 20FL extends in the front-rear direction, and connects an upper portion of the second front pillar 20L1 and an upper portion of the second rear pillar 20L2. The frame member 20GL extends rightward from a front portion of the right surface of the frame member 20FL. The frame member 20HL extends rightward from a rear portion of the right surface of the frame member 20FL. The frame member 20IL extends rightward from an intermediate portion of the right surface of the frame member 20FL in the front-rear direction.

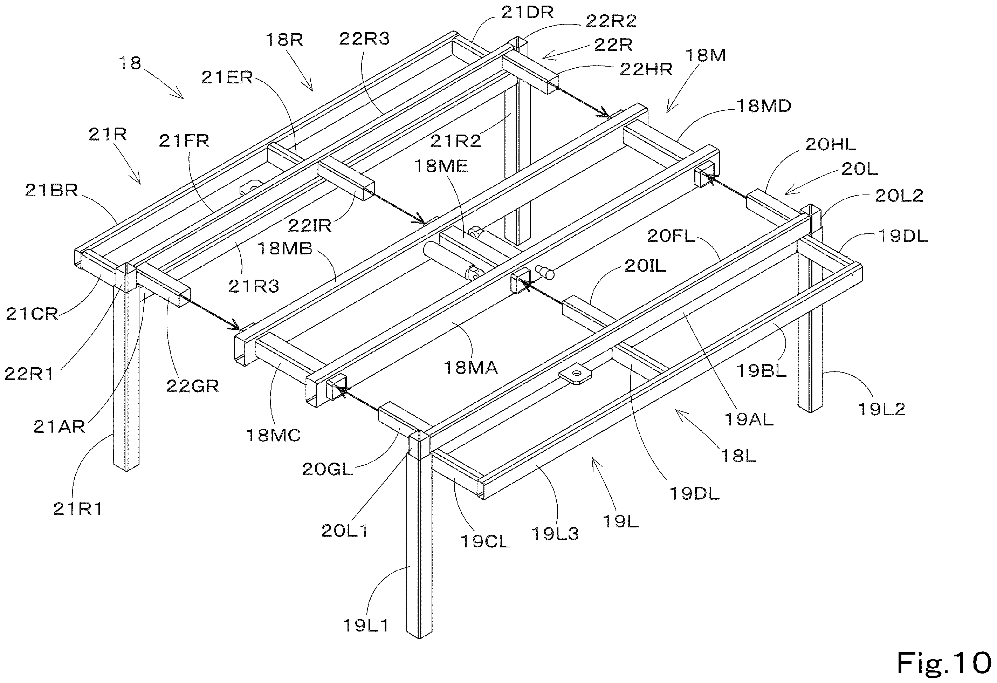

As indicated by a downward arrow in FIG. 9, the second front pillar 20L1 is inserted into the inside of the tubular first front pillar 19L1 from above. The second rear pillar 20L2 is inserted into the inside of the tubular first rear pillar 19L2 from above. Thus, the first left frame 19L and the second left frame 20L are combined (see FIG. 10). The second front pillar 20L1 can be moved in the up-down direction along the first front pillar 19L1. The second rear pillar 20L2 can be moved in the up-down direction along the first rear pillar 19L2. Thus, the second left frame 20L can be moved in the up-down direction with respect to the first left frame 19L.

As illustrated in FIG. 9, the right frame 18R includes a first right frame 21R and a second right frame 22R. The first right frame 21R includes a first front pillar 21R1, a first rear pillar 21R2, and a first connector 21R3. The first front pillar 21R1 and the first rear pillar 21R2 are spaced apart in the front-rear direction, and extend in parallel to each other in the up-down direction. As illustrated in FIG. 1 and FIG. 4, the first front pillar 21R1 is located rightward of the front of the vehicle body 2. As illustrated in FIG. 5, the first rear pillar 21R2 is located rightward of the rear of the vehicle body 2. The first front pillar 21R1 and the first rear pillar 21R2 are in a tubular (square tubular) shape.

The first connector 21R3 connects the first front pillar 21R1 and the first rear pillar 21R2. The first connector 21R3 includes a frame member 21AR, a frame member 21BR, a frame member 21CR, a frame member 21DR, and a frame member 21ER. The frame member 21AR extends in the front-rear direction, and connects an upper portion of the first front pillar 21R1 and an upper portion of the first rear pillar 21R2. The frame member 21BR is rightward of the frame member 21AR, and extends in the front-rear direction. The frame member 21CR connects a front portion of the frame member 21AR and a front portion of the frame member 21BR. The frame member 21DR connects a rear portion of the frame member 21AR and a rear portion of the frame member 21BR. The frame member 21ER connects an intermediate portion of the frame member 21AR in the front-rear direction and an intermediate portion of the frame member 21BR in the front-rear direction.

The second right frame 22R includes a second front pillar 22R1, a second rear pillar 22R2, and a second connector 22R3. The second front pillar 22R1 and the second rear pillar 22R2 are spaced apart in the front-rear direction, and extend in parallel to each other in the up-down direction. The second connector 22R3 connects the second front pillar 22R1 and the second rear pillar 22R2. The second connector 22R3 includes a frame member 22FR, a frame member 22GR, a frame member 22HR, and a frame member 22IR. The frame member 22FR extends in the front-rear direction, and connects an upper portion of the second front pillar 22R1 and an upper portion of the second rear pillar 22R2. The frame member 22GR extends leftward from a front portion of the left surface of the frame member 22FR. The frame member 22HR extends leftward from a rear portion of the left surface of the frame member 22FR. The frame member 22IR extends leftward from an intermediate portion of the left surface of the frame member 22FR in the front-rear direction.

As indicated by a downward arrow in FIG. 9, the second front pillar 22R1 is inserted into the inside of the tubular first front pillar 21R1 from above. The second rear pillar 22R2 is inserted into the inside of the tubular first rear pillar 21R2 from above. Thus, the first right frame 21R and the second right frame 22R are combined (see FIG. 10). The second front pillar 22R1 can be moved in the up-down direction along the first front pillar 21R1. The second rear pillar 22R2 can be moved in the up-down direction along the first rear pillar 21R2. Thus, the second right frame 22R can be moved in the up-down direction with respect to the first right frame 21R.

As illustrated in FIG. 10, the lateral frame 18M includes a frame member 18MA, a frame member 18MB, a frame member 18MC, a frame member 18MD, and a frame member 18ME. The frame member 18MA is located at a left portion of the lateral frame 18M, and extends in the front-rear direction. The frame member 18MB is located at a right portion of the lateral frame 18M, and extends in the front-rear direction. The frame member 18MA and the frame member 18MB are spaced apart in the lateral direction, and located in parallel to each other.

The frame member 18MC, the frame member 18MD and the frame member 18ME are in parallel to each other, and extend in the lateral direction. The frame member 18MC connects a front portion of the frame member 18MA and a front portion of the frame member 18MB. The frame member 18MD connects a rear portion of the frame member 18MA and a rear portion of the frame member 18MB. The frame member 18ME connects an intermediate portion of the frame member 18MA in the front-rear direction and an intermediate portion of the frame member 18MB in the front-rear direction.

The frame member 18MC, the frame member 18MD and the frame member 18ME are in a tubular (square tubular) shape. As indicated by an arrow in FIG. 10, to the frame member 18MC, the frame member 20GL is inserted from the left, and the frame member 22GR is inserted from the right. Into the frame member 18MD, the frame member 20HL is inserted from the left, and the frame member 22HR is inserted from the right. Into the frame member 18ME, the frame member 20IL is inserted from the left, and the frame member 22IR is inserted from the right. Thus, the lateral frame 18M, the second left frame 20L and the second right frame 22R are combined (see FIG. 10).

The frame member 20GL inserted into the frame member 18MC from the left can be moved in the lateral direction along the frame member 18MC. The frame member 20HL inserted into the frame member 18MD from the left can be moved in the lateral direction along the frame member 18MD. The frame member 20IL inserted into the frame member 18ME from the left can be moved in the lateral direction along the frame member 18ME. Thus, the left frame 18L can be moved on the left side of the lateral frame 18M in the lateral direction with respect to the lateral frame 18M.

The frame member 22GR inserted into the frame member 18MC from the right can be moved in the lateral direction along the frame member 18MC. The frame member 22HR inserted into the frame member 18MD from the right can be moved in the lateral direction along the frame member 18MD. The frame member 22IR inserted into the frame member 18ME from the right can be moved in the lateral direction along the frame member 18ME. Thus, the right frame 18R can be moved on the right side of the lateral frame 18M in the lateral direction with respect to the lateral frame 18M.

As described above, the second left frame 20L can be moved in the up-down direction with respect to the first left frame 19L. Also, the second right frame 22R can be moved in the up-down direction with respect to the first right frame 21R. Thus, the lateral frame 18M (the later-described movable frame 32) combined with the second left frame 20L and the second right frame 22R can be moved in the up-down direction with respect to the first left frame 19L and the first right frame 21R (later-described fixed frame 31).

As illustrated in FIG. 1, FIG. 4, and FIG. 5, the vehicle body 2 is fixed to a portion below the lateral frame 18M. Specifically, the vehicle body 2 is fixed to the bottom of the frame member 18MA and the frame member 18MB. Thus, the vehicle body 2 can be moved integrally with the lateral frame 18M. Thus, when the lateral frame 18M is moved in the up-down direction with respect to the first left frame 19L and the first right frame 21R, the vehicle body 2 is moved in the up-down direction with the lateral frame 18M.

The frame structure 18 includes a fixed frame 31 to which the traveling device 3 is attached, and a movable frame 32 attached to the vehicle body 2. In the frame structure 18, the second left frame 20L, the second right frame 22R and the lateral frame 18M are the movable frame 32 which is movable in the up-down direction. The first left frame 19L and the first right frame 21R are the fixed frame 31 which is not moved in the up-down direction. The vehicle body 2 is moved, i.e., raised or lowered in the up-down direction with the movable frame 32 with respect to the fixed frame 31.

The later-described height changing mechanism 90 changes the height of the vehicle body 2 that is the distance of the vehicle body 2 from the ground surface by raising or lowering the movable frame 32 with respect to the fixed frame 31. The traveling device 3 is attached to the fixed frame. Specifically, the left traveling device 3L is attached to the first left frame 19L. The right traveling device 3R is attached to the first right frame 21R. When the movable frame 32 is raised or lowered with respect to the fixed frame 31, the vehicle body 2 is raised or lowered with respect to the traveling device 3.

As described above, the left frame 18L and the right frame 18R can be moved in the lateral direction with respect to the lateral frame 18M. Since the vehicle body 2 is fixed to the lateral frame 18M, the left frame 18L and the right frame 18R can be moved in the lateral direction with respect to the vehicle body 2. Specifically, the left frame 18L can be moved in a direction (leftward) away from the vehicle body 2 and a direction (rightward) closer to the vehicle body 2. The right frame 18R can be moved in a direction (rightward) away from the vehicle body 2 and a direction (leftward) closer to the vehicle body 2.

Since the left traveling device 3L is attached to the left frame 18L (the first left frame 19L), the left traveling device 3L can also be moved in the lateral direction with the movement of the left frame 18L in the lateral direction. Since the right traveling device 3R is attached to the right frame 18R (the first right frame 21R), the right traveling device 3R can also be moved in the lateral direction with the movement of the right frame 18R in the lateral direction.

As illustrated in FIG. 7, the working vehicle 1 includes a drive assembly 40 to drive the wheels (the left front wheel 3LF, the right front wheel 3RF, the left rear wheel 3LB, and the right rear wheel 3RB). The drive assembly 40 includes: a drive device 45 to generate power; a transmission mechanism 50 to transmit the power generated by the drive device 45 to the wheels 30; and a steering mechanism 60 to change the direction of the wheels (the left front wheel 3LF and the right front wheel 3RF).

As illustrated in FIG. 2 and FIG. 3, the drive assembly 40 includes a first drive assembly 41 to drive the left front wheel 3LF, a second drive assembly 42 to drive the right front wheel 3RF, a third drive assembly 43 to drive the left rear wheel 3LB, and a fourth drive assembly 44 to drive the right rear wheel 3RB. The first drive assembly 41, the second drive assembly 42, the third drive assembly 43 and the fourth drive assembly 44 each include the later-described drive device 45 and transmission mechanism 50. The first drive assembly 41 and the second drive assembly 42 each include the later-described steering mechanism 60. The drive assemblies are attached to the frame structure 18.

As illustrated in FIG. 2 and FIG. 3, the first drive assembly 41 includes a portion located at the periphery of the left front wheel 3LF. The second drive assembly 42 includes a portion located at the periphery of the right front wheel 3RF. The third drive assembly 43 includes a portion located at the periphery of the left rear wheel 3LB. The fourth drive assembly 44 includes a portion located at the periphery of the right rear wheel 3RB.

Specifically, the first drive assembly 41 includes a portion which is leftward of the vehicle body 2 and located at the periphery of the left front wheel 3LF (see FIG. 2). The second drive assembly 42 includes a portion which is rightward of the vehicle body 2 and located at the periphery of the right front wheel 3RF (see FIG. 3). The third drive assembly 43 includes a portion which is leftward of the vehicle body 2 and located at the periphery of the left rear wheel 3LB (see FIG. 2). The fourth drive assembly 44 includes a portion which is rightward of the vehicle body 2 and located at the periphery of the right rear wheel 3RB (see FIG. 3).

In the present embodiment, the drive device 45 is a motor. Specifically, the drive device 45 is the above-described traveling motor 5. In other words, the motor included in the drive device 45 is the same as the motor included in the above-described power supply apparatus 4. As described below, the motors 5 included in the drive device 45 of the drive assembly 40 include a motor 5LF, a motor 5RF, a motor 5LB and a motor 5RB.

First, the configuration of the first drive assembly 41 will be described. As illustrated in FIG. 2, FIG. 11, and FIG. 12, the first drive assembly 41 includes the motor 5LF, and a transmission mechanism 50LF to transmit the power of the motor 5LF to the left front wheel 3LF. When the first drive assembly 41 drives the motor 5LF, the power of the motor 5LF is transmitted to the left front wheel 3LF through the transmission mechanism 50LF.

As illustrated in FIG. 2, the motor 5LF is located above the left front wheel 3LF. The motor 5LF is located forward of the central shaft (rotational shaft) of the left front wheel 3LF. The motor 5LF is attached to the side frames 18LR (see FIG. 8) of the frame structure 18. Specifically, the motor 5LF is attached, via a motor bracket (not illustrated), to the first left frame 19L which is the left one of the side frames 18LR. The output shaft of the motor 5LF extends in the lateral direction.

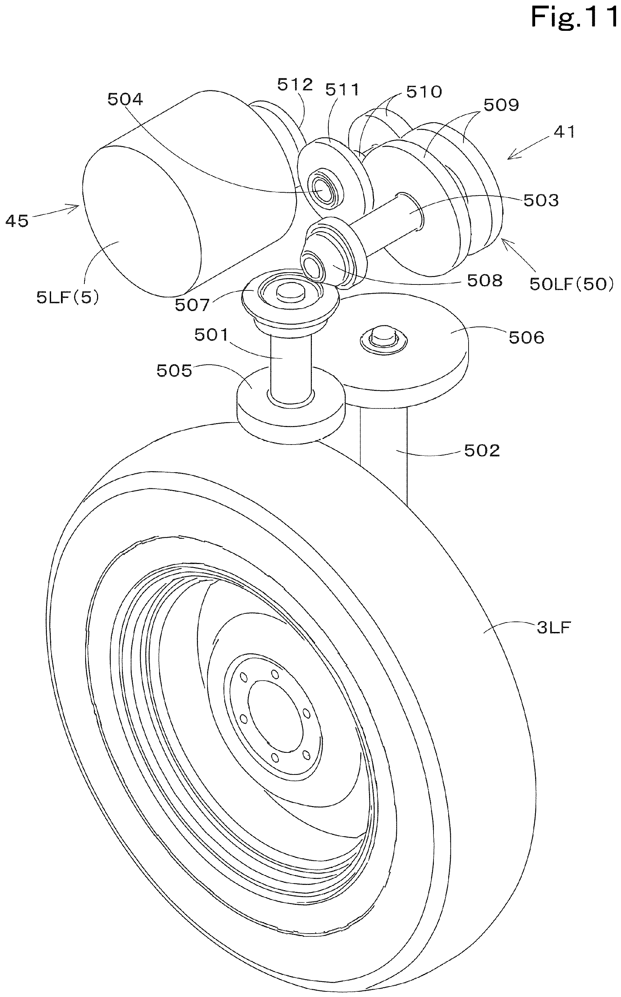

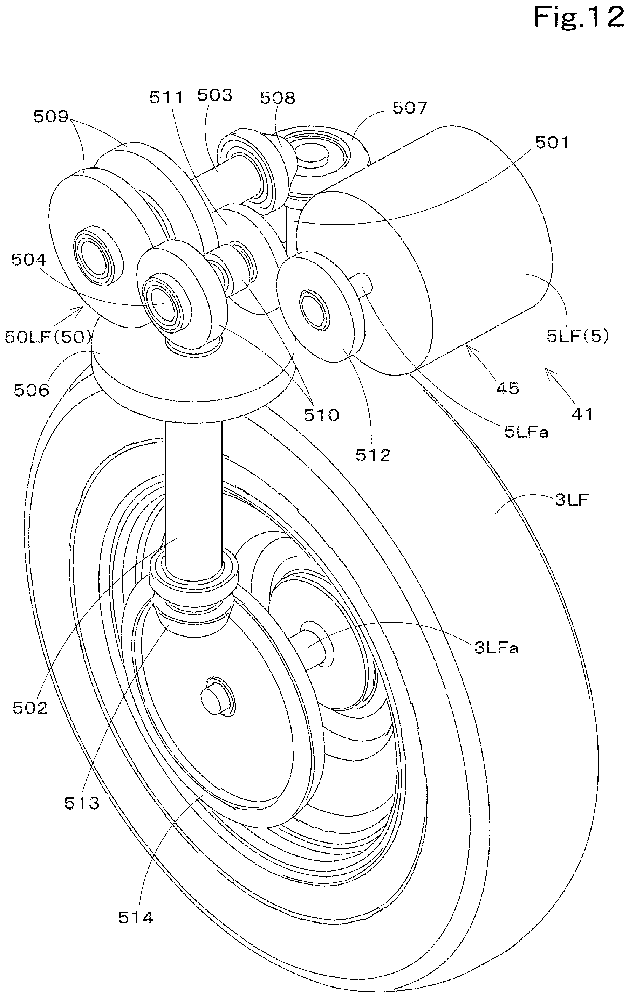

As illustrated in FIG. 11 and FIG. 12, the transmission mechanism 50LF includes a plurality of transmission shafts and a plurality of gears. The plurality of transmission shafts include a first transmission shaft 501, a second transmission shaft 502, a third transmission shaft 503, and a fourth transmission shaft 504. The plurality of gears include a first gear 505, a second gear 506, a third gear 507, a fourth gear 508, a fifth gear 509, a sixth gear 510, a seventh gear 511, an eighth gear 512, a ninth gear 513, and a 10th gear 514.

As mentioned above, the transmission mechanism 50LF includes the first transmission shaft 501 and the second transmission shaft 502. The first transmission shaft 501 is located above the left front wheel 3LF, and extends in the up-down direction. The second transmission shaft 502 receives the power transmitted from the first transmission shaft 501 and rotates. The second transmission shaft 502 is located inward (rightward) of the left front wheel 3LF, and extends in the up-down direction. The first gear 505 is attached to a lower portion of the first transmission shaft 501. The second gear 506 is attached to an upper portion of the second transmission shaft 502. The first gear 505 and the second transmission shaft 502 are engaged with each other. The third gear 507 is attached to an upper portion of the first transmission shaft 501. The third gear 507 is a bevel gear, and engaged with the fourth gear 508 which is also a bevel gear.

The fourth gear 508 is attached to a left portion of the third transmission shaft 503 extending in the lateral direction. The fifth gear 509 is attached to a right portion of the third transmission shaft 503. The fifth gear 509 is engaged with the sixth gear 510. The fifth gear 509 and the sixth gear 510 each include a pair of gears located in parallel to each other. The sixth gear 510 is attached to the fourth transmission shaft 504 extending in the lateral direction. The seventh gear 511 is attached to a left portion of the fourth transmission shaft 504. The seventh gear 511 is engaged with the eighth gear 512. The eighth gear 512 is attached to an output shaft 5LFa of the motor 5LF.

The ninth gear 513 is attached to a lower portion of the second transmission shaft 502. The ninth gear 513 is a bevel gear, and engaged with the 10th gear 514 which is also a bevel gear. The 10th gear 514 is attached to a rotational shaft 3LFa (central shaft of the left front wheel 3LF) extending inward (rightward) from the center of the left front wheel 3LF.

When the output shaft 5LFa of the motor 5LF rotates, the eighth gear 512 rotates, and the seventh gear 511 engaged with the eighth gear 512 rotates. When the seventh gear 511 rotates, the sixth gear 510 rotates with the fourth transmission shaft 504. When the sixth gear 510 rotates, the fifth gear 509 engaged with the sixth gear 510 rotates. When the fifth gear 509 rotates, the fourth gear 508 rotates with the third transmission shaft 503. When the fourth gear 508 rotates, the third gear 507 engaged with the fourth gear 508 rotates. When the third gear 507 rotates, the first gear 505 rotates with the first transmission shaft 501.

When the first gear 505 rotates, the second gear 506 engaged with the first gear 505 rotates. When the second gear 506 rotates, the ninth gear 513 rotates with the second transmission shaft 502. When the ninth gear 513 rotates, the 10th gear 514 engaged with the ninth gear 513 rotates. When the 10th gear 514 rotates, the left front wheel 3LF rotates with the rotational shaft 3LFa. In this manner, the left front wheel 3LF can be rotated by the driving the motor 5LF.

Next, the configuration of the second drive assembly 42 that rotates the right front wheel 3RF will be described. As illustrated in FIG. 3, the second drive assembly 42 includes the motor 5RF, and a transmission mechanism 50RF to transmit the power of the motor 5RF to the right front wheel 3RF. When the second drive assembly 42 drives the motor 5RF, the power of the motor 5RF is transmitted to the right front wheel 3RF through the transmission mechanism 50RF.

The motor 5RF is located above the right front wheel 3RF. The motor 5RF is located forward of the central shaft (rotational shaft) of the right front wheel 3RF. The motor 5RF is attached to the side frames 18LR (see FIG. 8) of the frame structure 18. Specifically, the motor 5RF is attached, via a motor bracket (not illustrated), to the first right frame 21R which is the right one of the side frames 18LR. The right front wheel 3RF can be rotated by driving the motor 5RF.

The configuration of the transmission mechanism 50RF is the same as the configuration of the transmission mechanism 50LF except that both transmission mechanisms are located symmetrically with respect to the center of the vehicle body 2 in the width direction (lateral direction), and thus a description will be omitted.

Next, the configuration of the third drive assembly 43 that rotates the left rear wheel 3LB will be described. As illustrated in FIG. 2, FIG. 13, and FIG. 14, the third drive assembly 43 includes the motor 5LB, and a transmission mechanism 50LB to transmit the power of the motor 5LB to the left rear wheel 3LB. When the third drive assembly 43 drives the motor 5LB, the power of the motor 5LB is transmitted to the left rear wheel 3LB through the transmission mechanism 50LB.

As illustrated in FIG. 2, the motor 5LB is located forward above the left rear wheel 3LB. The motor 5LB is attached to the side frames 18LR (see FIG. 8) of the frame structure 18. Specifically, the motor 5LB is attached, via a motor bracket (not illustrated), to the first left frame 19L which is the left one of the side frames 18LR.

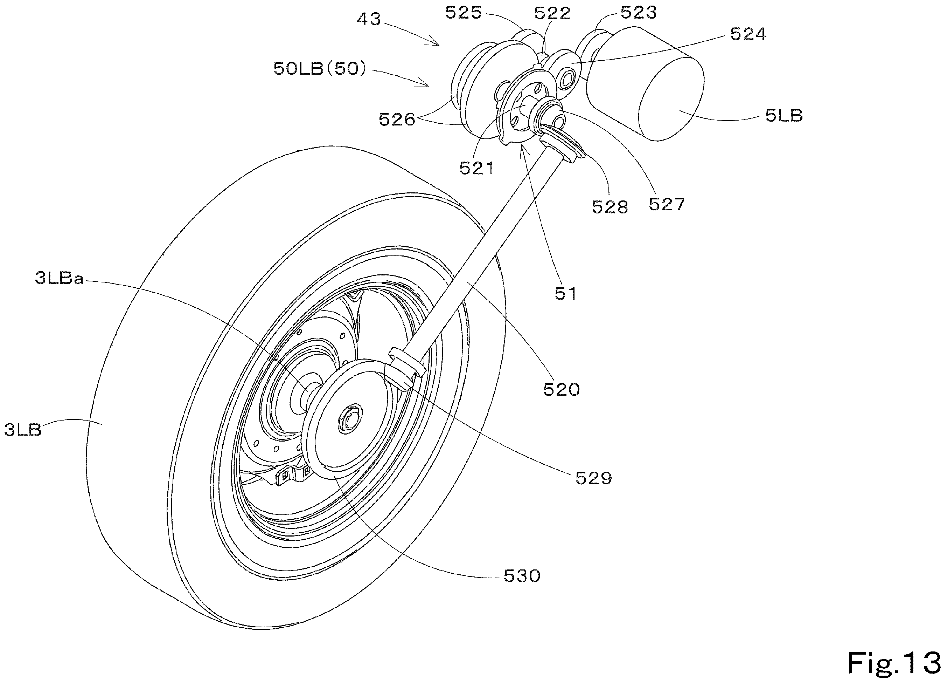

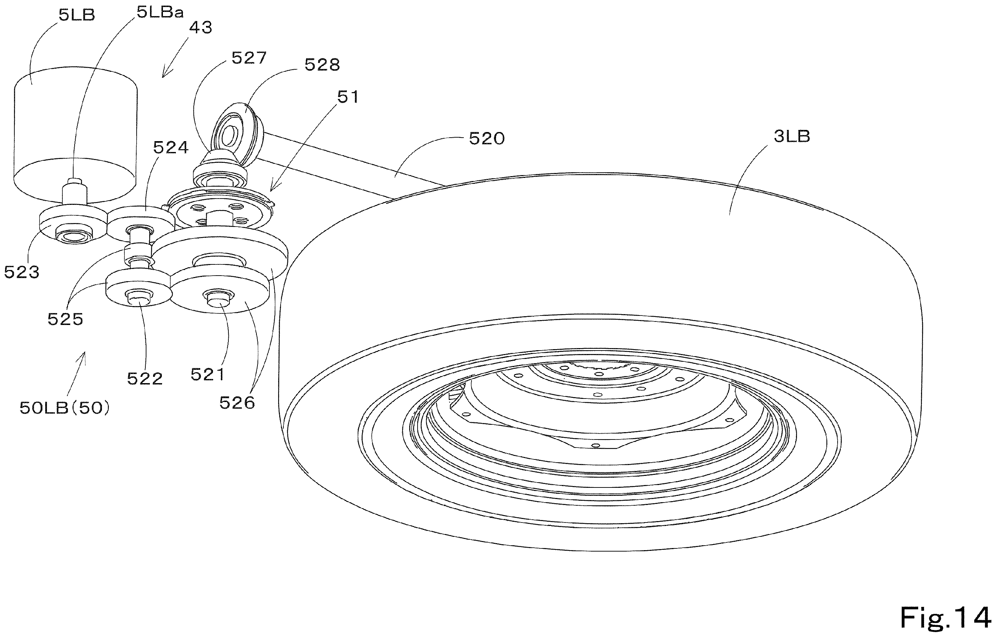

As illustrated in FIG. 13 and FIG. 14, the transmission mechanism 50LB includes a plurality of transmission shafts and a plurality of gears. The plurality of transmission shafts include a lower transmission shaft 520, an intermediate transmission shaft 521, and an upper transmission shaft 522. The plurality of gears include an 11th gear 523, a 12th gear 524, a 13th gear 525, a 14th gear 526, a 15th gear 527, a 16th gear 528, a 17th gear 529, and an 18th gear 530.

As mentioned above, the transmission mechanism 50LB includes the lower transmission shaft 520, the intermediate transmission shaft 521, and the upper transmission shaft 522. The upper transmission shaft 522 is located rearward of an output shaft 5LBa of the motor 5LB, and extends in parallel with the output shaft 5LBa in the lateral direction. The upper transmission shaft 522 transmits the power from the output shaft 5LBa of the motor 5LB to the intermediate transmission shaft 521. The intermediate transmission shaft 521 is located rearward of the upper transmission shaft 522, and extends in parallel with the upper transmission shaft 522 in the lateral direction. The intermediate transmission shaft 521 transmits the power transmitted from the upper transmission shaft 522 to the lower transmission shaft 520. The lower transmission shaft 520 is located inward (rightward) of the left rear wheel 3LB, and extends forward upward.

The output shaft 5LBa of the motor 5LB extends in the lateral direction. The 11th gear 523 is attached to the output shaft 5LBa of the motor 5LB. The 12th gear 524 is attached to a right portion of the upper transmission shaft 522. The 11th gear 523 and the 12th gear 524 are engaged with each other. The 13th gear 525 is attached to a left portion of the upper transmission shaft 522. The 14th gear 526 is attached to a left portion of the intermediate transmission shaft 521. The 13th gear 525 and the 14th gear 526 each include a pair of gears located in parallel to each other. The 13th gear 525 and the 14th gear 526 are engaged with each other.

The 15th gear 527 is attached to a right portion of the intermediate transmission shaft 521. The 15th gear 527 is a bevel gear, and engaged with the 16th gear 528 which is also a bevel gear. The 16th gear 528 is attached to an upper portion of the lower transmission shaft 520. The 17th gear 529 is attached to a lower portion of the lower transmission shaft 520. The 17th gear 529 is a bevel gear, and engaged with the 18th gear 530 which is also a bevel gear. The 18th gear 530 is attached to a rotational shaft 3LBa extending inward (rightward) from the center of the left rear wheel 3LB.

When the output shaft 5LBa of the motor 5LB rotates, the 11th gear 523 rotates, and the 12th gear 524 engaged with the 11th gear 523 rotates. When the 12th gear 524 rotates, the 13th gear 525 rotates with the upper transmission shaft 522. When the 13th gear 525 rotates, the 14th gear 526 engaged with the 13th gear 525 rotates. When the 14th gear 526 rotates, the 15th gear 527 rotates with the intermediate transmission shaft 521. When the 15th gear 527 rotates, the 16th gear 528 engaged with the 15th gear 527 rotates. When the 16th gear 528 rotates, the 17th gear 529 rotates with the lower transmission shaft 520. When the 17th gear 529 rotates, the 18th gear 530 engaged with the 17th gear 529 rotates. When the 18th gear 530 rotates, the left rear wheel 3LB rotates with the rotational shaft 3LBa. In this manner, the left rear wheel 3LB can be rotated by driving the motor 5LB.

Next, the configuration of the fourth drive assembly 44 that rotates the right rear wheel 3RB will be described. As illustrated in FIG. 3, the fourth drive assembly 44 includes the motor 5RB, and a transmission mechanism 50RB to transmit the power of the motor 5RB to the right rear wheel 3RB. When the fourth drive assembly 44 drives the motor 5RB, the power of the motor 5RB is transmitted to the right rear wheel 3RB through the transmission mechanism 50RB.

The motor 5RB is located forward above the right rear wheel 3RB. The motor 5RB is attached to the side frames 18LR (see FIG. 8) of the frame structure 18. Specifically, the motor 5RB is attached, via a motor bracket (not illustrated), to the first right frame 21R which is the right one of the side frames 18LR.

The configuration of the transmission mechanism 50RB is the same as the configuration of the transmission mechanism 50LB except that both transmission mechanisms are located symmetrically with respect to the center of the vehicle body 2 in the width direction (lateral direction), and thus a description will be omitted.

The third drive assembly 43 and the fourth drive assembly 44 are provided with a brake system 51 (see FIG. 13 and FIG. 14). The brake system 51 is, e.g., a disc brake. Rotation of the left rear wheel 3LB can be stopped by actuating the brake system 51 of the third drive assembly 43. Rotation of the right rear wheel 3RB can be stopped by actuating the brake system 51 of the fourth drive assembly 44. The operation of the brake system 51 can be controlled by the controller 15.

As illustrated in FIG. 7, the drive assembly 40 includes the steering mechanism 60 to change the direction of the wheels 30. In the present embodiment, the steering mechanism 60 changes the direction of the front wheels (the left front wheel 3LF and the right front wheel 3RF) among the wheels 30. As illustrated in FIG. 2 and FIG. 3, the steering mechanism 60 includes a left steering mechanism 60L to change the direction of the left front wheel 3LF, and a right steering mechanism 60R to change the direction of the right front wheel 3RF.

As illustrated in FIG. 2, the first drive assembly 41 includes the left steering mechanism 60L. As illustrated in FIG. 3, the second drive assembly 42 includes the right steering mechanism 60R. The configuration of the left steering mechanism 60L is the same as the configuration of the right steering mechanism 60R except that both transmission mechanisms are symmetric with respect to the center of the vehicle body 2 in the width direction (lateral direction). Thus, the configuration of the left steering mechanism 60L will be described below as the configuration of the steering mechanism 60, and a description of the configuration of the right steering mechanism 60R will be omitted.

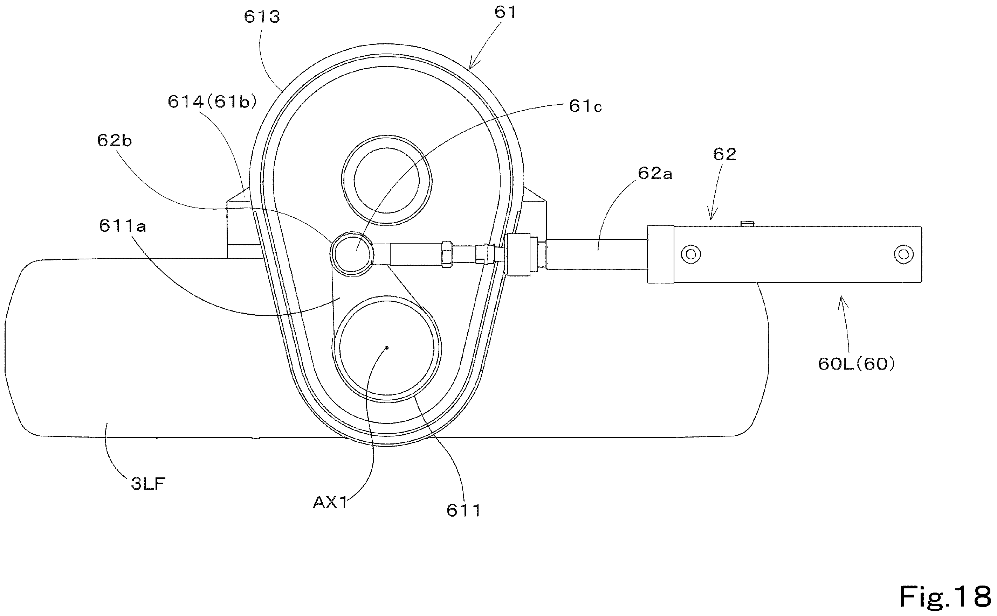

As illustrated in FIG. 2, FIG. 15, and FIG. 16, the steering mechanism 60 (the left steering mechanism 60L) includes a rotating body 61 that rotates about an axis AX1 in the up-down direction at the time of steering the wheel (the left front wheel 3LF). The axis AX1 of the rotating body 61 is located above the wheel (the left front wheel 3LF). The axis AX1 of the rotating body 61 is at a position overlapping the wheel (the left front wheel 3LF) in a plan view (see FIG. 18). The rotating body 61 includes a first section 611, a second section 612, a third section 613 and a fourth section 614. The first section 611, the second section 612, the third section 613 and the fourth section 614 are integrated to constitute one rotating body 61.

The first section 611 is in a tubular (cylindrical) shape with the central shaft in the up-down direction. The axis of the central shaft (cylindrical central shaft) of the first section 611 matches the above-mentioned axis AX1. Thus, the central shaft of the first section 611 is located above the left front wheel 3LF. At the time of steering the left front wheel 3LF, the rotating body 61 rotates about the axis (i.e., about the axis AX1) of the central shaft of the first section 611. The first transmission shaft 501 is inserted into the first section 611. The top of the first transmission shaft 501 projects upward from the first section 611. The outer peripheral surface of the first section 611 is provided with a projection 611a which projects in a radial direction (horizontal direction away from the central shaft of the first section 611) of the first section 611.

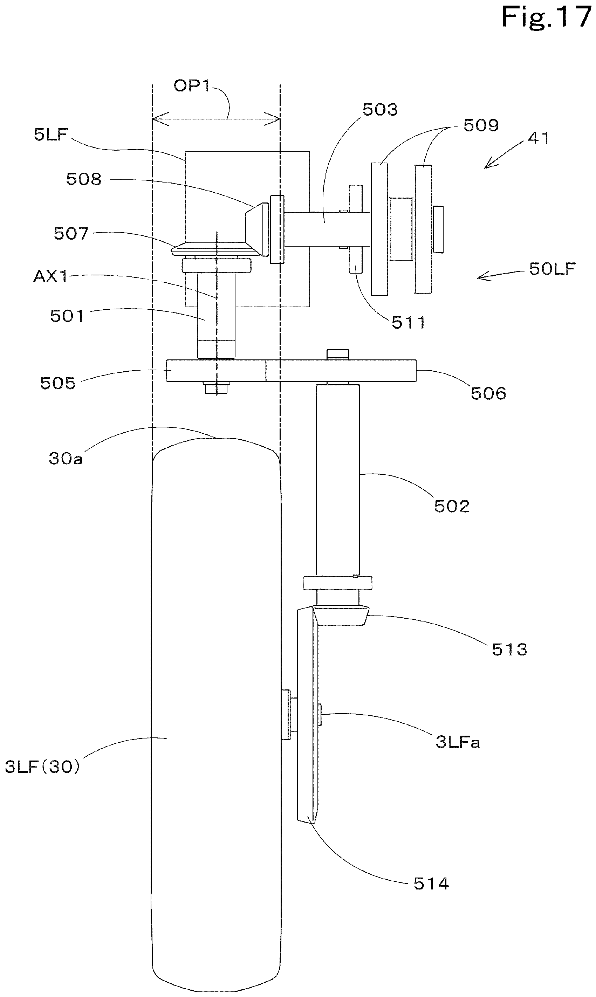

The second section 612 is in a tubular (cylindrical) shape with the central shaft in the up-down direction. The second section 612 is located inward (rightward) of the wheel (the left front wheel 3LF). The second transmission shaft 502 (see FIG. 11 and FIG. 17) is housed internally of the second section 612.

The third section 613 connects the lower end of the first section 611 and the upper end of the second section 612. The third section 613 is located above the left front wheel 3LF. The third section 613 is in a substantially elliptical shape in a plan view. The third section 613 serves as a gearbox that houses the first gear 505 and the second gear 506 (see FIG. 11 and FIG. 17).

The fourth section 614 is connected to the lower end of the second section 612. The fourth section 614 includes a tubular portion 614a connected to the lower end of the second section 612, and a conical portion 614b provided at the lower end of the tubular portion 614a. The fourth section 614 is located inward (rightward) of the left front wheel 3LF. The fourth section 614 serves as a gearbox that houses the ninth gear 513 and the 10th gear 514 (see FIG. 12 and FIG. 17).

The conical portion 614b of the fourth section 614 is connected to the left front wheel 3LF. Thus, when the fourth section 614 rotates about the axis AX1 due to rotation of the rotating body 61 about the axis AX1, the left front wheel 3LF also rotates about the axis AX1. That is, with the rotation of the rotating body 61 about the axis AX1, the left front wheel 3LF also rotates about the axis AX1. Note that the fourth section 614 does not rotate with the rotation (rotation about the rotational shaft 3LFa) of the left front wheel 3LF at the time of travel of the working vehicle 1.

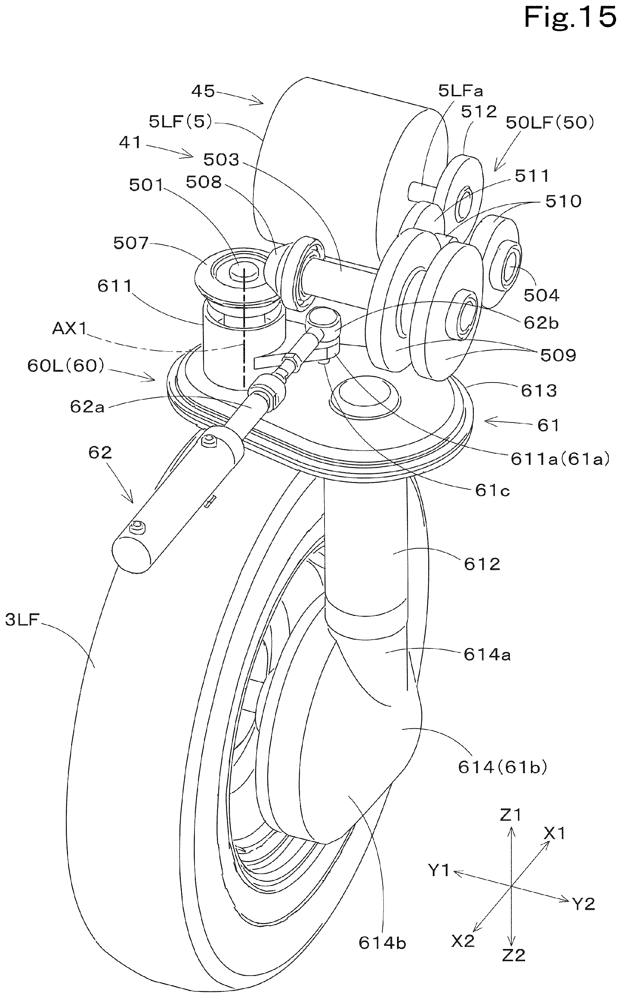

As illustrated in FIG. 15, FIG. 16, and FIG. 18, the steering mechanism 60 includes a cylinder 62 including a rod 62a which extends and retracts in a direction (front-rear direction) perpendicular to the axis AX1. The cylinder 62 includes a hydraulic cylinder. The rotating body 61 includes a first connection portion 61a to which the rod 62a is connected, and a second connection portion 61b connected to the wheel (the left front wheel 3LF).

The first connection portion 61a is defined by the above-mentioned projection 611a. A shaft body 61c penetrates, in up-down direction, the projection 611a defining the first connection portion 61a. A distal end member 62b attached to the distal end of the rod 62a is fitted in an upper portion of the shaft body 61c. The distal end member 62b can rotate about the central shaft of the shaft body 61c.

The second connection portion 61b is defined by the above-described fourth section 614. The second connection portion 61b is connected, below the rotating body 61, to an inward (rightward) portion of the wheel (the left front wheel 3LF). To prevent the second connection portion 61b from rotating with the rotation of the wheel (the left front wheel 3LF) at the time of travel, the second connection portion 61b is connected to the wheel, e.g., through a bearing or the like.

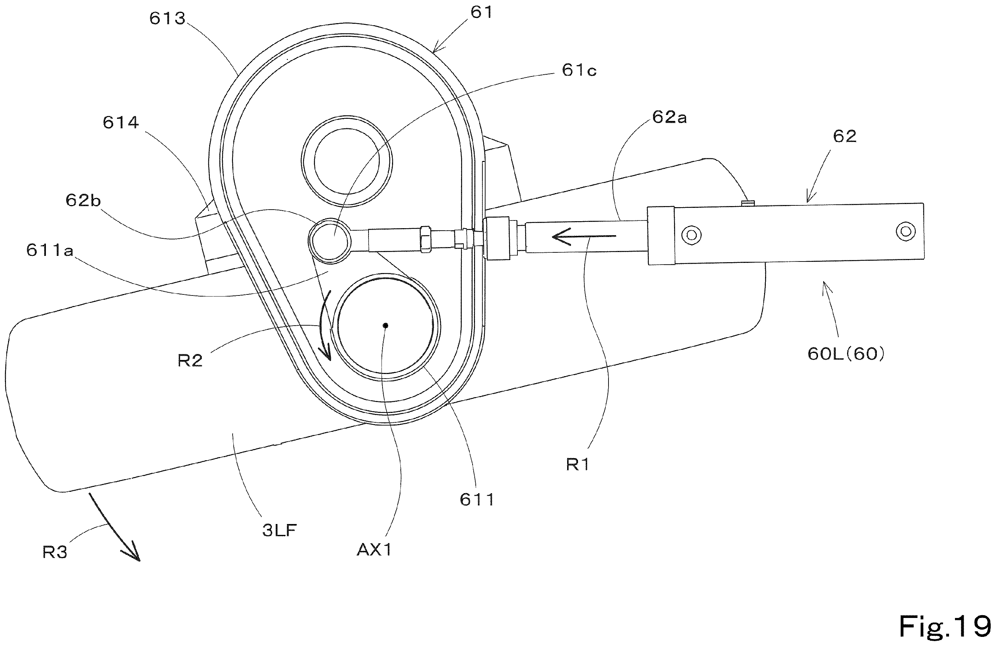

The cylinder 62 rotates the left front wheel 3LF about the axis AX1 by rotating the rotating body 61 about the axis AX1 by extension and retraction of the rod 62a. First, the situation where the rod 62a is extended will be described. As illustrated in FIG. 19, when the rod 62a is extended (see an arrow R1), the first section 611 rotates about the axis AX1 with the projection 611a (see an arrow R2). When the first section 611 rotates about the axis AX1, the second section 612, the third section 613 and the fourth section 614 which are integrated with the first section 611, also rotate about the axis AX1. When the fourth section 614 rotates about the axis AX1, the left front wheel 3LF connected to the fourth section 614 also rotates about the axis AX1 (see an arrow R3). Thus, the left front wheel 3LF changes its direction such that the front thereof faces outward (rightward).

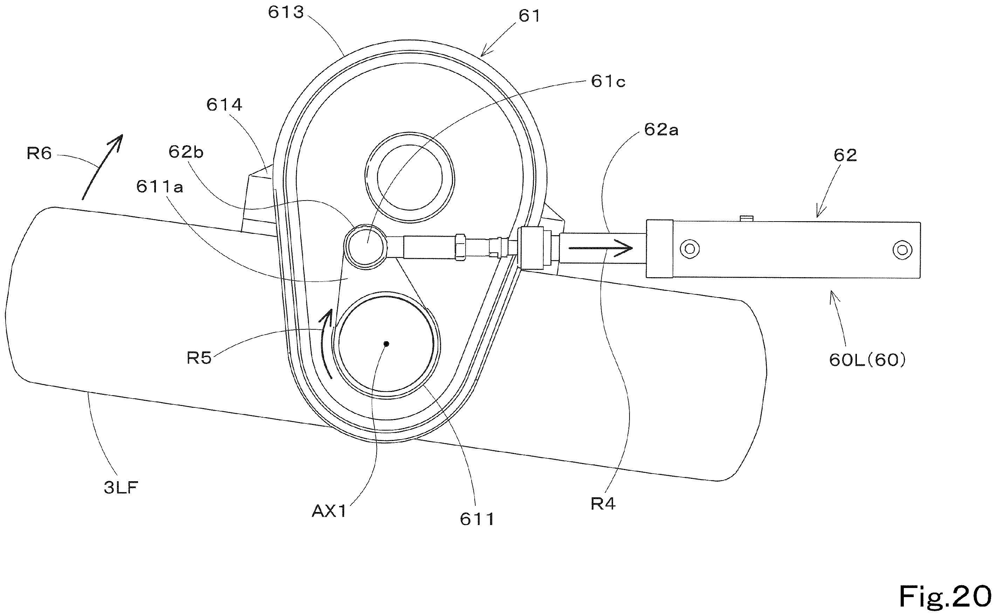

Next, the situation where the rod 62a is retracted will be described. As illustrated in FIG. 20, when the rod 62a is retracted (see an arrow R4), the first section 611 rotates about the axis AX1 with the projection 611a (see an arrow R5). The rotational direction then is opposite to the direction when the rod 62a extended. When the first section 611 rotates about the axis AX1, the second section, the third section 613, and the fourth section 614 which are integrated with the first section 611, also rotate about the axis AX1. When the fourth section 614 rotates about the axis AX1, the left front wheel 3LF connected to the fourth section 614 also rotates about the axis AX1 (see an arrow R6). Thus, the left front wheel 3LF changes its direction such that the front thereof faces inward (leftward).

As described above, the left steering mechanism 60L can rotate the left front wheel 3LF about the axis AX1 by extending or retracting the rod 62a by driving the cylinder 62. Similarly, the right steering mechanism 60R can rotate the right front wheel 3RF about the axis AX1 by extending or retracting the rod 62a by driving the cylinder 62. In this manner, the travel direction of the working vehicle 1 can be changed by changing the direction of the left front wheel 3LF and the right front wheel 3RF by driving the steering mechanism 60.

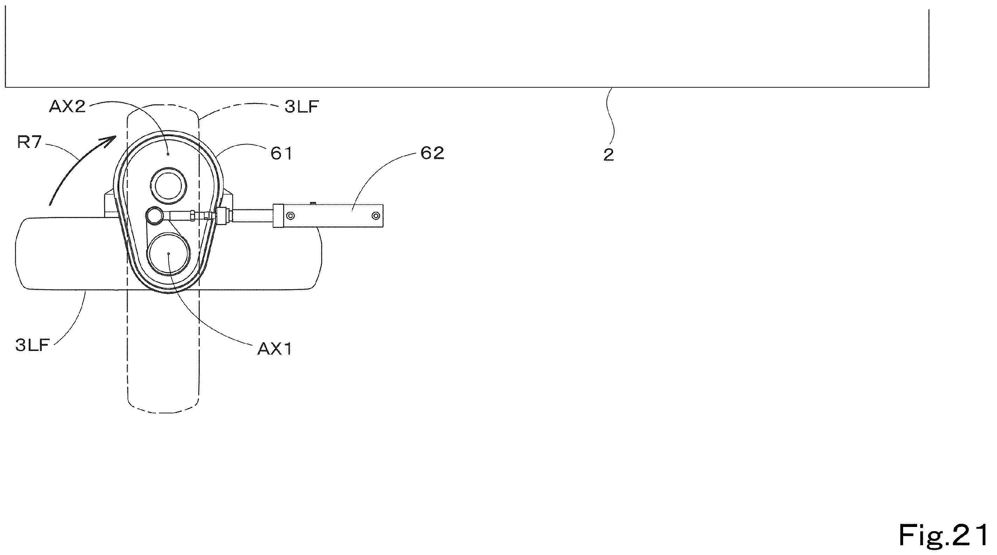

As is apparent from the above description, the axis AX1 that is the rotation axis of the wheels (the left front wheel 3LF and the right front wheel 3RF) is the steering axis when the wheels (the left front wheel 3LF and the right front wheel 3RF) are steered. Here, as described above, the axis AX1 serving as the steering axis is upward of the wheels (front wheels). Thus, as compared to when the steering axis is inward of the wheels, the wheels (front wheels) do not move toward the vehicle body 2 side at the time steering. Hereinafter, this point will be described with reference to FIG. 21.

FIG. 21 is a plan view illustrating a change in the position of the left front wheel 3LF when the left front wheel 3LF is rotated inward (when the left front wheel 3LF is steered leftward) as indicated by an arrow R7. The position of the left front wheel 3LF before rotation (before steering) is indicated by a solid line, and the position of the left front wheel 3LF after rotation (after steering) is indicated by an imaginary line. As illustrated in FIG. 21, the steering axis (the axis AX1) of the left front wheel 3LF is upward of the left front wheel 3LF, and thus as compared to when the steering axis is inward of the left front wheel 3LF (for example, when the steering axis is at the position of AX2), the amount (length) of inward movement of the left front wheel 3LF to the vehicle body 2 side reduces after steering. Thus, at the time of steering, interference between the wheels (front wheels) and the vehicle body 2 is prevented, and a larger steering angle can be secured.

Note that as a different embodiment of the drive device 45, the motor in the drive device 45 may be an in-wheel motor. In this case, all the left front wheel 3LF, the right front wheel 3RF, the left rear wheel 3LB, and the right rear wheel 3RB may be driven by an in-wheel motor, or part (for example, the left front wheel 3LF and the right front wheel 3RF, or the left rear wheel 3LB and the right rear wheel 3RB) may be driven by an in-wheel motor.

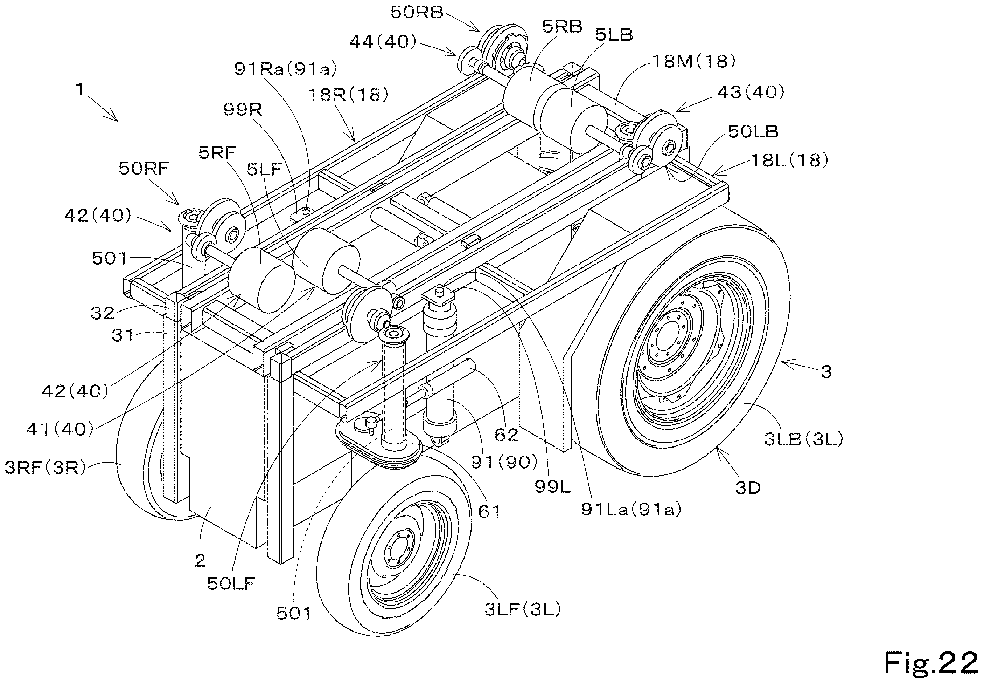

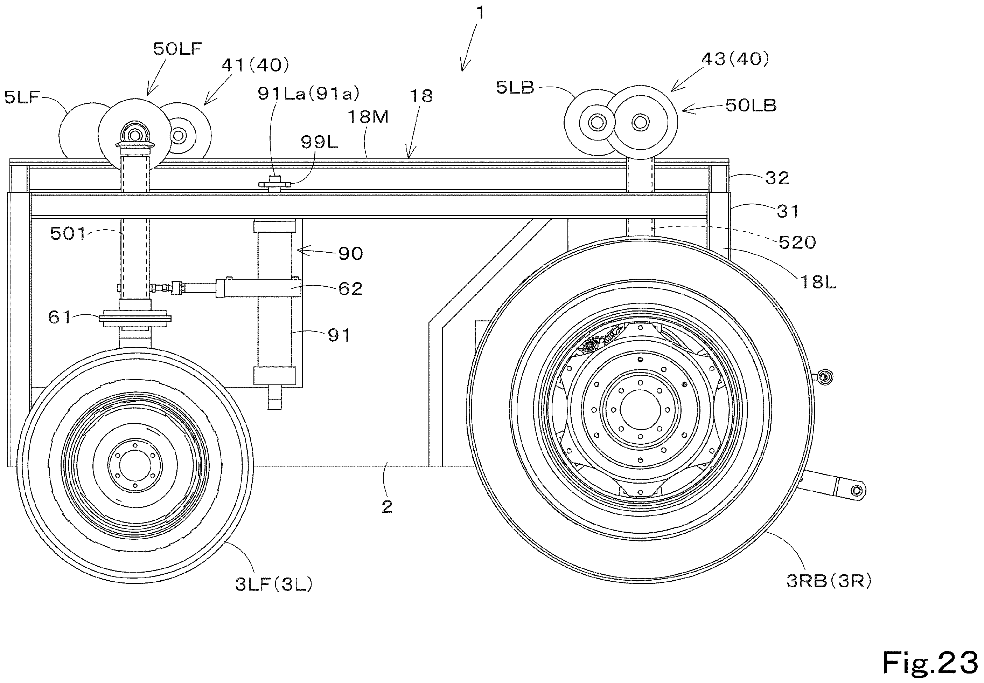

FIG. 22 and FIG. 23 are views illustrating another embodiment of the working vehicle 1. In the working vehicle 1 according to another embodiment, the configuration (positioning) of the drive assembly 40 to drive the wheels 30 is partially different from the configuration of the working vehicle 1 in the above-described embodiment (see FIG. 1 to FIG. 6). Hereinafter, the drive assembly 40 of the working vehicle 1 according to another embodiment will be described.

The drive assembly 40 includes a first drive assembly 41 to drive the left front wheel 3LF, a second drive assembly 42 to drive the right front wheel 3RF, a third drive assembly 43 to drive the left rear wheel 3LB, and a fourth drive assembly 44 to drive the right rear wheel 3RB. The drive assemblies are attached to a frame structure 18.

First, the configuration of the first drive assembly 41 will be described. The first drive assembly 41 includes the motor 5LF, and a transmission mechanism 50LF to transmit the power of the motor 5LF to the left front wheel 3LF. The motor 5LF is located above the vehicle body 2. The motor 5LF is attached to the upper frame 18M of the frame structure 18. The motor 5LF is attached to the upper frame 18M via a motor bracket (not illustrated). The output shaft of the motor 5LF extends leftward.

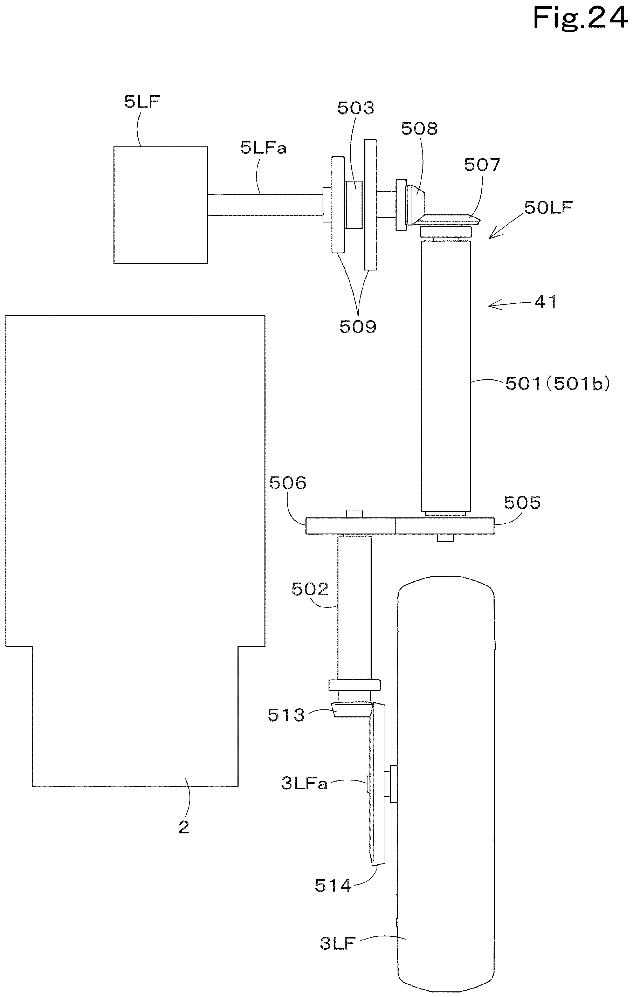

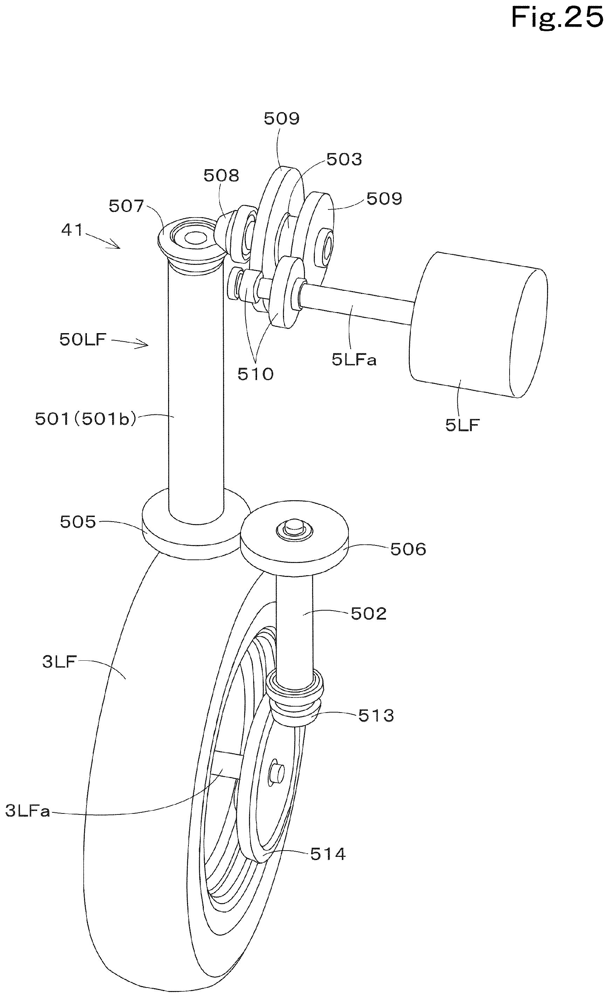

As illustrated in FIG. 24 and FIG. 25, the transmission mechanism 50LF includes a plurality of transmission shafts and a plurality of gears. The plurality of transmission shafts include a first transmission shaft 501, a second transmission shaft 502, and a third transmission shaft 503. The plurality of gears include a first gear 505, a second gear 506, a third gear 507, a fourth gear 508, a fifth gear 509, a sixth gear 510, a ninth gear 513, and a 10th gear 514.

As described above, the transmission mechanism 50LF includes the first transmission shaft 501, the second transmission shaft 502 and the third transmission shaft 503. The first transmission shaft 501 is located above the left front wheel 3LF, and extends in the up-down direction. The second transmission shaft 502 is located inward (rightward) of the left front wheel 3LF, and extends in the up-down direction. The third transmission shaft 503 is located above the first transmission shaft 501 and the second transmission shaft 502, and extends in the lateral direction.

The first transmission shaft 501, the second transmission shaft 502 and the third transmission shaft 503 are attached to the frame structure 18 through a bearing or the like. The first transmission shaft 501 is attached, at an upper portion, to the movable frame 32 (the second left frame 20L or the lateral frame 18M). The second transmission shaft 502 is attached to the fixed frame 31. The third transmission shaft 503 is attached to the movable frame 32 (the second left frame 20L or the lateral frame 18M).

The third transmission shaft 503 receives the rotational power of the motor 5LF and rotates. The first transmission shaft 501 receives the power transmitted from the third transmission shaft 503 and rotates. The second transmission shaft 502 receives the power transmitted from the first transmission shaft 501 and rotates.

The first gear 505 is attached to a lower portion of the first transmission shaft 501. The second gear 506 is attached to an upper portion of the second transmission shaft 502. The first gear 505 and the second gear 506 are engaged with each other. The third gear 507 is attached to an upper portion of the first transmission shaft 501. The third gear 507 is a bevel gear, and engaged with the fourth gear 508 which is also a bevel gear.

The fourth gear 508 is attached to a left portion of the third transmission shaft 503. The fifth gear 509 is attached to a right portion of the third transmission shaft 503. The fifth gear 509 is engaged with the sixth gear 510. The fifth gear 509 and the sixth gear 510 each include a pair of gears located in parallel to each other. The sixth gear 510 is attached to the output shaft 5LFa of the motor 5LF.

The ninth gear 513 is attached to a lower portion of the second transmission shaft 502. The ninth gear 513 is a bevel gear, and engaged with the 10th gear 514 which is also a bevel gear. The 10th gear 514 is attached to a rotational shaft 3LFa (central shaft of the left front wheel 3LF) extending inward (rightward) from the center of the left front wheel 3LF.

As described above, the first drive assembly 41 in another embodiment differs from the first drive assembly 41 (see FIG. 11, FIG. 12, and FIG. 17) of the above-described embodiment in that the fourth transmission shaft 504, the seventh gear 511, and the eighth gear 512 are not provided, and the sixth gear 510 is attached to the output shaft 5LFa of the motor 5LF.

When the output shaft 5LFa of the motor 5LF rotates, the sixth gear 510 rotates, and the fifth gear 509 engaged with the sixth gear 510 rotates. When the fifth gear 509 rotates, the fourth gear 508 rotates with the third transmission shaft 503. When the fourth gear 508 rotates, the third gear 507 engaged with the fourth gear 508 rotates. When the third gear 507 rotates, the first gear 505 rotates with the first transmission shaft 501. When the first gear 505 rotates, the second gear 506 engaged with the first gear 505 rotates. When the second gear 506 rotates, the ninth gear 513 rotates with the second transmission shaft 502. When the ninth gear 513 rotates, the 10th gear 514 engaged with the ninth gear 513 rotates. When the 10th gear 514 rotates, the left front wheel 3LF rotates with the rotational shaft 3LFa. In this manner, the left front wheel 3LF can be rotated by driving the motor 5LF.

The first transmission shaft 501 can be extended and retracted in the up-down direction. Specifically, the first transmission shaft 501 can be extended and retracted as the height of the vehicle body 2 is changed by the later-described height changing mechanism 90. The height changing mechanism 90 is a mechanism that can change the height of the vehicle body 2 that is the distance of the vehicle body 2 from the ground surface. The specific configuration of the height changing mechanism 90 will be described in detail later. Here, the structure that allows the first transmission shaft 501 to be extended and retracted will be described.

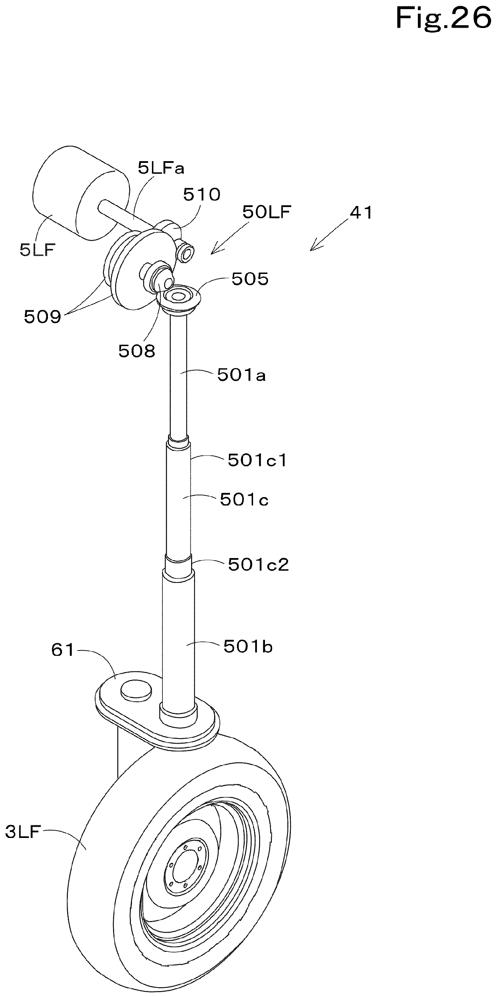

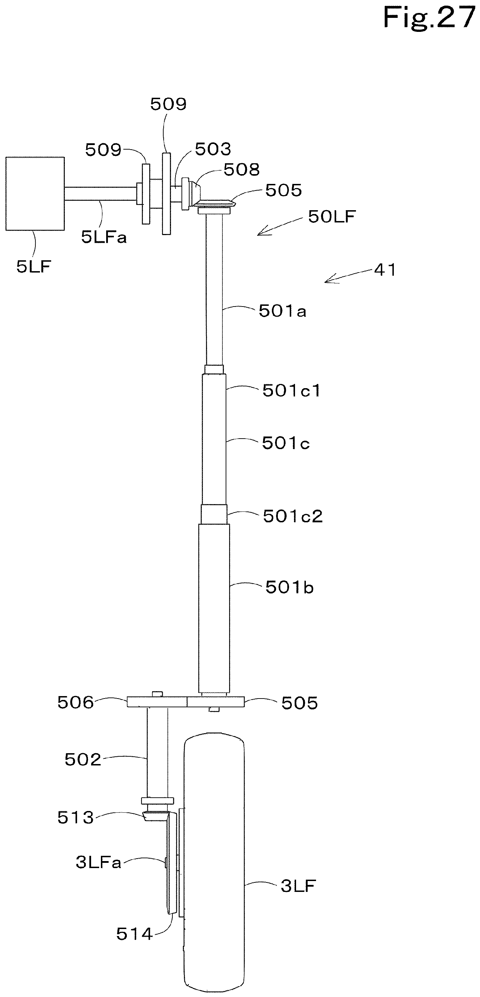

As illustrated in FIG. 26 and FIG. 27, the first transmission shaft 501 includes an upper shaft 501a and a lower shaft 501b. The power from the motor 5LF is transmitted to the upper shaft 501a. The lower shaft 501b transmits, to the second transmission shaft 502, the power transmitted to the upper shaft 501a. The upper shaft 501a is in a cylindrical shape or a columnar shape. The lower shaft 501b is in a cylindrical shape. The axis of the upper shaft 501a and the axis of the lower shaft 501b are located on the same straight line extending in the up-down direction. In the first transmission shaft 501, the distance between the upper end of the upper shaft 501a and the lower end of the lower shaft 501b changes as the height of the vehicle body 2 is changed by the height changing mechanism 90. In other words, the upper shaft 501a is raised with respect to the lower shaft 501b. Thus, the length of the first transmission shaft 501 in the up-down direction is changed.

The first transmission shaft 501 includes an intermediate shaft 501c. The axis of the intermediate shaft 501c, and the axes of the upper shaft 501a and the lower shaft 501b are located on the same straight line. The intermediate shaft 501c is in a cylindrical shape. The intermediate shaft 501c includes an upper portion 501c1 into which the upper shaft 501a is inserted, and a lower portion 501c2 into which the lower shaft 501b is inserted.

The outer surface of the upper shaft 501a is provided with a first spline. The first spline includes elongated protrusion(s) extending in the up-down direction, the protrusions being provided on the outer surface of the upper shaft 501a at regular intervals in a circumferential direction. The inner surface of the lower shaft 501b is provided with a second spline. The second spline includes groove(s) extending in the up-down direction, the grooves being provided on the inner surface of the lower shaft 501b at regular intervals in a circumferential direction.

The inner surface of the intermediate shaft 501c is provided with an inner spline. The inner spline includes grooves extending in the up-down direction, the grooves being provided on inner surface of the intermediate shaft 501c at regular intervals in a circumferential direction. The outer surface of the intermediate shaft 501c is provided with an outer spline. The outer spline includes protrusions extending in the up-down direction, the protrusions being provided on the outer surface of the intermediate shaft 501c at regular intervals in a circumferential direction.

The first spline is engaged with the inner spline. Specifically, the protrusions of the first spline are engaged with the grooves of the inner spline. The second spline is engaged with the outer spline. Specifically, the grooves of the second spline are engaged with the protrusions of the outer spline. Consequently, the rotation of the upper shaft 501a is transmitted to the intermediate shaft 501c, and the rotation of the intermediate shaft 501c is transmitted to the lower shaft 501b. Thus, in the first transmission shaft 501, the upper shaft 501a, the intermediate shaft 501c and the lower shaft 501b integrally rotate about the axis.

Since both the protrusions of the first spline and the grooves of the inner spline extend in the up-down direction, the upper shaft 501a can be moved in the up-down direction along the axis of the intermediate shaft 501c. Since both the grooves of the second spline and the protrusions of the outer spline extend in the up-down direction, the intermediate shaft 501c can be moved in the up-down direction along the axis of the lower shaft 501b. Due to these movements in the up-down direction, the first transmission shaft 501 can be extended and retracted. FIG. 26 and FIG. 27 illustrate a state where the first transmission shaft 501 is extended. FIG. 24 and FIG. 25 illustrate a state where the first transmission shaft 501 is retracted.

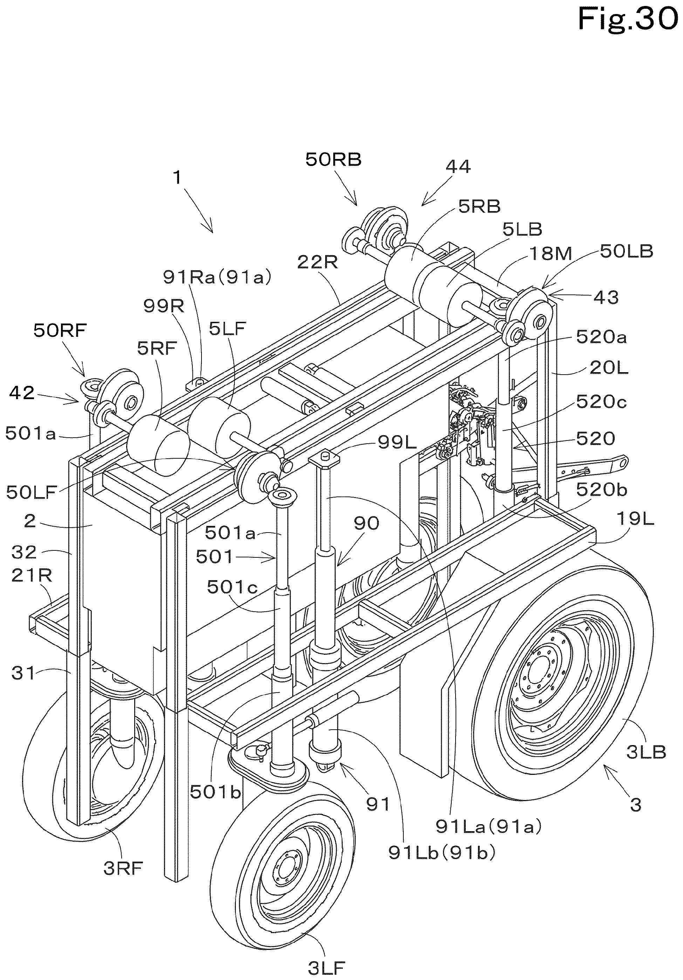

The first transmission shaft 501 is extended or retracted by driving the lifting cylinder 91 (see FIG. 22 and FIG. 30) of the height changing mechanism 90. The first transmission shaft 501 is extended or retracted with the extension or retraction of the rod 91a of the lifting cylinder 91. When the vehicle body 2 is raised or lowered with the frame structure 18 by extending or retracting the rod 91a of the lifting cylinder 91, the first transmission shaft 501 is extended or retracted.

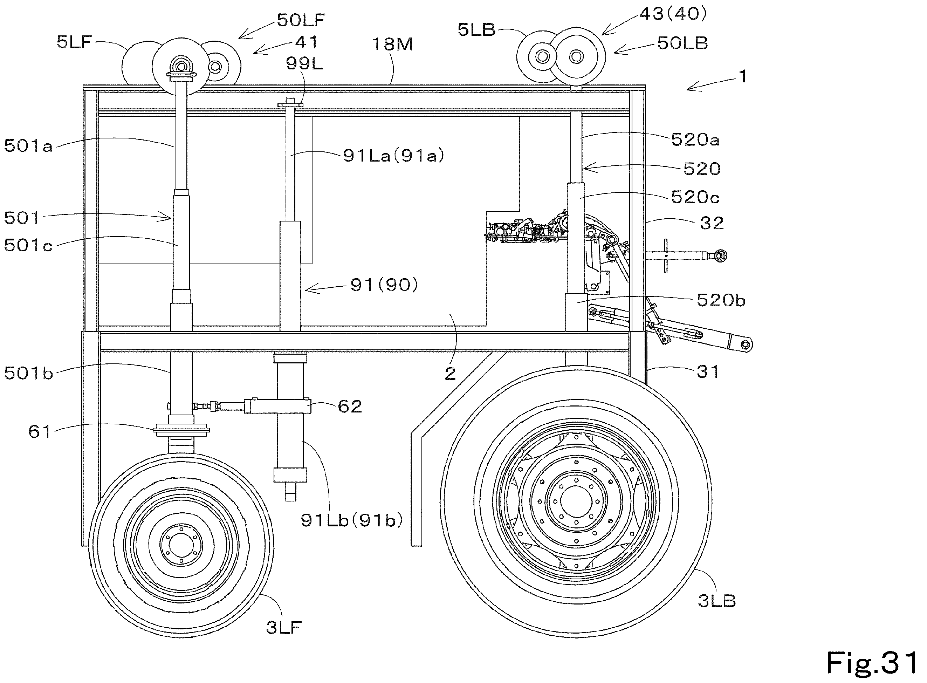

As illustrated in FIG. 30 and FIG. 31, when the vehicle body 2 is raised by extending the rod 91a of the lifting cylinder 91, the first transmission shaft 501 is extended. As illustrated in FIG. 22 and FIG. 23, when the vehicle body 2 is lowered by retracting the rod 91a of the lifting cylinder 91, the first transmission shaft 501 is retracted.

Movable members (the upper shaft 501a and the intermediate shaft 501c) at the time of extension or retraction of the first transmission shaft 501 are attached to the movable frame 32 (the second left frame 20L or the second right frame 22R) via a bearing device (not illustrated). Thus, when the movable frame 32 is raised or lowered with the vehicle body 2, the upper shaft 501a and the intermediate shaft 501c can be extended or retracted.

Note that in the above description, the configuration has been described in which the first transmission shaft 501 can be extended and retracted in the up-down direction; however, a configuration may be adopted in which the second transmission shaft 502 instead of the first transmission shaft 501 can be extended and retracted in the up-down direction. In this case, it is sufficient that a configuration be adopted in which the second transmission shaft 502 includes the above-described upper shaft, lower shaft, and intermediate shaft.

**In** the above description, a configuration has been described in which the first transmission shaft 501 includes the upper shaft 501a, the lower shaft 501b and the intermediate shaft 501c; however, the intermediate shaft 501c may be omitted. In this case, it is sufficient that the upper shaft 501a and the lower shaft 501b be connected by a spline without using an intermediate shaft. Specifically, it is sufficient that the outer peripheral surface of the upper shaft 501a be provided with an outer spline, the inner peripheral surface of the lower shaft 501b be provided with an inner spline, and these outer and inner splines be engaged with each other.

Next, a configuration of the second drive assembly 42 that rotates the right front wheel 3RF will be described. As illustrated in FIG. 22 and the like, the second drive assembly 42 includes a motor 5RF, and a transmission mechanism 50RF to transmit the power of the motor 5RF to the right front wheel 3RF. The motor 5RF is located above the vehicle body 2. The motor 5RF is attached to the upper frame 18M of the frame structure 18.

The motor 5RF is attached to the upper frame 18M via a motor bracket (not illustrated). The output shaft of the motor 5RF extends rightward. The configuration of the transmission mechanism 50RF is the same as the configuration of the transmission mechanism 50LF except that both transmission mechanisms are located symmetrically with respect to the center of the vehicle body 2 in the width direction (lateral direction), and thus a description will be omitted. The first transmission shaft 501 of the transmission mechanism 50RF can be extended and retracted with the change in the height of the vehicle body 2 made by the height changing mechanism 90.

Next, the configuration of the third drive assembly 43 that rotates the left rear wheel 3LB will be described. As illustrated in FIG. 22 and the like, the third drive assembly 43 includes a motor 5LB, and a transmission mechanism 50LB to transmit the power of the motor 5LB to the left rear wheel 3LB. The motor 5LB is attached to the upper frame 18M of the frame structure 18. The motor 5LB is attached to the upper frame 18M via a motor bracket (not illustrated). The output shaft of the motor 5RB extends leftward.

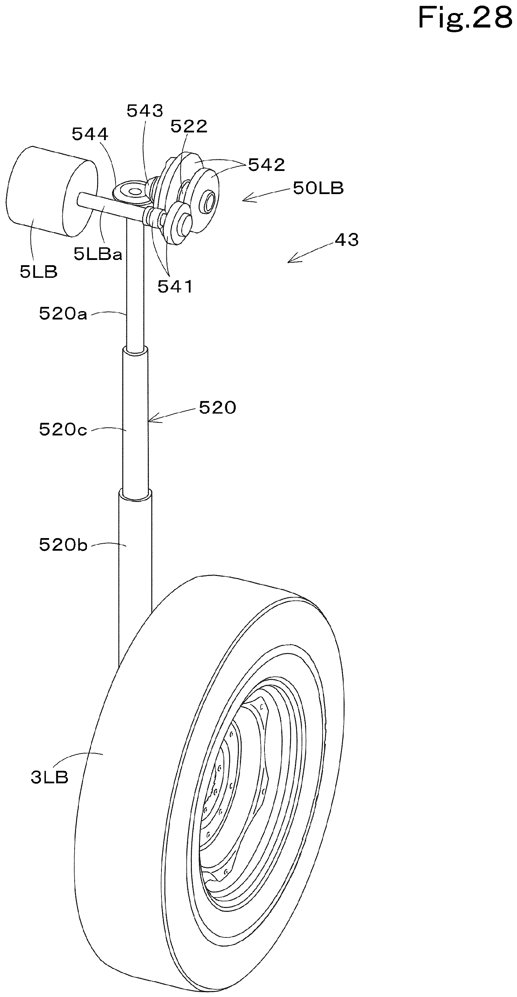

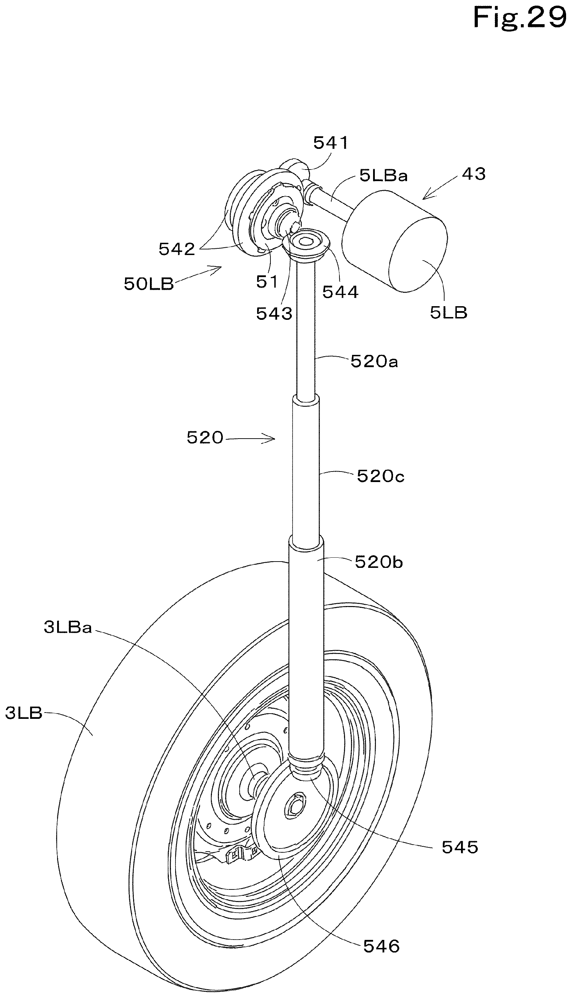

As illustrated in FIG. 28 and FIG. 29, the transmission mechanism 50LB includes a lower transmission shaft 520, an upper transmission shaft 522, a first transmission gear 541, a second transmission gear 542, a third transmission gear 543, a fourth transmission gear 544, a fifth transmission gear 545, and a sixth transmission gear 546.

As described above, the transmission mechanism 50LB includes the lower transmission shaft 520 and the upper transmission shaft 522. The upper transmission shaft 522 is located rearward of the output shaft 5LBa of the motor 5LB, and extends in parallel with the output shaft 5LBa in the lateral direction. The upper transmission shaft 522 receives the power from the output shaft 5LBa of the motor 5LB, and transmits the power to the lower transmission shaft 520. The lower transmission shaft 520 extends in the up-down direction.

The output shaft 5LBa of the motor 5LB extends in the lateral direction. The first transmission gear 541 is attached to the output shaft 5LBa. The second transmission gear 542 is attached to a left portion of the upper transmission shaft 522. The first transmission gear 541 and the second transmission gear 542 are engaged with each other. The first transmission gear 541 and the second transmission gear 542 each include a pair of gears located in parallel to each other.

The third transmission gear 543 is attached to a right portion of the upper transmission shaft 522. The third transmission gear 543 is a bevel gear, and engaged with the fourth transmission gear 544 which is also a bevel gear. The fourth transmission gear 544 is attached to an upper portion of the lower transmission shaft 520. The fifth transmission gear 545 is attached to a lower portion of the lower transmission shaft 520. The fifth transmission gear 545 is a bevel gear, and engaged with the sixth transmission gear 546 which is also a bevel gear. The sixth transmission gear 546 is attached to a rotational shaft 3LBa extending inward (rightward) from the center of the left rear wheel 3LB.

When the output shaft 5LBa of the motor 5LB rotates, the first transmission gear 541 rotates, and the second transmission gear 542 engaged with the first transmission gear 541 rotates. When the second transmission gear 542 rotates, the third transmission gear 543 rotates with the upper transmission shaft 522. When the third transmission gear 543 rotates, the fourth transmission gear 544 engaged with the third transmission gear 543 rotates. When the fourth transmission gear 544 rotates, the fifth transmission gear 545 rotates with the lower transmission shaft 520. When the fifth transmission gear 545 rotates, the sixth transmission gear 546 engaged with the fifth transmission gear 545 rotates. When the sixth transmission gear 546 rotates, the left rear wheel 3LB rotates with the rotational shaft 3LBa. In this manner, the left rear wheel 3LB can be rotated by driving the motor 5LB.

Next, the configuration of the fourth drive assembly 44 that rotates the right rear wheel 3RB will be described. As illustrated in FIG. 22 and the like, the fourth drive assembly 44 includes a motor 5RB, and a transmission mechanism 50RB to transmit the power of the motor 5RB to the right rear wheel 3RB. The motor 5RB is attached to the upper frame 18M of the frame structure 18. The configuration of the transmission mechanism 50RB is the same as the configuration of the transmission mechanism 50LB except that both transmission mechanisms are located symmetrically with respect to the center of the vehicle body 2 in the width direction (lateral direction), and thus a description will be omitted. The transmission mechanism 50RB can rotate the right rear wheel 3RB by driving the motor 5RB.

The third drive assembly 43 and the fourth drive assembly 44 are provided with a brake system 51. The operation of the brake system 51 can be controlled by the controller 15.

The lower transmission shaft 520 of the third drive assembly 43 and the fourth drive assembly 44 can be extended and retracted with the change in the height of the vehicle body 2 made by the height changing mechanism 90. FIG. 28 and FIG. 29 illustrate a state where the lower transmission shaft 520 is extended. The extension and retraction structure of the lower transmission shaft 520 is the same as the extension and retraction structure of the above-described first transmission shaft 501. Specifically, the lower transmission shaft 520 includes an upper shaft 520a, a lower shaft 520b and an intermediate shaft 520c which are similar in configuration to the upper shaft 501a, the lower shaft 501b and the intermediate shaft 501c of the above-described first transmission shaft 501.

In the lower transmission shaft 520, the rotation of the upper shaft 520a is transmitted to the intermediate shaft 520c, and the rotation of the intermediate shaft 520c is transmitted to the lower shaft 520b. Thus, in the first transmission shaft 501, the upper shaft 520a, the intermediate shaft 520c and the lower shaft 520b integrally rotate about the axis. The upper shaft 520a can be moved in the up-down direction along the axis of the intermediate shaft 520c, and the intermediate shaft 520c can be moved in the up-down direction along the axis of the lower shaft 520b. Due to this movement, the lower transmission shaft 520 can be extended and retracted in the up-down direction.

The lower transmission shaft 520 is extended and retracted by driving the lifting cylinder 91 of the height changing mechanism 90. The lower transmission shaft 520 is extended or retracted with the extension or retraction of the rod 91a of the lifting cylinder 91. When the vehicle body 2 is raised or lowered with the frame structure 18 by extending or retracting the rod 91a of the lifting cylinder 91, the lower transmission shaft 520 is extended or retracted.

When the vehicle body 2 is raised by extending the rod 91a of the lifting cylinder 91, the lower transmission shaft 520 is extended (see FIG. 30 and FIG. 31). When the vehicle body 2 is lowered by retracting the rod 91a of the lifting cylinder 91 (see FIG. 22 and FIG. 23), the lower transmission shaft 520 is retracted.

Movable members (the upper shaft 520a and the intermediate shaft 520c) at the time of extension or retraction of the lower transmission shaft 520 are attached to the movable frame 32 (the second left frame 20L or the second right frame 22R) via a bearing device (not illustrated). Thus, when the movable frame 32 is raised or lowered with the vehicle body 2, the upper shaft 520a and the intermediate shaft 520c can be extended or retracted.

As described above, the drive assembly 40 of the working vehicle 1 according to another embodiment can extend and retract the first transmission shaft 501 of the first drive assembly 41 and the second drive assembly 42, and the lower transmission shaft 520 of the third drive assembly 43 and the fourth drive assembly 44 by driving the lifting cylinder 91 of the height changing mechanism 90. Thus, the vehicle body 2 can be raised or lowered with power transmission from the motor 5 located above the vehicle body 2 to the wheels 30 maintained.

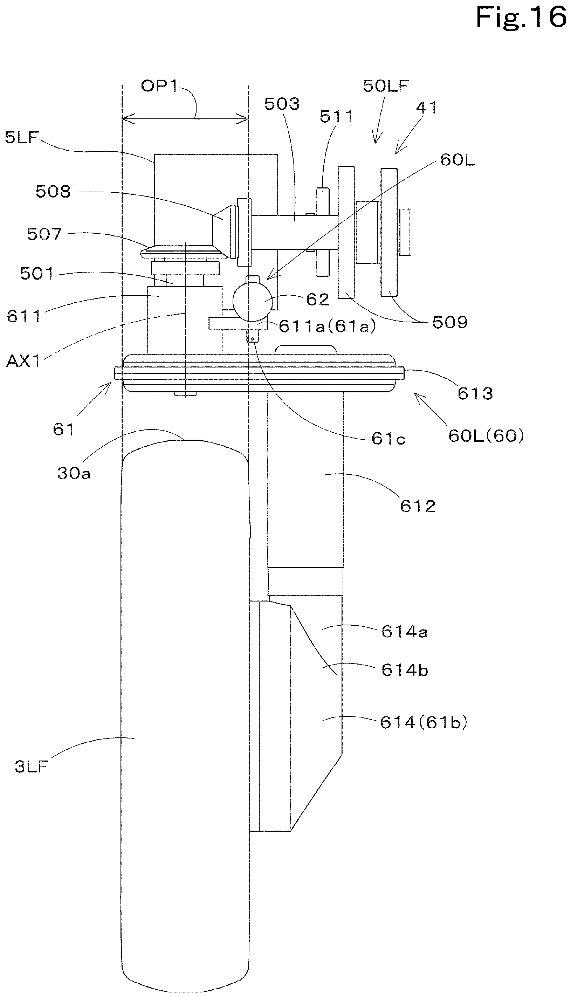

As illustrated in FIG. 16, FIG. 17, FIG. 32, and FIG. 33, at least a portion of the drive assembly 40 is located at a position which is radially outward of and faces a tread portion 30a of the wheel 30 and which overlaps the position of the wheel 30 in the width direction (lateral direction) of the vehicle body 2. The tread portion 30a is the portion where the wheel 30 is to be in contact with the ground surface.

Hereinafter, for convenience of description, the "position which is radially outward of and faces the tread portion 30a of the wheel 30 and which overlaps the position of the wheel 30 in the width direction of the vehicle body 2" is referred to as the "outer overlapping position". Also, the "position radially outward of and facing the tread portion 30a of the wheel 30" may be referred to as the "periphery of the wheel 30".

The reference position (angle) of the wheel 30 to determine whether at least a portion of the drive assembly 40 is at the outer overlapping position is given by the position (angle) of the wheel 30 when the working vehicle 1 travels straight forward or rearward. In other words, the reference position (angle) of the wheel 30 to determine whether at least a portion of the drive assembly 40 is at the outer overlapping position is given by the position (angle) of the wheel 30 with the position (angle) not steered to the left or the right.

The "at least a portion of the drive assembly 40" at the outer overlapping position is, for example, the drive device 45. In this case, the entirety of the drive device 45 may be at the outer overlapping position, or part of the drive device 45 may be at the outer overlapping position. In other words, it is sufficient that at least a portion of the drive device 45 be at the outer overlapping position.

As illustrated in FIG. 16, FIG. 17, and FIG. 32, in the first drive assembly 41, part of the motor 5LF serving as the drive device 45 is at an outer overlapping position OP1. Part of the motor 5LF is located at a position upward of the tread portion 30a of the left front wheel 3LF, the position being opposed to the tread portion 30a. Although explanation with an illustration is omitted, in the second drive assembly 42, as in the first drive assembly 41, part of the motor 5RF serving as the drive device 45 is at the outer overlapping position. Part of the motor 5RF is located at a position upward of the tread portion 30a of the right front wheel 3RF, the position being opposed to the tread portion 30a.

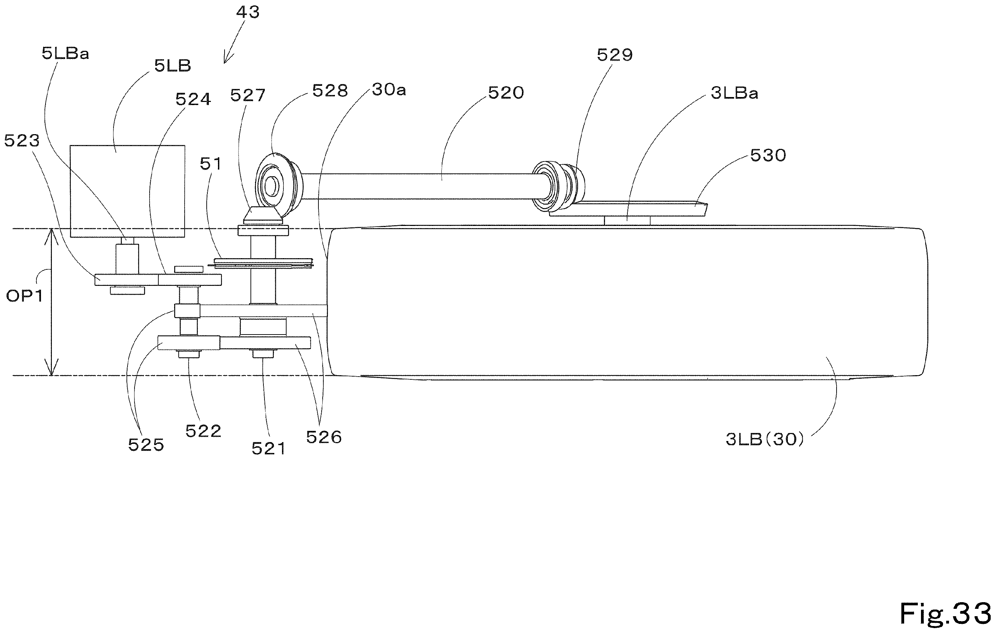

As illustrated in FIG. 33, in the third drive assembly 43, part of the motor 5LB serving as the drive device 45 is at an outer overlapping position OP1. Part of the motor 5LB is located at a forward upper position of the tread portion 30a of the left rear wheel 3LB, the forward upper position being opposed to the tread portion 30a. Although explanation with an illustration is omitted, in the fourth drive assembly 44, as in the third drive assembly 43, part of the motor 5RB serving as the drive device 45 is at an outer overlapping position. Part of the motor 5RB is located at a forward upper position of the tread portion 30a of the right rear wheel 3RB, the forward upper position being opposed to the tread portion 30a.

The "at least a portion of the drive assembly 40" at the outer overlapping position may be, for example, the transmission mechanism 50. In this case, the entirety of the transmission mechanism 50 may be at the outer overlapping position, or part of the transmission mechanism 50 may be at the outer overlapping position. In other words, it is sufficient that at least a portion of the transmission mechanism 50 be at the outer overlapping position.

As illustrated in FIG. 16, FIG. 17, and FIG. 32, in the first drive assembly 41, part of the transmission mechanism 50LF is at the outer overlapping position OP1. Specifically, part or the entirety of the first transmission shaft 501, the third transmission shaft 503, the first gear 505, the second gear 506, the third gear 507, and the fourth gear 508 of the transmission mechanism 50LF are at the outer overlapping position OP1. Although explanation with an illustration is omitted, in the second drive assembly 42, as in the first drive assembly 41, part or the entirety of the first transmission shaft 501, the third transmission shaft 503, the first gear 505, the second gear 506, the third gear 507, and the fourth gear 508 of the transmission mechanism 50RF are at the outer overlapping position.

As illustrated in FIG. 33, in the third drive assembly 43, part of the transmission mechanism 50LB is at the outer overlapping position. Specifically, part or the entirety of the intermediate transmission shaft 521, the upper transmission shaft 522, the 11th gear 523, the 12th gear 524, the 13th gear 525, the 14th gear 526 of the transmission mechanism 50LB are at the outer overlapping position OP1. Although explanation with an illustration is omitted, in the fourth drive assembly 44, as in the third drive assembly 43, part or the entirety of the intermediate transmission shaft 521, the upper transmission shaft 522, the 11th gear 523, the 12th gear 524, the 13th gear 525, and the 14th gear 526 of the transmission mechanism 50RB are at the outer overlapping position.

The "at least a portion of the drive assembly 40" at the outer overlapping position may be, for example, the steering mechanism 60. In this case, the entirety of the steering mechanism 60 may be at the outer overlapping position, or part of the steering mechanism 60 may be at the outer overlapping position. In other words, it is sufficient that at least a portion of the steering mechanism 60 be at the outer overlapping position.

As illustrated in FIG. 16, in the first drive assembly 41, part of the left steering mechanism 60L is at the outer overlapping position OP1. Specifically, part of the rotating body 61 and part of the cylinder 62 of the left steering mechanism 60L are at the outer overlapping position OP1. Although explanation with an illustration is omitted, in the second drive assembly 42, a portion of the rotating body 61 and a portion of the cylinder 62 of the right steering mechanism 60R are at the outer overlapping position OP1.

The "at least a portion of the drive assembly 40" at the outer overlapping position is at least one of the drive device 45, the transmission mechanism 50, or the steering mechanism 60. In other words, the "at least a portion of the drive assembly 40" at the outer overlapping position may be one of the drive device 45, the transmission mechanism 50, and the steering mechanism 60, or may be two of them, or may be all of them.

For example, a configuration may be adopted in which at least a portion of each of the drive device 45, the transmission mechanism 50 and the steering mechanism 60 is at the outer overlapping position. In the embodiment illustrated in FIG. 1 to FIG. 6, FIG. 15, FIG. 16, and the like, part of the drive device 45, part of the transmission mechanism 50, and part of the steering mechanism 60 are at the outer overlapping position.

In another embodiment illustrated in FIG. 22 to FIG. 25, at least a portion of the drive assembly 40 (the first drive assembly 41 and the second drive assembly 42) is at the outer overlapping position, and the "at least a portion of the drive assembly 40" at the outer overlapping position is two of the drive device 45, the transmission mechanism 50, or the steering mechanism 60. Specifically, in another embodiment, part of the transmission mechanism 50 and the part of the steering mechanism 60 are at the outer overlapping position, and the drive device 45 is not at the outer overlapping position. That is, as illustrated in FIG. 22 and the like, the motors 5LF, 5RF, 5LB, and 5RB serving as the drive device 45 are upward of the vehicle body 2 and inward of the wheel 30, and thus are not at the outer overlapping position.

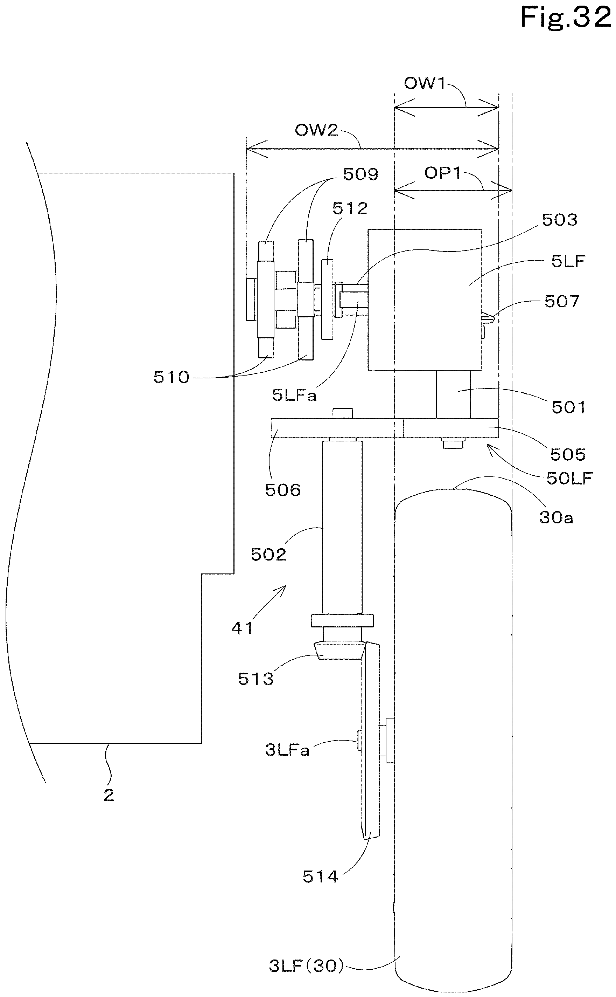

As illustrated in FIG. 32, at least a portion of the drive assembly 40 is at the outer overlapping position OP1, and thus as compared to related art in which the drive assembly 40 is inward (on the vehicle body 2 side) of the wheels 30, it is possible to achieve an area for steering the wheels (the left front wheel 3LF and the right front wheel 3RF) that is larger by an amount of overlap OW1 between a width OW2 of the drive assembly 40 in the lateral direction and the outer overlapping position OP1. Thus, a larger steering angle of the wheels (the left front wheel 3LF and the right front wheel 3RF) can be achieved.

As illustrated in FIG. 7, the working vehicle 1 includes a first detector 70. The first detector 70 detects the situation in the surrounding area of the vehicle body 2. Hereinafter, the first detector 70 may be referred to as the "situation detector". The first detector 70 detects, as the situation in the surrounding area of the vehicle body 2, road information relating to a road travelable by the traveling device 3. Specifically, the first detector 70 detects road information including a value relating to a road travelable by the traveling device 3. The first detector 70 detects, as the road information, e.g., the width of a travelable road. The width of a travelable road detected by the first detector 70 is the width of an object located between the left traveling device 3L and the right traveling device 3R of the working vehicle 1 while traveling. The first detector 70 detects, as the width of a travelable road, e.g., the width of a ridge on the ground surface, and the width of an obstacle on the ground surface that hinders travel.

In addition, the first detector 70 detects, as the road information, e.g., the height of a travelable road. The height of a travelable road detected by the first detector 70 is the height of an object located between the left traveling device 3L and the right traveling device 3R of the working vehicle 1 while traveling. The first detector 70 detects, as the height of a travelable road, e.g., the height of a ridge on the ground surface, and the height of an obstacle on the ground surface that hinders travel.

The obstacle that hinders travel is, e.g., a groove and a hole in the ground surface, a crop planted in the ground surface, an obstacle (for example, a stone and an artificial structure) on the ground surface. Typically, the first detector 70 detects, as the height of an obstacle, the height of crop planted in the ground surface. The height of crop detected by the first detector 70 is the height of the upper end of the crop relative to the ground surface in contact with the wheels 30 of the traveling device 3. For example, when a crop is planted on a ridge, the wheels 30 of the traveling device 3 are in contact with not the ridge, but the ground between ridges, and thus the height of crop detected by the first detector 70 is "the height of the crop itself + the height of the ridge".

As illustrated in FIG. 7, the first detector 70 includes a camera (image pickup device) 71, a sensor 72, and a calculator 73. In the present embodiment, the first detector 70 includes both the camera 71 and the sensor 72, but may include only one of them.

The camera 71 is a charge coupled device (CCD) camera equipped with a CCD image sensor, or a complementary metal oxide semiconductor (CMOS) camera equipped with a CMOS image sensor. The camera 71 is mounted on the vehicle body 2 to capture an image of the surrounding area of the vehicle body 2. It is only necessary for the camera 71 to capture an image in at least one or more directions including the travel direction of the vehicle body 2 among the forward, rearward, leftward, and rightward directions of the vehicle body 2. Preferably, the camera 71 is located to capture an image forward, rearward, or laterally (leftward or rightward) of the vehicle body 2. The camera 71 may be located to allow an image to be captured in a direction (e.g., right forward, left forward, front below, or rear below) other than the forward, rearward, and lateral (leftward and rightward) directions of the vehicle body 2.

The camera 71 captures an image of the surrounding area of the vehicle body 2 to generate an image signal. The calculator 73 includes a computer or the like including a signal processing circuit to process the generated image signal. The signal processing circuit detects the state (such as the presence or absence of an object, the position of an object, the type of an object, and the size of an object) of an object based on the image signal output from the camera 71. The object includes the above-mentioned ridge and obstacle.

The sensor 72 is an optical sensor, and uses, e.g., light detection and ranging (LiDAR). A LiDAR (laser sensor) emits pulsed measurement light (laser light) millions of times per second from a light source such as a laser diode, and performs scanning in a horizontal direction or a vertical direction by reflecting the measurement light by a rotatable mirror to project the measurement light in a predetermined detection range (sensing range). The LiDAR receives, by a light receiving element, reflected light of the measurement light from an object. The signal processing circuit of the calculator 73 detects the state (such as the presence or absence of an object, the position of an object, the type of an object, and the size of an object) of an object based on a light receiving signal output from the light receiving element of the LiDAR. The object includes the above-mentioned ridge and obstacle. The signal processing circuit detects the distance to the object based on the time from emission of the measurement light by the LiDAR until the reflected light is received (time of flight (TOF) method). Note that the distance detection method used by the LiDAR may be a method other than the TOF method.

The sensor 72 may be a sonic sensor. The sensor 72 preferably includes both an optical sensor and a sonic sensor, but may include either one of the sensors. The sonic sensor is, e.g., an airborne ultrasonic sensor such as a sonar. The airborne ultrasonic sensor transmits measurement waves (ultrasonic waves) in a predetermined detection range by a transmitter, and receives, by a receiver, reflection waves which are reflected measurement waves from an object. The signal processing circuit detects the state (such as the presence or absence of an object, the position of an object, the type of an object, and the size of an object) of an object based on the signal output from the receiver. The object includes the above-mentioned ridge and obstacle. The signal processing circuit detects the distance to the object based on the time from transmission of measurement waves by the airborne ultrasonic sensor until the reflected waves are received (time of flight (TOF) method). Note that the distance detection method used by the sonic sensor may be a method other than the TOF method.

The above-described sensor 72 is mounted on the vehicle body 2 to detect an object in the surrounding area of the vehicle body 2. It is only necessary for the sensor 72 to detect an object in at least one or more directions including the travel direction of the vehicle body 2 among the forward, rearward, leftward, and rightward directions of the vehicle body 2. Preferably, the sensor 72 is located to detect an object forward, rearward, or laterally (leftward or rightward) of the vehicle body 2. The sensor 72 may be located to allow an object to be detected in a direction (e.g., right forward, left forward, front below, and rear below) other than the forward, rearward, and lateral (leftward and rightward) directions of the vehicle body 2.

The first detector 70 may detect, as the situation in the surrounding area of the vehicle body 2, the inclination of the ground surface in the lateral direction. In this case, the first detector 70 can detect, as the situation in the surrounding area of the vehicle body 2, the height of the ground surface on which the left traveling device 3L travels, and the height of the ground surface on which the right traveling device 3R travels. In this case, as the first detector 70, e.g., an inclination sensor may be used, which detects the inclination of the vehicle body 2 in the lateral direction. A configuration may be adopted in which the camera 71 is used as the first detector 70, and the calculator 73 detects the inclination of the ground surface in the lateral direction based on the image captured by the camera 71.

As illustrated in FIG. 7, the working vehicle 1 includes a second detector 75. The second detector 75 detects the distance between the left traveling device 3L and the right traveling device 3R. Hereinafter, the second detector 75 may be referred to as the "distance detector". As the second detector (distance detector) 75, for example, the above-mentioned optical sensor and sonic sensor may be used.

The distance between the left traveling device 3L and the right traveling device 3R detected by the second detector 75 is the distance between the inner surface of the left traveling device 3L and the inner surface of the right traveling device 3R. Specifically, the distance is the smaller one of the distance between the inner surface of the left front wheel 3LF and the inner surface of the right front wheel 3RF and the distance between the inner surface of the left rear wheel 3LB and the inner surface of the right rear wheel 3RB.

For example, as illustrated in FIG. 6, when the distance DB between the inner surface of the left rear wheel 3LB and the inner surface of the right rear wheel 3RB is smaller than the distance DF between the inner surface of the left front wheel 3LF and the inner surface of the right front wheel 3RF (DB < DF), the second detector 75 detects, as the distance between the left traveling device 3L and the right traveling device 3R, the distance DB between the inner surface of the left rear wheel 3LB and the inner surface of the right rear wheel 3RB. When the distance DF between the inner surface of the left front wheel 3LF and the inner surface of the right front wheel 3RF is the same as the distance DB between the inner surface of the left rear wheel 3LB and the inner surface of the right rear wheel 3RB (DB = DF), the second detector 75 detects, as the distance between the left traveling device 3L and the right traveling device 3R, either the distance DF or the distance DB. When the distance DF between the inner surface of the left front wheel 3LF and the inner surface of the right front wheel 3RF is smaller than the distance DB between the inner surface of the left rear wheel 3LB and the inner surface of the right rear wheel 3RB (DB > DF), the second detector 75 detects, as the distance between the left traveling device 3L and the right traveling device 3R, the distance DF between the inner surface of the left front wheel 3LF and the inner surface of the right front wheel 3RF.

As illustrated in FIG. 7, the working vehicle 1 includes a third detector 77. The third detector 77 detects the height of the vehicle body 2 that is the distance of the vehicle body 2 from the ground surface. Hereinafter, the third detector 77 may be referred to as the "height detector". As the third detector 77, for example, the above-mentioned optical sensor and sonic sensor may be used. The height of the vehicle body 2 detected by the third detector 77 is the distance between the ground surface and the lower surface of the vehicle body 2. Specifically, the height of the vehicle body 2 detected by the third detector 77 is the distance between the ground surface and the lowermost portion (bottom) of the vehicle body 2 (see height HA in FIG. 2 and FIG. 4 as an example).

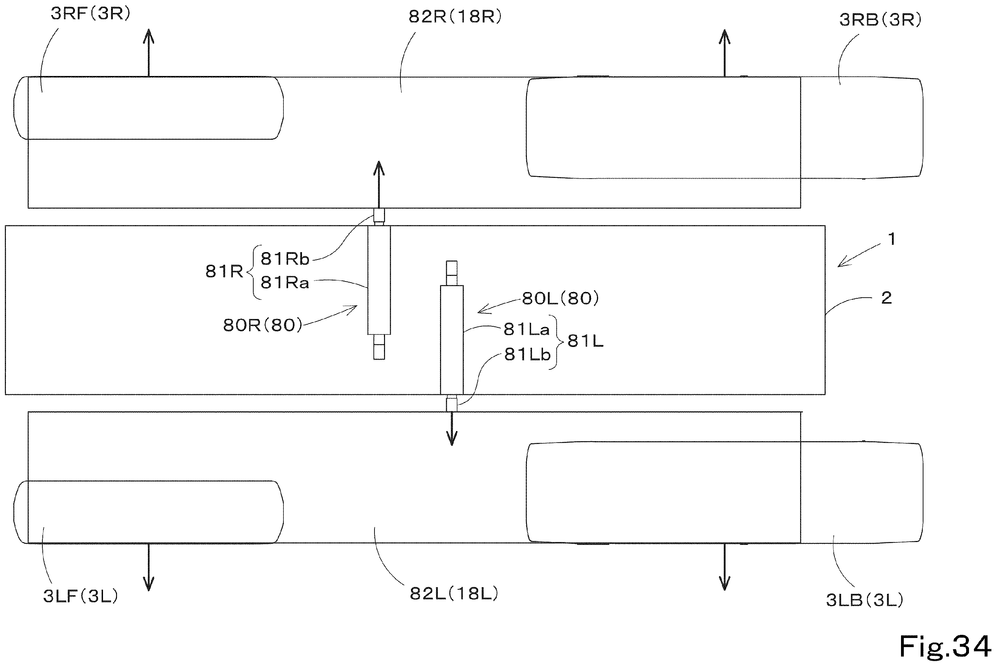

As illustrated in FIG. 7, the working vehicle 1 includes a distance changing mechanism 80. The distance changing mechanism 80 changes the distance between the left traveling device 3L and the right traveling device 3R. As illustrated in FIG. 6 and FIG. 34, the distance changing mechanism 80 includes a left changing mechanism 80L to change the position of the left traveling device 3L in the lateral direction, and a right changing mechanism 80R to change the position of the right traveling device 3R in the lateral direction. Note that FIG. 34 is a simplified figure of FIG. 6.

As illustrated in FIG. 6 and FIG. 34, the left changing mechanism 80L includes a left cylinder 81L to move the left traveling device 3L leftward or rightward. The left cylinder 81L moves the left front wheel 3LF and the left rear wheel 3LB leftward or rightward. The left front wheel 3LF and the left rear wheel 3LB are connected by a left coupler 82L. Thus, the left cylinder 81L can move the left front wheel 3LF and the left rear wheel 3LB integrally leftward or rightward by moving the left coupler 82L leftward or rightward.

As illustrated in FIG. 6 and FIG. 34, the right changing mechanism 80R includes a right cylinder 81R to move the right traveling device 3R leftward or rightward. The right cylinder 81R moves the right front wheel 3RF and the right rear wheel 3RB leftward or rightward. The right front wheel 3RF and the right rear wheel 3RB are connected by a right coupler 82R. Thus, the right cylinder 81R can move the right front wheel 3RF and the right rear wheel 3RB integrally leftward or rightward by moving the right coupler 82R leftward or rightward.

The lower end of the left coupler 82L is at a position higher than the lower end of the left traveling device 3L. The lower end of the right coupler 82R is at a position higher than the lower end of the right traveling device 3R. Thus, unlike the left traveling device 3L and the right traveling device 3R, the left coupler 82L and the right coupler 82R are not in contact with the ground. The left coupler 82L and the right coupler 82R are located at a predetermined height to prevent contact with a ridge and a crop.

In the present embodiment, the left coupler 82L is the left frame 18L of the frame structure 18. The right coupler 82R is the right frame 18R of the frame structure 18. The left front wheel 3LF is rotatably attached to the first left frame 19L (see FIG. 9) of the left frame 18L via the above-described first drive assembly 41 and the like. The left rear wheel 3LB is rotatably attached to the first left frame 19L of the left frame 18L at the time of travel via the above-described third drive assembly 43 and the like.

The right front wheel 3RF is rotatably attached to the first right frame 21R (see FIG. 9) of the right frame 18R via the above-described second drive assembly 42 and the like. The right rear wheel 3RB is rotatably attached to the first right frame 21R of the right frame 18R at the time of travel via the above-described fourth drive assembly 44 and the like.

Thus, the left front wheel 3LF and the left rear wheel 3LB (that is, the left traveling device 3L) can be moved with the left frame 18L in the lateral direction. Also, the right front wheel 3RF and the right rear wheel 3RB (that is, the right traveling device 3R) can be moved with the right frame 18R in the lateral direction.

The right cylinder 81R and the left cylinder 81L each include a hydraulic cylinder. The hydraulic cylinders included in the right cylinder 81R and the left cylinder 81L are actuated (extended and retracted) by the hydraulic fluid supplied from a hydraulic pump driven by the above-described working motor 6.

As illustrated in FIG. 6 and FIG. 34, the left cylinder 81L includes a cylinder tube 81La attached to the vehicle body 2, and a rod 81Lb which projects from the cylinder tube 81La and extends leftward. The left coupler 82L is connected to the distal end of the rod 81Lb of the left cylinder 81L. When the rod 81Lb of the left cylinder 81L is extended leftward, the left coupler 82L is moved leftward, and the left front wheel 3LF and the left rear wheel 3LB are integrally moved leftward. When the rod 81Lb of the left cylinder 81L is retracted rightward, the left coupler 82L is moved rightward, and the left front wheel 3LF and the left rear wheel 3LB are integrally moved rightward.

As illustrated in FIG. 6 and FIG. 34, the right cylinder 81R includes a cylinder tube 81Ra attached to the vehicle body 2, and a rod 81Rb which projects from the cylinder tube 81Ra and extends rightward. The right coupler 82R is connected to the distal end of the rod 81Rb of the right cylinder 81R. When the rod 81Rb of the right cylinder 81R is extended rightward, the right coupler 82R is moved rightward, and the right front wheel 3RF and the right rear wheel 3RB are integrally moved rightward. When the rod 81Rb of the right cylinder 81R is retracted leftward, the right coupler 82R is moved leftward, and the right front wheel 3RF and the right rear wheel 3RB are integrally moved leftward.

As described above, the position of the left front wheel 3LF and the left rear wheel 3LB (that is, the left traveling device 3L) in the lateral direction can be changed by actuating (extending or retracting) the left cylinder 81L. Also, the position of the right front wheel 3RF and the right rear wheel 3RB (that is, the right traveling device 3R) in the lateral direction can be changed by actuating (extending or retracting) the right cylinder 81R. Therefore, the distance between the left traveling device 3L and the right traveling device 3R can be changed by actuating one or both of the left cylinder 81L and the right cylinder 81R.

When the distance between the left traveling device 3L and the right traveling device 3R is changed, the respective rods of the left cylinder 81L and the right cylinder 81R are preferably moved (extended or retracted) by the same distance in opposite directions to each other. However, when the distance between the left traveling device 3L and the right traveling device 3R is changed, the respective rods of the left cylinder 81L and the right cylinder 81R may be moved by different distances in opposite directions to each other, or the respective rods of the left cylinder 81L and the right cylinder 81R may be moved by different distances in the same direction.

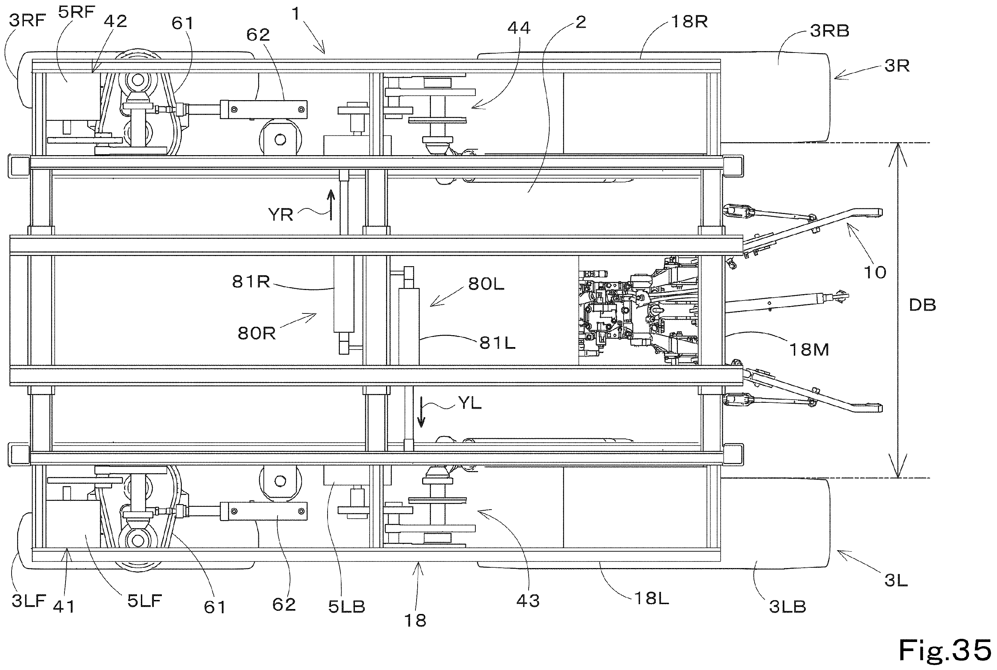

FIG. 6 and FIG. 34 illustrate a state where the rods of the left cylinder 81L and the right cylinder 81R are retracted. In this state, the distance DB (see FIG. 6) between the left traveling device 3L and the right traveling device 3R is short. In this state, the left traveling device 3L (the left front wheel 3LF and the left rear wheel 3LB) and the right traveling device 3R (the right front wheel 3RF and the right rear wheel 3RB) are moved in opposite directions to each other (see arrows in FIG. 34) by extending the rods of the left cylinder 81L and the right cylinder 81R (see arrows YL, YR in FIG. 35). Thus, as illustrated in FIG. 35, the distance DB (see FIG. 6) between the left traveling device 3L and the right traveling device 3R can be increased.

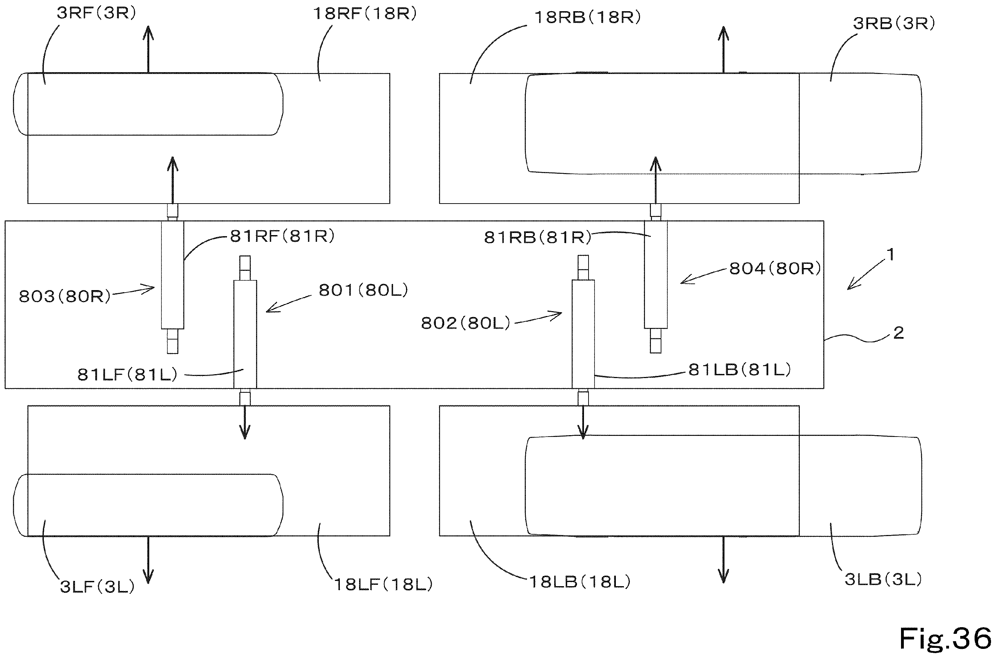

FIG. 36 illustrates a variation of the distance changing mechanism 80. As illustrated in FIG. 36, the distance changing mechanism 80 may include a first changing mechanism 801 to change the position of the left front wheel 3LF in the lateral direction, a second changing mechanism 802 to change the position of the left rear wheel 3LB in the lateral direction, a third changing mechanism 803 to change the position of the right front wheel 3RF in the lateral direction, and a fourth changing mechanism 804 to change the position of the right rear wheel 3RB in the lateral direction. In this case, the left changing mechanism 80L includes the first changing mechanism 801 and the second changing mechanism 802. The right changing mechanism 80R includes the third changing mechanism 803 and the fourth changing mechanism 804.

In this case, the left cylinder 81L includes a left front cylinder 81LF to move the left front wheel 3LF leftward or rightward, and a left rear cylinder 81LB to move the left rear wheel 3LB leftward or rightward. The right cylinder 81R includes a right front cylinder 81RF to move the right front wheel 3RF leftward or rightward, and a right rear cylinder 81RB to move the right rear wheel 3RB leftward or rightward.

In this case, the left coupler 82L to connect the left front wheel 3LF and the left rear wheel 3LB is not provided, and thus the left front wheel 3LF and the left rear wheel 3LB are not connected. The left frame 18L is divided into two front and rear members, the left front wheel 3LF is attached to a front left frame 18LF, and the left rear wheel 3LB is attached to a rear left frame 18LB. Thus, the left front wheel 3LF and the left rear wheel 3LB can be moved in the lateral direction independently from each other.

The right coupler 82R to connect the right front wheel 3RF and the right rear wheel 3RB is not provided, and thus the right front wheel 3RF and the right rear wheel 3RB are not connected. The right frame 18R is divided into two front and rear members, the right front wheel 3RF is attached to a front right frame 18RF, and the right rear wheel 3RB is attached to a rear right frame 18RB. Thus, the right front wheel 3RF and the right rear wheel 3RB can be moved in the lateral direction independently from each other.

The first changing mechanism 801, the second changing mechanism 802, the third changing mechanism 803 and the fourth changing mechanism 804 can be driven independently. Specifically, the left front cylinder 81LF, the left rear cylinder 81LB, the right front cylinder 81RF and the right rear cylinder 81RB can be actuated independently. Thus, the position of the left front wheel 3LF in the lateral direction, the position of the left rear wheel 3LB in the lateral direction, the position of the right front wheel 3RF in the lateral direction, and the position of the right rear wheel 3RB in the lateral direction can be changed independently.

The arrows in FIG. 36 illustrate a state where the position of the left front wheel 3LF in the lateral direction, the position of the left rear wheel 3LB in the lateral direction, the position of the right front wheel 3RF in the lateral direction, and the position of the right rear wheel 3RB in the lateral direction are changed independently by extending the respective rods of the left front cylinder 81LF, the left rear cylinder 81LB, the right front cylinder 81RF and the right rear cylinder 81RB.

The operation of the distance changing mechanism 80 is controlled by the controller 15. As illustrated in FIG. 7, the controller 15 includes a distance changing control unit 15B. The distance changing mechanism 80 changes the distance between the left traveling device 3L and the right traveling device 3R such that the distance between the left traveling device 3L and the right traveling device 3R corresponds to the result of detection by the first detector 70. In the present embodiment, the distance changing control unit 15B changes the distance between the left traveling device 3L and the right traveling device 3R by actuating the distance changing mechanism 80 based on detection results from the first detector 70 and the second detector 75.

The change operation by the distance changing mechanism 80 is performed by the distance changing control unit 15B controlling the distance changing mechanism 80. Hereinafter, an example of the operation of the distance changing mechanism 80 will be described. The operation of the distance changing mechanism 80 in the following description is performed by the distance changing control unit 15B controlling the distance changing mechanism 80 based on detection results from the first detector 70 and/or the second detector 75. In short, the below-described operation of the distance changing mechanism 80 is controlled by the distance changing control unit 15B.

For example, when the first detector 70 detects the width of a travelable road, the distance changing mechanism 80 changes the distance between the left traveling device 3L and the right traveling device 3R such that the changed distance between the left traveling device 3L and the right traveling device 3R corresponds to the width of the travelable road. Specifically, when the first detector 70 detects the width of a travelable road, the distance changing mechanism 80 changes the distance between the left traveling device 3L and the right traveling device 3R such that the changed distance between the left traveling device 3L and the right traveling device 3R reaches the width of the travelable road or exceeds the width of the travelable road (that is, the changed distance is greater than or equal to the width of the travelable road).

As a specific example, when the first detector 70 detects the width of a ridge path, the distance changing mechanism 80 changes the distance between the left traveling device 3L and the right traveling device 3R such that the changed distance between the left traveling device 3L and the right traveling device 3R corresponds to the width of the ridge. Specifically, the distance between the left traveling device 3L and the right traveling device 3R is changed such that the traveling device 3 can pass the detected ridge at the time of travel of the vehicle body 2. In other words, the distance changing mechanism 80 changes the distance between the left traveling device 3L and the right traveling device 3R such that the changed distance between the left traveling device 3L and the right traveling device 3R reaches the width of the ridge or exceeds the width of the ridge (that is, the changed distance is greater than or equal to the width of the ridge).

When the first detector 70 detects the width of an obstacle, the distance changing mechanism 80 changes the distance between the left traveling device 3L and the right traveling device 3R such that the traveling device 3 can pass the detected obstacle at the time of travel of the vehicle body 2. In other words, the distance changing mechanism 80 changes the distance between the left traveling device 3L and the right traveling device 3R such that the changed distance between the left traveling device 3L and the right traveling device 3R reaches the width of the obstacle or exceeds the width of the obstacle (that is, the changed distance is greater than or equal to the width of the obstacle).

The distance changing mechanism 80 can actuate the left changing mechanism 80L and the right changing mechanism 80R independently based on detection results from the first detector 70. In the present embodiment, the distance changing mechanism 80 can actuate the left changing mechanism 80L and the right changing mechanism 80R independently based on detection results from the first detector 70 and detection results from the second detector 75. Thus, the distance changing mechanism 80 can actuate only the left changing mechanism 80L, or can actuate only the right changing mechanism 80R, or can actuate both the left changing mechanism 80L and the right changing mechanism 80R.

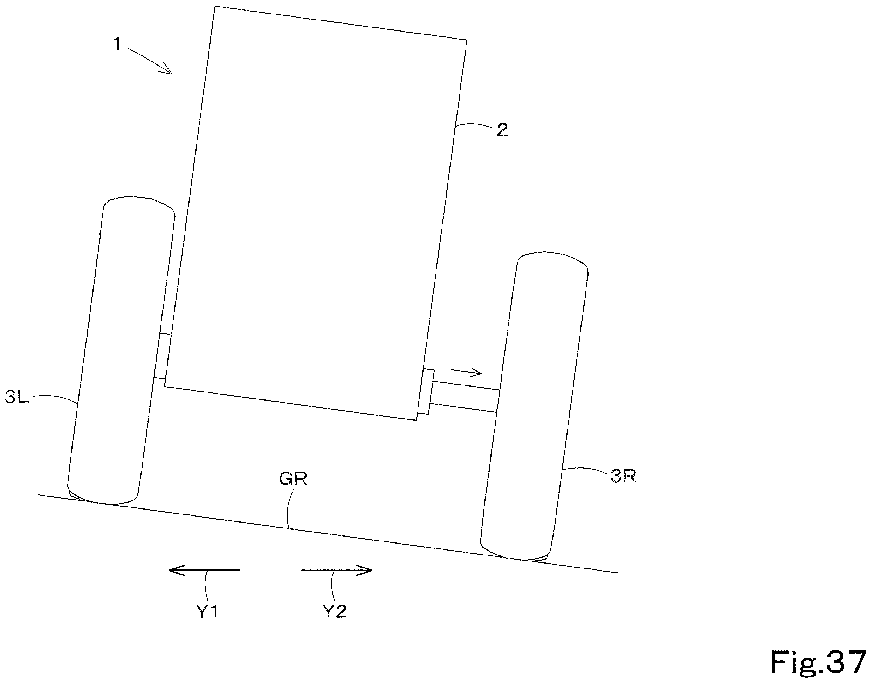

As described above, the distance changing mechanism 80 can actuate the left changing mechanism 80L and the right changing mechanism 80R independently based on detection results from the first detector 70. Thus, the distance changing mechanism 80 can move away, from the widthwise center of the vehicle body 2, the lower traveling device between the left traveling device 3L and the right traveling device 3R based on the inclination of the ground surface in the lateral direction detected by the first detector 70. FIG. 37 schematically illustrates the operation of the distance changing mechanism 80. For example, when inclination with the right side lower than the left side on the ground surface GR is detected by the first detector 70, the distance changing mechanism 80 moves away, from the widthwise center of the vehicle body 2, the right traveling device 3R which is lower between the left traveling device 3L and the right traveling device 3R. Consequently, the vehicle body 2 can be stabilized on an inclined surface.

The distance changing mechanism 80 changes the distance between the left traveling device 3L and the right traveling device 3R by actuating both or one of the left changing mechanism 80L and the right changing mechanism 80R of the distance changing mechanism 80. When the left changing mechanism 80L is actuated, the rod of the left cylinder 81L is extended or retracted, and the position of the left traveling device 3L in the lateral direction is changed. When the right changing mechanism 80R is actuated, the rod of the right cylinder 81R is extended or retracted, and the position of the right traveling device 3R in the lateral direction is changed. The distance between the left traveling device 3L and the right traveling device 3R is changed by changing the positions of both or one of the left traveling device 3L and the right traveling device 3R in the lateral direction. Preferably, the distance changing control unit 15B changes the positions of both the left traveling device 3L and the right traveling device 3R in the lateral direction by the same distance in opposite directions to each other.

The second detector 75 can detect the distance between the left traveling device 3L and the right traveling device 3R by detecting the amount of extension or retraction of each of the left changing mechanism 80L and the right changing mechanism 80R. Specifically, the second detector 75 can detect the distance between the left traveling device 3L and the right traveling device 3R by detecting the amount of extension or retraction of the rod of the left cylinder 81L of the left changing mechanism 80L, and the amount of extension or retraction of the rod of the right cylinder 81R of the right changing mechanism 80R.

In this case, information is pre-stored in the storage of the controller 15, the information including a relationship between the amount of extension or retraction of the rod of the left cylinder 81L and the position of the left traveling device 3L, a relationship between the amount of extension or retraction of the rod of the right cylinder 81R and the position of the right traveling device 3R, and a relationship between "the positions of the left traveling device 3L and the right traveling device 3R" and "the distance between the left traveling device 3L and the right traveling device 3R". The second detector 75 detects the amount of extension or retraction of each of the rods of the left cylinder 81L and the right cylinder 81R, and detects the distance between the left traveling device 3L and the right traveling device 3R based on the result of the detection and the information stored in the storage.

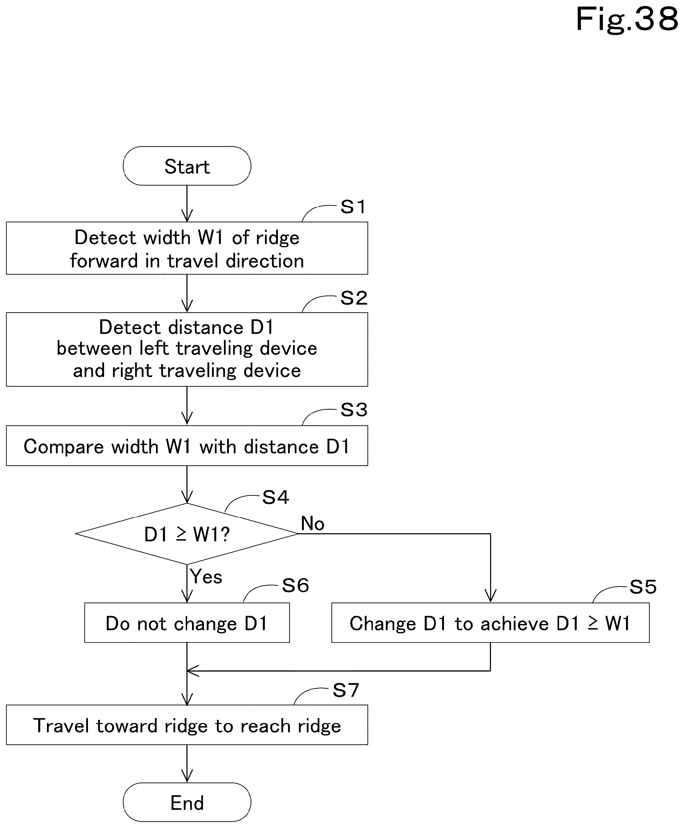

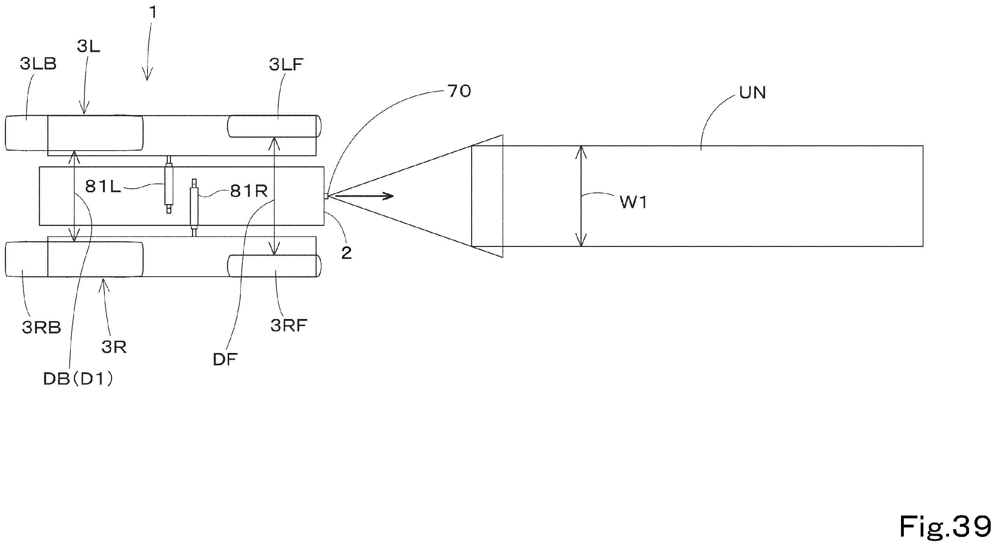

FIG. 38 is a flowchart illustrating an example (first example) of the operation of the distance changing mechanism 80 controlled by the distance changing control unit 15B. Hereinafter, an example of the operation of the distance changing mechanism 80 controlled by the distance changing control unit 15B will be described based on FIG. 38. Note that here, as an example, the case will be described where the "road information" of the "situation in the surrounding area of the vehicle body 2" detected by the first detector 70 is the "width of a ridge on the ground surface", and a ridge UN with a width to be detected is located in front of the vehicle body 2 in the direction of travel of the vehicle body 2 of the working vehicle 1 (see FIG. 39).

In this case, the first detector 70 detects, as the road information of the situation in the surrounding area of the vehicle body 2, the width W1 of the ridge UN in front of the vehicle body 2 in the travel direction of the vehicle body 2 (S1). The width W1 of the ridge UN to be detected may be the width of the hem (lower end) of the ridge UN, may be the width of the upper surface (upper end) of the ridge UN, or may be the width at the height between the lower end and the upper end of the ridge UN.

When the width W1 of the ridge UN is detected and the first detector 70 is a camera, the camera 71 captures an image of the ridge UN in front of the vehicle body 2, and generates an image signal. The calculator 73 detects the width W1 of the ridge UN based on the generated image signal. Meanwhile, the second detector 75 detects the distance D1 between the left traveling device 3L and the right traveling device 3R (S2). In the example illustrated in FIG. 39, the distance DB between the left rear wheel 3LB and the right rear wheel 3RB is smaller than the distance DF between the left front wheel 3LF and the right front wheel 3RF, and thus the distance DB is detected as the distance D1 (the same applies to the following example). The width W1 and the distance D1 are detected before the vehicle body 2 reaches the ridge UN. The time of detection of the width W1 and the time of detection of the distance D1 may be the same or either one may precede the other.

The distance changing control unit 15B compares the width W1 of the ridge detected by the first detector 70 with the distance D1 detected by the second detector 75 (S3). The distance changing control unit 15B changes the distance D1 by actuating the distance changing mechanism 80 based on the comparison result such that the distance D1 corresponds to the width W1 of the ridge. The distance D1 is changed by the distance changing mechanism 80 during or before travel of the vehicle body 2 to reach an area above the ridge UN located in front of the vehicle body 2 in the travel direction.

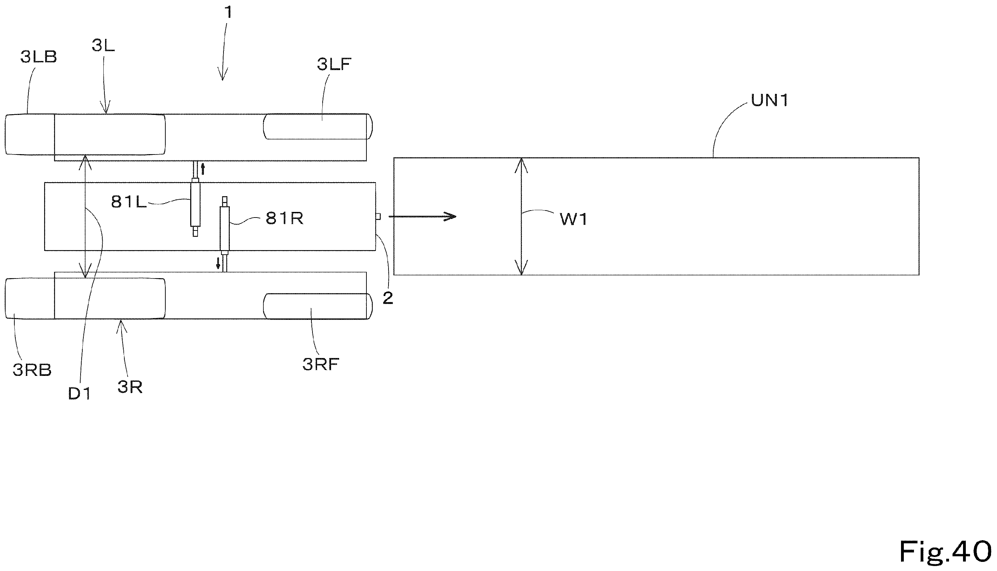

When the comparison result is D1 < W1 (No in S4), the distance changing mechanism 80 changes the distance D1 to achieve D1 ≥ W1 (S5). Specifically, the distance D1 is expanded by extending the rods of the left cylinder 81L and the right cylinder 81R (see FIG. 40). When the comparison result is D1 ≥ W1 (Yes in S4), the distance changing mechanism 80 does not change the distance D1 (S6). In a state where the distance D1 is changed (S5) or a state where the distance D1 is not changed (S6), the working vehicle 1 travels toward the ridge UN to reach the ridge UN (S7).

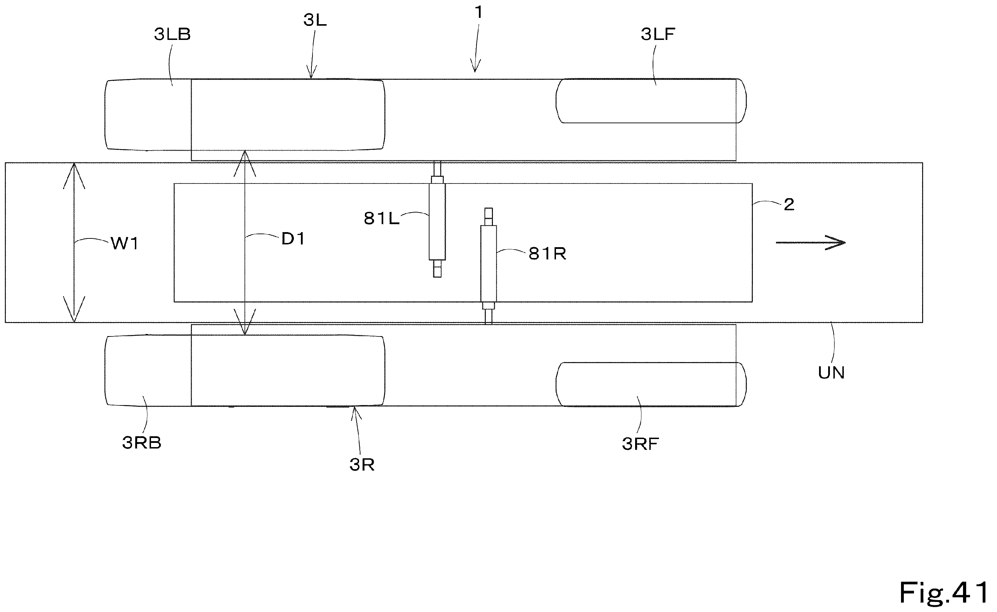

Even if the width W1 of the ridge UN is larger or smaller than the distance D1 between the left traveling device 3L and the right traveling device 3R, when the working vehicle 1 reaches the ridge UN, D1 ≥ W1 is satisfied by the above-described control operation. Thus, the working vehicle 1 can perform the work while traveling with the ridge UN located between the left traveling device 3L and the right traveling device 3R (see FIG. 41).

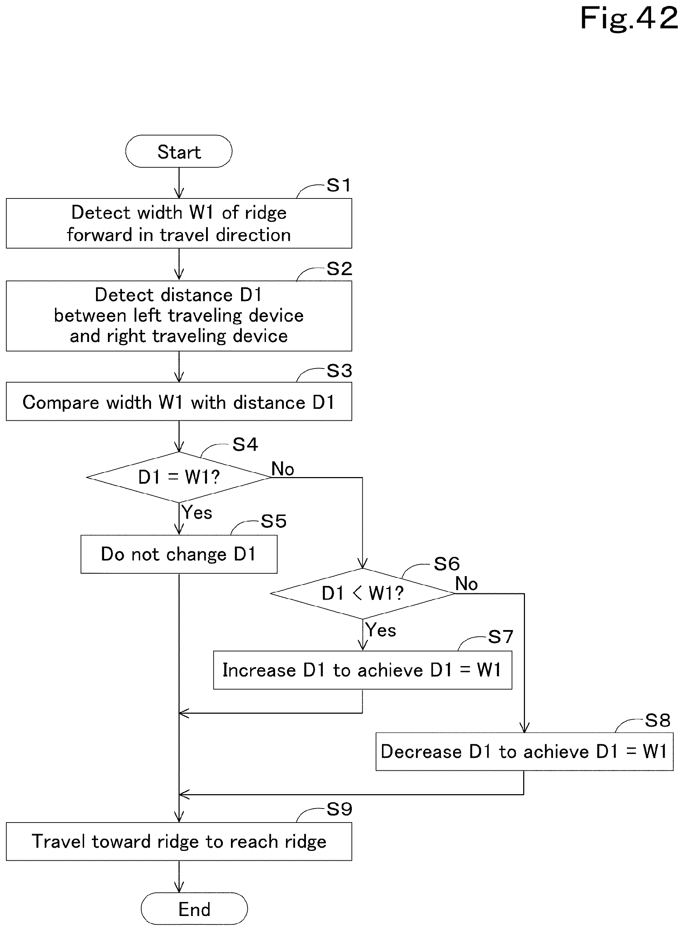

FIG. 42 is a flowchart illustrating a variation of the first example. In the variation, the first step (S1) to the third step (S3) of the operation of the distance changing mechanism 80 are the same as the operation in the first example, and the fourth step (S4) and subsequent steps are different from the operation in the first example.

In the fourth step (S4), the distance changing control unit 15B determines whether the width W1 of the ridge is the same as the distance D1 between the left traveling device 3L and the right traveling device 3R (S4). When D1 = W1 (Yes in S4), the distance changing mechanism 80 does not change the distance D1 (S5). When D1 = W1 is not the case (No in S4), it is determined whether D1 < W1 (S6). When D1 < W1 (Yes in S6), the distance changing mechanism 80 changes (expands) the distance D1 to achieve D1 = W1 (S7). Specifically, the distance D1 is expanded by extending the rods of the left cylinder 81L and the right cylinder 81R. When D1 > W1 (No in S6), the distance changing mechanism 80 changes (reduces) the distance D1 to achieve D1 = W1 (S8). Specifically, the distance D1 is reduced by retracting the rods of the left cylinder 81L and the right cylinder 81R. In a state where the distance D1 is changed (expanded or reduced) (S7, S8) or a state where the distance D1 is not changed (S5), the working vehicle 1 travels toward the ridge UN to reach the ridge UN (S9).

Even if the width W1 of the ridge UN is larger or smaller than the distance D1 between the left traveling device 3L and the right traveling device 3R, when the working vehicle 1 reaches the ridge UN, D1 = W1 is satisfied by the above-described control operation. Thus, the working vehicle 1 can perform the work while traveling with the ridge UN located between the left traveling device 3L and the right traveling device 3R in a state where the distance D1 is not too narrow and not too wide i.e., has an appropriate length with respect to the width W1 of the ridge.

When a working device is attached to the mount 10 and the wheels 30 overlap the position of the working device in the front-rear direction, the shortest value of the distance D1 between the left traveling device 3L and the right traveling device 3R is set larger than the width of the working device. Thus, when the distance D1 is changed, interference between the wheels 30 and the working device can be prevented.

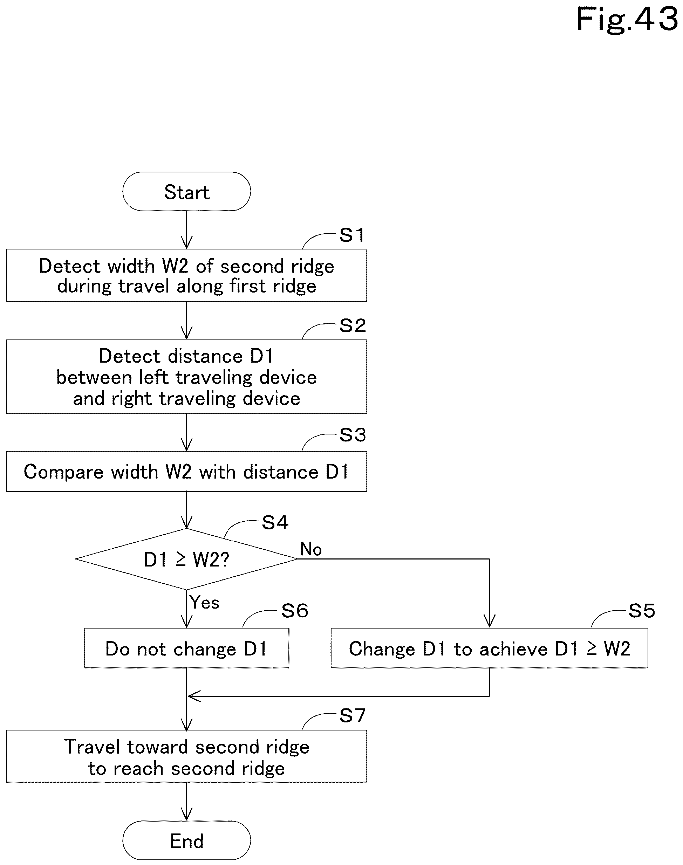

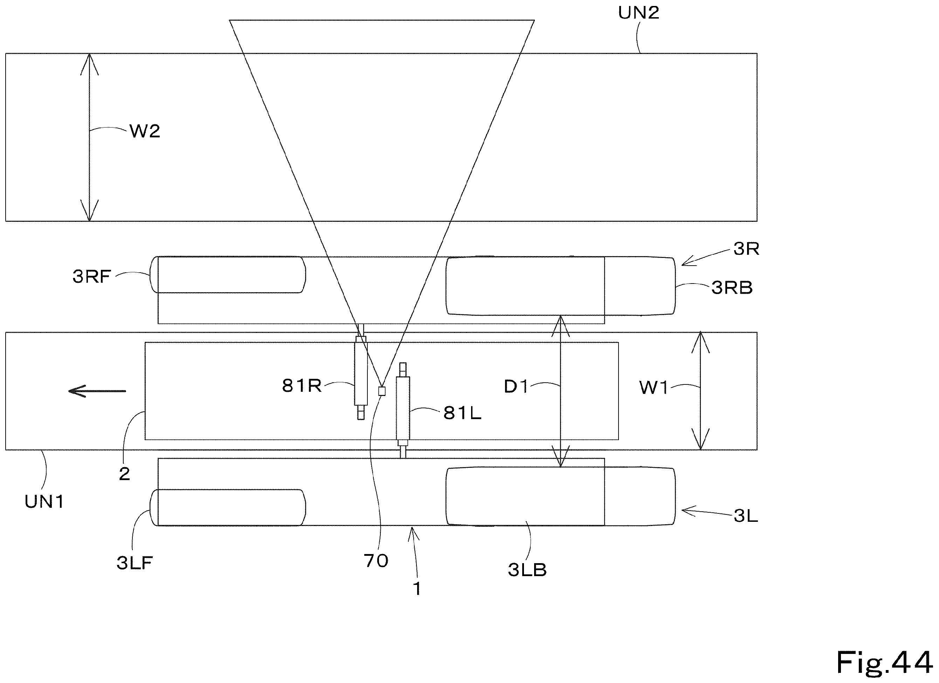

FIG. 43 is a flowchart illustrating another example (second example) of the operation of the distance changing mechanism 80 controlled by the distance changing control unit 15B. Hereinafter, another example (second example) of the operation of the distance changing mechanism 80 controlled by the distance changing control unit 15B will be described based on FIG. 43. Note that here, as an example, the case will be described where the "road information" of the "situation in the surrounding area of the vehicle body 2" detected by the first detector 70 is the "width of a ridge on the ground surface", and a ridge (second ridge UN2) with a width to be detected is located laterally (leftward or rightward) of the vehicle body 2 of the working vehicle 1 (see FIG. 44).

In this case, when the vehicle body 2 travels along the first ridge UN1 (passes the first ridge UN1), the first detector 70 detects a width W2 of a second ridge UN2 adjacent to the first ridge UN1 (S1). The second ridge UN2 is the ridge on which the work is performed subsequently after the work on the first ridge UN1 is finished. The second ridge UN2 can be detected by providing the first detector 70 at a position higher than the second ridge UN2. When the first detector 70 is a camera, the camera 71 captures an image of the second ridge UN2 laterally of the vehicle body 2, and generates an image signal. The calculator 73 detects the width W2 of the second ridge UN2 based on the generated image signal. Meanwhile, the second detector 75 detects the distance D1 between the left traveling device 3L and the right traveling device 3R (S2). The width W2 and the distance D1 are detected before the vehicle body 2 reaches the second ridge UN2. The time of detection of the width W2 and the time of detection of the distance D1 may be the same or either one may precede the other.

The distance changing control unit 15B compares the width W2 of the ridge detected by the first detector 70 with the distance D1 detected by the second detector 75 (S3). The distance changing control unit 15B changes the distance D1 by actuating the distance changing mechanism 80 based on the comparison result such that the distance D1 corresponds to the width W2 of the ridge.

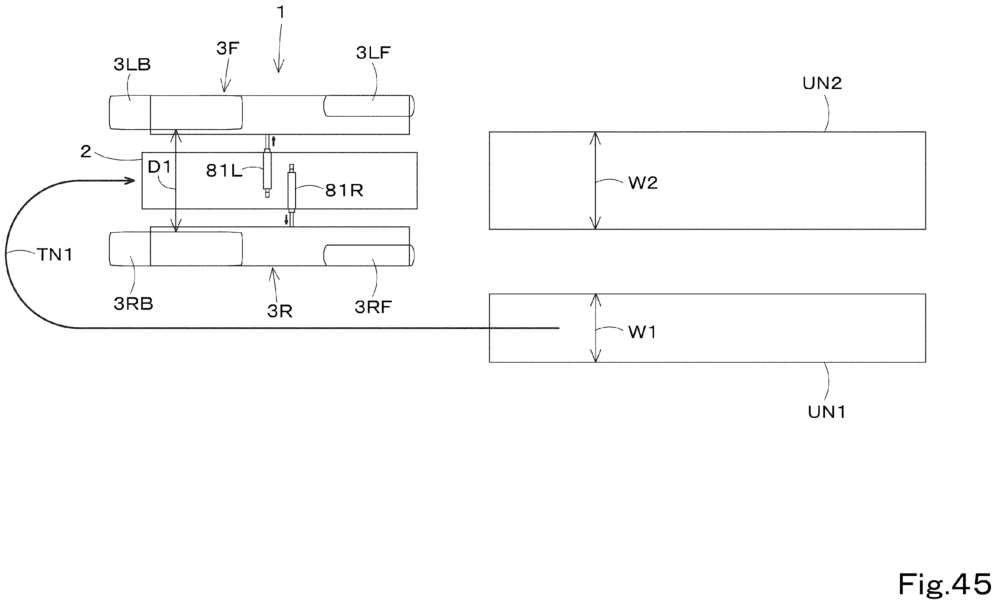

When the comparison result is D1 < W2 (No in S4), the distance changing mechanism 80 changes the distance D1 to achieve D1 ≥ W2 (S5). Specifically, the distance D1 is expanded by extending the rods of the left cylinder 81L and the right cylinder 81R. When the comparison result is D1 ≥ W1 (Yes in S4), the distance changing mechanism 80 does not change the distance D1 (S6). The distance changing mechanism 80 changes the distance D1 while the vehicle body 2 which has finished traveling along the first ridge is turning to start traveling along the second ridge UN2 (see an arrow TN1 in FIG. 45). However, the distance changing mechanism 80 may change the distance D1 not during turning, but while the vehicle body 2 is traveling straight before turning or after turning. In a state where the distance D1 is changed (S5) or a state where the distance D1 is not changed (S6), the working vehicle 1 travels toward the second ridge UN2 to reach the second ridge UN2 (S7).

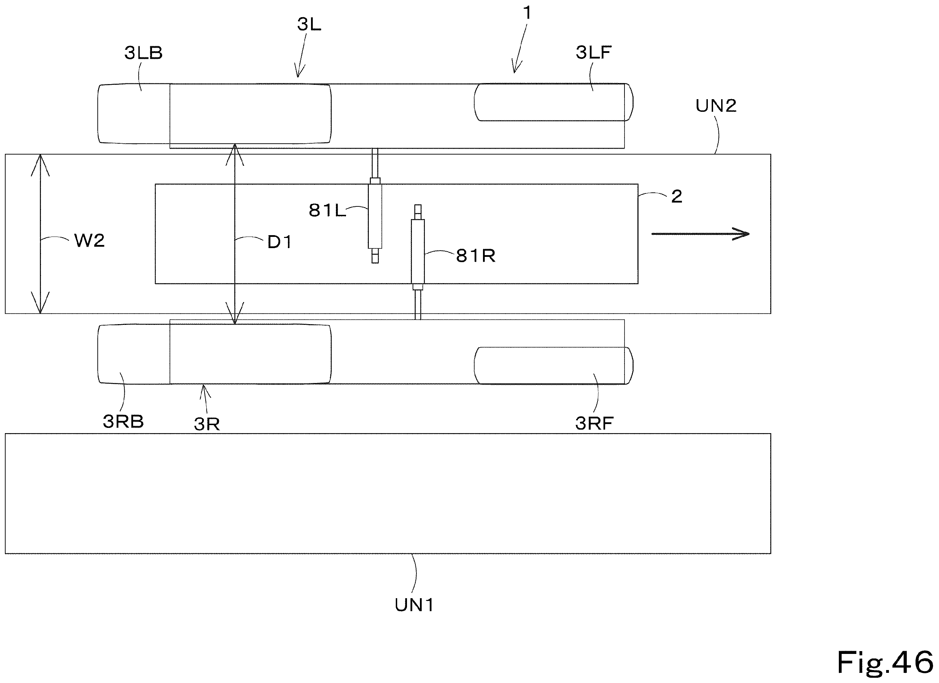

Even if the width W2 of the second ridge UN2 is larger or smaller than the distance D1 between the left traveling device 3L and the right traveling device 3R, when the working vehicle 1 reaches the second ridge UN2, D1 ≥ W2 is satisfied by the above-described control operation. Thus, the working vehicle 1 can perform the work while traveling with the second ridge UN2 located between the left traveling device 3L and the right traveling device 3R (see FIG. 46).

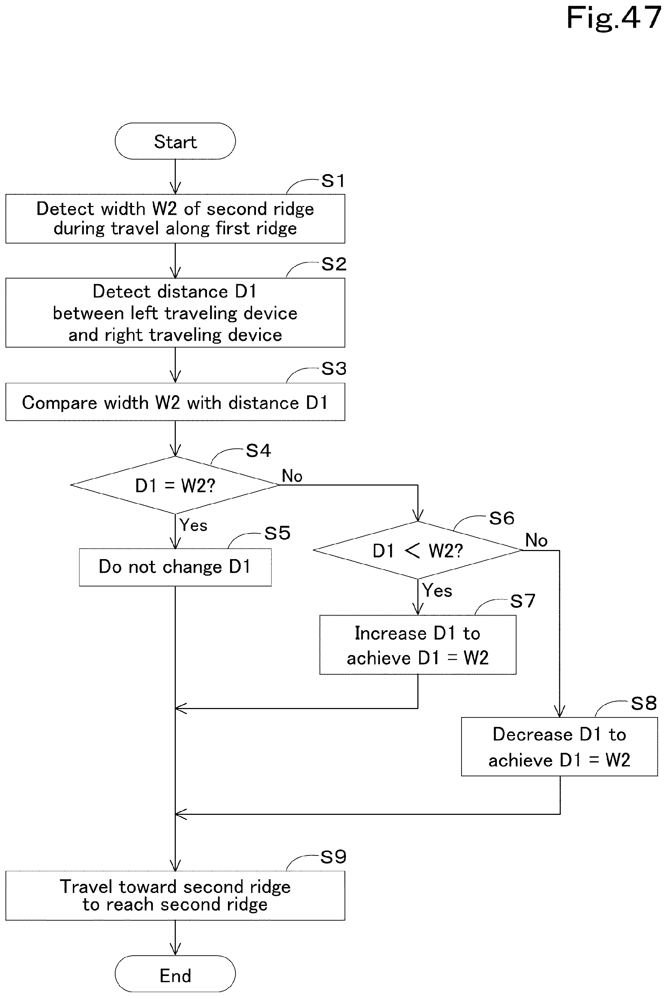

FIG. 47 is a flowchart illustrating a variation of the second example. In the variation, the first step (S1) to the third step (S3) of the operation of the distance changing mechanism 80 are the same as the operation in the second example, and the fourth step (S4) and subsequent steps are different from the operation in the second example.

In the fourth step (S4), the distance changing control unit 15B determines whether the width W2 of the ridge is the same as the distance D1 between the left traveling device 3L and the right traveling device 3R (S4). When D1 = W2 (Yes in S4), the distance changing mechanism 80 does not change the distance D1 (S5). When D1 = W2 is not the case (No in S4), it is determined whether D1 < W2 (S6). When D1 < W2 (Yes in S6), the distance changing mechanism 80 changes (expands) the distance D1 to achieve D1 = W2 (S7). Specifically, the distance D1 is expanded by extending the rods of the left cylinder 81L and the right cylinder 81R. When D1 > W2 (No in S6), the distance changing mechanism 80 changes (reduces) the distance D1 to achieve D1 = W2 (S8). Specifically, the distance D1 is reduced by retracting the rods of the left cylinder 81L and the right cylinder 81R. In a state where the distance D1 is changed (expanded or reduced) (S7, S8) or a state where the distance D1 is not changed (S5), the working vehicle 1 travels toward the ridge UN to reach the second ridge UN2 (S9).

Even if the width W2 of the second ridge UN2 is larger or smaller than the distance D1 between the left traveling device 3L and the right traveling device 3R, when the working vehicle 1 reaches the second ridge UN2, D1 = W2 is satisfied by the above-described control operation. Thus, the working vehicle 1 can perform the work while traveling with the second ridge UN2 located between the left traveling device 3L and the right traveling device 3R in a state where the distance D1 is not too narrow and not too wide, i.e., has an appropriate length with respect to the width W2 of the second ridge.

The above-described operation in the first example (including the variation) and operation in the second example (including the variation) can be combined and performed. In this case, when the vehicle body 2 travels along the first ridge UN1 of crop, as in the first example, the control operation illustrated in FIG. 38 or FIG. 42 is performed. Specifically, the first detector 70 detects the width W1 of the first ridge in front of the vehicle body 2 in the travel direction, and the second detector 75 detects the distance D1 between the left traveling device 3L and the right traveling device 3R before the vehicle body 2 reaches the crop. Next, the distance changing control unit 15B compares the width W1 with the distance D1, and changes the distance D1 by actuating the distance changing mechanism 80 to achieve D1 ≥ W1 or D1 = W1 based on the comparison result.

Next, when the vehicle body 2 travels along the first ridge UN1, as in the second example, the control operation illustrated in FIG. 43 or FIG. 47 is performed. Specifically, the first detector 70 detects the width W2 of a second ridge UN2 adjacent to the first ridge UN1, and the second detector 75 detects the distance D1 between the left traveling device 3L and the right traveling device 3R. Next, the distance changing control unit 15B compares the width W2 with the distance D1, and changes the distance D1 by actuating the distance changing mechanism 80 to achieve D1 ≥ W2 or D1 = W2 based on the comparison result.

When there are three or more ridges of crop, it is only necessary to repeat the above-described operation when the vehicle body 2 travels along the second ridge UN2. Specifically, it is only necessary to detect the width of a third ridge adjacent to the second ridge, compare the width of the third ridge with the distance D1 between the left traveling device 3L and the right traveling device 3R, and change the distance D1 by actuating the distance changing mechanism 80 based on the comparison result.

In the above-described control operation in the first example (including the variation) and the control operation in the second example (including the variation), the first detector 70 may detect, in addition to the width of the ridge or in substitution for the width of the ridge, either one or both of the interval (pitch of paths) between a path and a path between ridges, and the width of a path between ridges. In this case, the distance changing control unit 15B changes the distance D1 by actuating the distance changing mechanism 80 such that the left traveling device 3L or the right traveling device 3R can travel with the ridge located therebetween in consideration of the interval (pitch of paths) between a path and a path between ridges and/or the width of a path between ridges.

As described above, the distance D1 can be changed according to the width of the ridge by actuating the distance changing mechanism 80 to change the distance D1 based on detection results from the first detector 70 and the second detector 75. Thus, even if the width of the ridge is wider than an expected width (standard width), the working vehicle 1 can travel with the ridge reliably located between the left traveling device 3L and the right traveling device 3R.

In the above-described example (see FIG. 38 to FIG. 45), the vehicle body 2 can travel by the control of the automatic driving control unit 15A such that the center of the vehicle body 2 in the width direction (lateral direction) matches the center of the ridge in the width direction. Thus, when the distance changing mechanism 80 changes the distance D1 to achieve D1 ≥ W1 (or D1 = W1) or D1 ≥ W2 (or D1 = W2), the working vehicle 1 can travel with the ridge reliably located between the left traveling device 3L and the right traveling device 3R.

The distance changing control unit 15B may change the distance D1 between the left traveling device 3L and the right traveling device 3R by actuating the distance changing mechanism 80 before the working vehicle 1 starts working or while the working vehicle 1 is working. When the distance D1 is changed while the working vehicle 1 is working, the distance D1 can be changed (finely adjusted) as appropriate according to the situation of the work.

As illustrated in FIG. 7, the working vehicle 1 includes the height changing mechanism 90. The height changing mechanism 90 changes the height of the vehicle body 2 that is the distance of the vehicle body 2 from the ground surface. The height changing mechanism 90 raises and lowers the vehicle body 2 which is the housing frame 2 in which the battery 7 is housed. The height changing mechanism 90 raises and lowers the vehicle body 2 at a location between the left traveling device 3L and the right traveling device 3R in the width direction (lateral direction) of the vehicle body 2. The height changing mechanism 90 changes the height of the vehicle body 2 that is the distance of the vehicle body 2 from the ground surface by raising or lowering the frame structure 18 attached to the vehicle body 2.

As illustrated in FIG. 1 to FIG. 3 and the like, the height changing mechanism 90 includes the lifting cylinder 91. The lifting cylinder 91 raises and lowers the movable frame 32 (the second left frame 20L, the second right frame 22R, and the lateral frame 18M) of the frame structure 18. The vehicle body 2 is raised or lowered by raising or lowering the movable frame 32. Thus, the vehicle body 2 can be raised or lowered by driving the lifting cylinder 91.

The lifting cylinder 91 includes a hydraulic cylinder. The lifting cylinder 91 includes a rod 91a which extends and retracts in the up-down direction, and a cylinder tube 91b to which hydraulic fluid to drive the rod 91a is supplied (see FIG. 1, FIG. 30 and the like). The frame structure 18 is connected to the distal end of the rod 91a. The lifting cylinder 91 includes a left lifting cylinder 91L and a right lifting cylinder 91R. The left lifting cylinder 91L is located leftward of the vehicle body 2. The right lifting cylinder 91R is located rightward of the vehicle body 2.

As illustrated in FIG. 1 and FIG. 2, a rod 91La of the left lifting cylinder 91L is connected to the second left frame 20L of the frame structure 18. Specifically, the rod 91La of the left lifting cylinder 91L is connected to a left plate 99L fixed to the second left frame 20L. Thus, the left lifting cylinder 91L can raise and lower the second left frame 20L which is a movable frame of the left frame 18L by extension and retraction of the rod 91La.

As illustrated in FIG. 1 and FIG. 3, a rod 91Ra of the right lifting cylinder 91R is connected to the second right frame 22R of the frame structure 18. Specifically, the rod 91Ra of the right lifting cylinder 91R is connected to a right plate 99R fixed to the second right frame 22R. Thus, the right lifting cylinder 91R can raise and lower the second right frame 22R which is a movable frame of the right frame 18R by extension and retraction of the rod 91Ra.

A cylinder tube 91Lb of the left lifting cylinder 91L is attached to a bracket (not illustrated) fixed to the first left frame 19L. A cylinder tube 91Rb of the right lifting cylinder 91R is attached to a bracket (not illustrated) fixed to the first right frame 21R. As illustrated in FIG. 2 and FIG. 3, the lower end (the lower end of the cylinder tubes 91Lb and 91Rb) of the lifting cylinder (the left lifting cylinder 91L and the right lifting cylinder 91R) is located at a height which is the same or substantially the same as the height of the vehicle body 2 that is the distance of the vehicle body 2 from the ground surface when the vehicle body 2 is at the height (the later-described first height) located between the left traveling device 3L and the right traveling device 3R.

However, the lower end of the lifting cylinder (the left lifting cylinder 91L and the right lifting cylinder 91R) need not be located at a height which is the same or substantially the same as the height of the vehicle body 2 that is the distance of the vehicle body 2 from the ground surface when the vehicle body 2 is at the height (the later-described first height) located between the left traveling device 3L and the right traveling device 3R.

In the present embodiment, the lower end (the lower end of the cylinder tubes 91Lb and 91Rb) of the lifting cylinder (the left lifting cylinder 91L and the right lifting cylinder 91R) is located at a height which is slightly higher than the height HA of the vehicle body 2 that is the distance of the vehicle body 2 from the ground surface when the vehicle body 2 is at the height located between the left traveling device 3L and the right traveling device 3R (see FIG. 2).

When the rod 91La of the left lifting cylinder 91L is extended or retracted, the second left frame 20L is raised or lowered. When the rod 91Ra of the right lifting cylinder 91R is extended or retracted, the second right frame 22R is raised or lowered. Thus, the frame structure 18 can be raised and lowered with the extension or retraction of the rod 91a of the lifting cylinder 91 (the left lifting cylinder 91L and the right lifting cylinder 91R). The vehicle body 2 is attached to the frame structure 18, and thus the vehicle body 2 can be raised and lowered with the extension and retraction of the rod 91a of the lifting cylinder 91. The height of the vehicle body 2 that is the distance of the vehicle body 2 from the ground surface can be changed by raising or lowering the vehicle body 2.

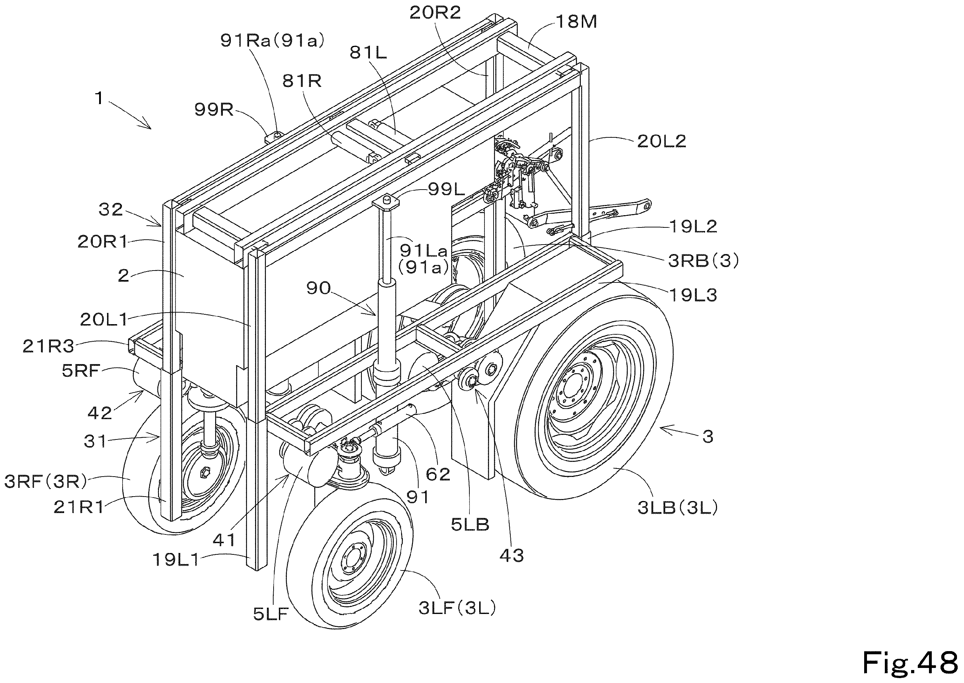

FIG. 48, FIG. 49, and FIG. 50 illustrate a state where the rod 91a of the lifting cylinder 91 is extended to raise the vehicle body 2. With the rise of the vehicle body 2, the mount 10 provided in the vehicle body 2 also rises. Thus, the working device attached to the mount 10 can be lifted by raising the vehicle body 2.

The operation of the height changing mechanism 90 is controlled by the controller 15. As illustrated in FIG. 7, the controller 15 includes a height changing control unit 15C. The height changing control unit 15C transmits a control signal to the height changing mechanism 90 by executing a program stored in the storage by the arithmetic unit of the controller 15. The height changing mechanism 90 is driven based on the control signal transmitted from the height changing control unit 15C. That is, the height changing mechanism 90 changes the height of the vehicle body 2 by being driven based on the control by the controller 15.

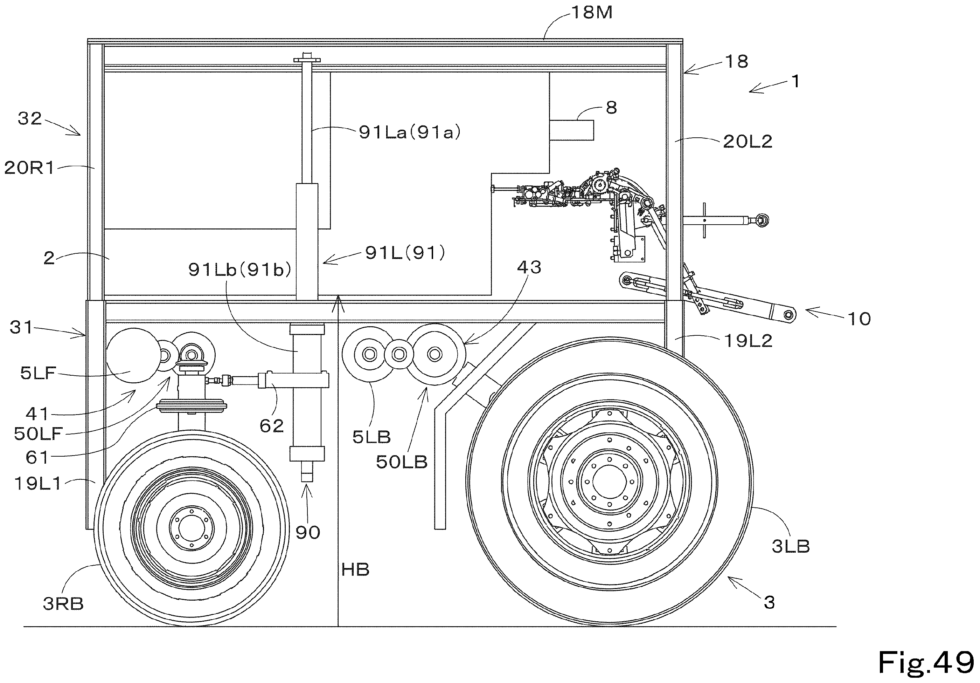

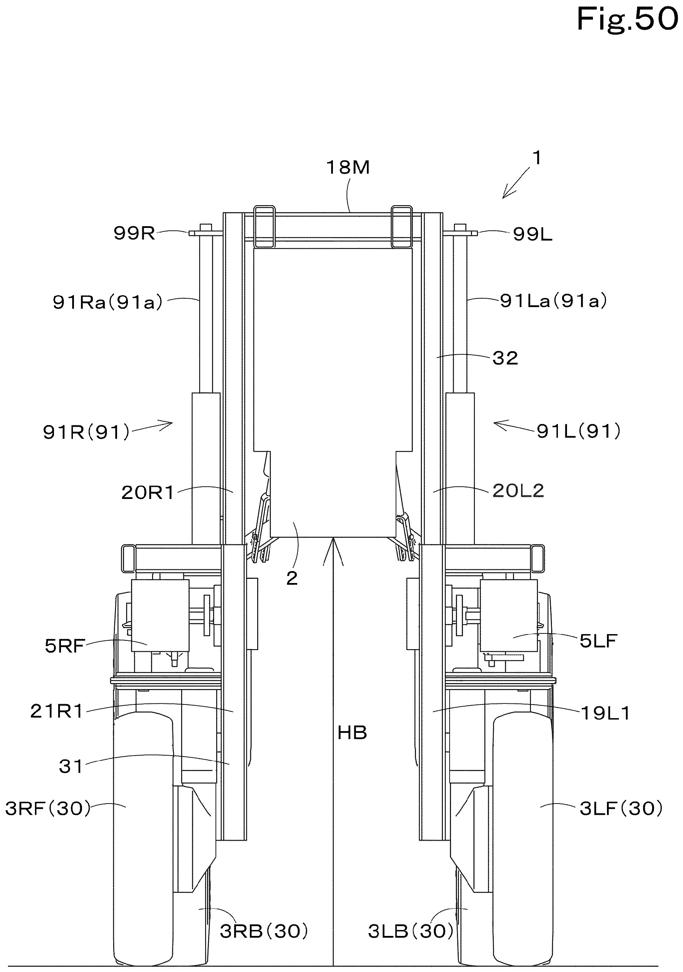

The height changing mechanism 90 can change the height of the vehicle body 2 to any height in a preset height range. Specifically, the height changing mechanism 90 can change the height of the vehicle body 2 to any height between a first height HA (see FIG. 2 and FIG. 4) and a second height HB (see FIG. 49 and FIG. 50) higher than the first height HA. That is, the preset height range is the range between the first height HA and the second height HB. In this embodiment, the height of the vehicle body 2 when the rod of the lifting cylinder 91 is the shortest is the first height HA, and the height of the vehicle body 2 when the rod of the lifting cylinder 91 is the longest is the second height HB.

The first height HA is the lower limit (lower limit height) of the height of the vehicle body 2, which is changeable by the height changing mechanism 90. The second height HB is the upper limit (upper limit height) of the height of the vehicle body 2, which is changeable by the height changing mechanism 90. The height changing mechanism 90 can change the height of the vehicle body 2 to the first height HA as the lower limit height, the second height HB as the upper limit height, and any height (intermediate height) between the upper limit height and the lower limit height.

The height changing mechanism 90 can change the height of the vehicle body 2 according to the work performed by a working device, for example. Specifically, the height changing mechanism 90 can change the height of the vehicle body 2 according to the work performed by the working device attached to the mount 10. The height of the working device attached to the mount 10 is also changed by changing the height of the vehicle body 2.

As illustrated in FIG. 7, the working vehicle 1 includes a recognizer 100 to recognize the working device attached to the mount 10. The recognizer 100 recognizes the type of the working device attached to the mount 10. For example, when a working device is attached to the mount 10, the recognizer 100 receives an identification signal transmitted from the working device, and recognizes the working device attached to the mount 10 based on the identification signal. The recognizer 100 may be a camera that captures an image of the working device attached to the mount 10. In this case, the recognizer 100 recognizes the working device attached to the mount 10 based on the image of the working device captured by the camera.

The height changing mechanism 90 can change the height of the vehicle body 2 according to the working device recognized by the recognizer 100. In other words, the height changing mechanism 90 can change the height of the vehicle body 2 according to the working device attached to the mount 10. For example, when the working device attached to the mount 10 is a first working device, the working vehicle 1 sets the height of the vehicle body 2 to a first work height, and when the working device attached to the mount 10 is a second working device, the working vehicle 1 sets the height of the vehicle body 2 to a second work height.

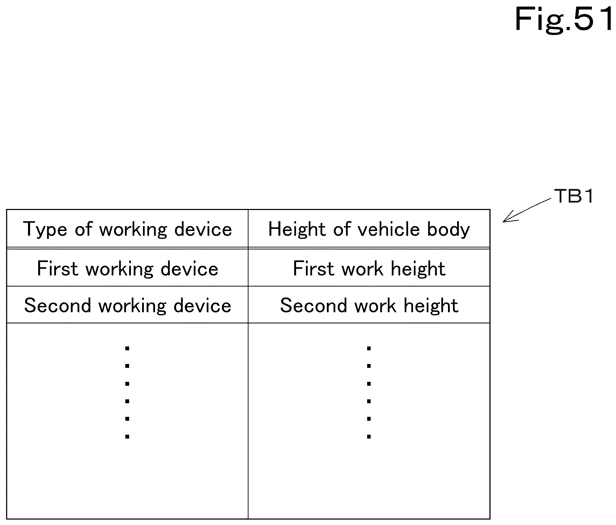

The storage of the controller 15 stores a first correspondence table TB1 (see FIG. 51) that associates the type of working device with the height of the vehicle body 2. The number of combinations of the type of working device and the height of the vehicle body 2 included in the first correspondence table TB1 is not limited to a specific number, and may be any number greater than 1.

When the working device recognized by the recognizer 100 is the first working device, the height changing control unit 15C reads, from the first correspondence table TB1, the height (the first work height) of the vehicle body 2 corresponding to the first working device, and transmits a control signal to drive the lifting cylinder 91 of the height changing mechanism 90 such that the height of the vehicle body 2 is set to the read height (the first work height). When the working device recognized by the recognizer 100 is the second working device, the height changing control unit 15C reads, from the first correspondence table TB1, the height (the second work height) of the vehicle body 2 corresponding to the second working device, and transmits a control signal to drive the lifting cylinder 91 of the height changing mechanism 90 such that the height of the vehicle body 2 is set to the read height (the second work height).

The first work height and the second work height are one of the first height (the lower limit height), the second height (the upper limit height), and any height (intermediate height) between the upper limit height and the lower limit height. The first work height and the second work height are normally different heights, but may be the same height.

The first work height is set to a height suitable for performing work by the first working device. The first work height is suitable, for example, when the working device (e.g., a cultivator) has a work position located below the vehicle body 2. When the first working device is a cultivator to cultivate an agricultural field, the first work height is set to a height suitable for performing work (cultivation) by the cultivator (the first working device).

When the first working device is a working device such as a cultivator, with the work position located below the vehicle body 2, the height of the working device is also reduced by lowering the height of the vehicle body 2 (to the first work height), and thus work (such as cultivation work) can be smoothly performed.

When the first working device is a device, such as a cultivator, which is attached to the mount 10 of the vehicle body 2 and towed, the work performed by the working device is for the ground surface (ground work) and is often a heavy load work. Thus, when the first working device is a device to be towed, the vehicle body 2 can perform the work in a stable state by lowering the height of the vehicle body 2 (to the first work height) to lower the center of gravity position of the working vehicle 1.

The second work height is set to a height suitable for performing work by the second working device. The second work height is suitable, for example, when the working device (e.g., a spreader) has a work position located above the vehicle body 2. When the second working device is a spreader to spread a liquid agricultural chemical, the second work height is set to a height suitable for performing work (liquid agricultural chemical spreading) by the spreader (the second working device). In this case, the second work height is set to a height higher than the first work height.

When the second working device is a working device, such as a spreader, with the work position located above the vehicle body 2, work (such as spreading work) can be smoothly performed by raising the height of the vehicle body 2 (to the second work height).

As described above, the working vehicle 1 includes the height changing mechanism 90, and thus can change the height of the vehicle body 2 according to multiple types of working devices with different work heights. Thus, one working vehicle can perform the work using multiple types of working devices with different work heights.

The height changing mechanism 90 can change the height of the vehicle body 2 in response to indication of the height by the manual operator 101 (see FIG. 7). The manual operator 101 is a device capable of performing an operation of indicating the height of the vehicle body 2. The manual operator 101 is a device (external equipment) outside the working vehicle 1, and is configured to communicate with the controller 15 in a wireless or wired manner. The manual operator 101 is, for example, a portable device such as a remote control device, a tablet, a smartphone, or a PDA.

The manual operator 101 includes an input unit to receive an indicated height of the vehicle body 2. The input unit is, e.g., a push-button, a rotary dial, and a touch panel. When an operator inputs the height to be indicated via the input unit of the manual operator 101, the indicated input height is transmitted to the controller 15. The controller 15 transmits a control signal to drive the lifting cylinder 91 of the height changing mechanism 90 such that the height of the vehicle body 2 is set to the indicated height. Thus, the height of the vehicle body 2 is changed to the height indicated by the manual operator 101.

The height changing mechanism 90 can change the height of the vehicle body 2 according to the height of the crop planted in the ground surface on which the working vehicle 1 travels. For example, when the crop planted in the ground surface is the first crop, the height changing mechanism 90 sets the height of the vehicle body 2 higher than or equal to the first height (the lower limit height). The storage of the controller 15 stores the height (hereinafter referred to as the "first crop correspondence height") of the vehicle body 2 corresponding to the first crop. The first crop correspondence height is a predetermined height of the vehicle body 2 that corresponds to the first crop, and is higher than or equal to the first height (the lower limit height).

Note that the area where the first crop is planted may include weeds shorter than the first crop (weeds shorter than or equal to the first height HA), the weeds being mixed in the first crop. Even in this case, the height changing mechanism 90 sets the height of the vehicle body 2 higher than or equal to the first height (the lower limit height) without being affected by the presence of the shorter weeds.

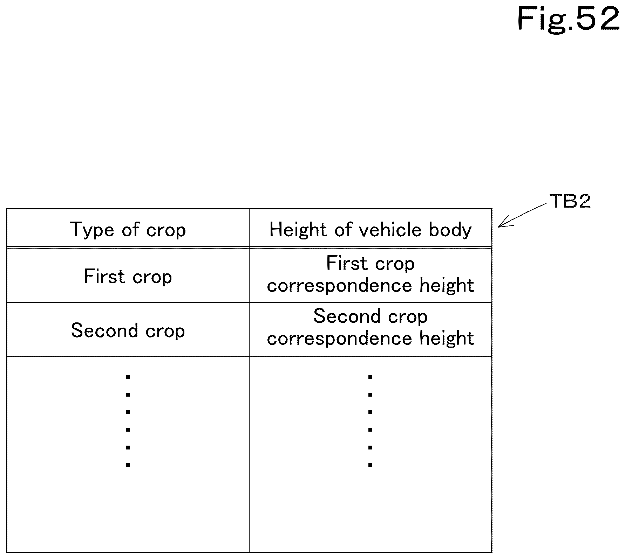

The above-described first detector 70 can detect that the crop planted in the ground surface is the first crop. The storage of the controller 15 stores a second correspondence table TB2 (see FIG. 52) that associates the type of crop with the height of the vehicle body 2. The number of combinations of the type of crop and the height of the vehicle body 2 included in the second correspondence table TB2 is not limited to a specific number, and may be any number greater than 1.

The height of the vehicle body 2 associated with the first crop stored in the second correspondence table TB2 is the first crop correspondence height. In the second correspondence table TB2, the first crop correspondence height is set higher than or equal to the height of the first crop or higher than the first crop. The height changing mechanism 90 can change the height of the vehicle body 2 under the condition that the first crop correspondence height is higher than or equal to the height of the first crop or higher than the first crop.

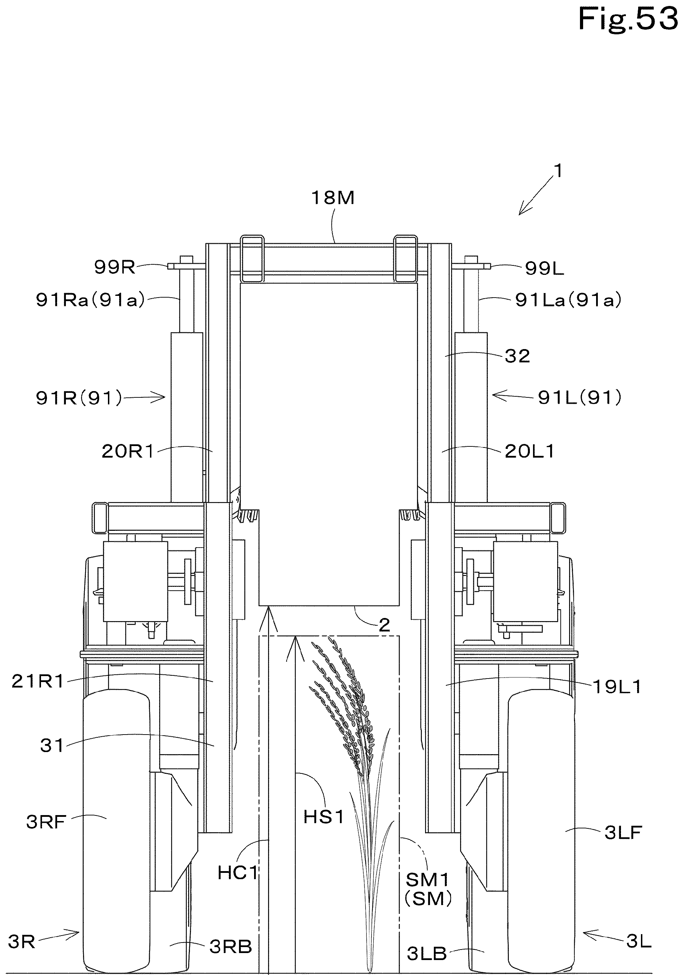

When the crop recognized by the first detector 70 is the first crop, the height changing control unit 15C reads, from the second correspondence table TB2, the height (the first crop correspondence height) of the vehicle body 2 corresponding to the first crop, and transmits a control signal to drive the lifting cylinder 91 of the height changing mechanism 90 such that the height of the vehicle body 2 is set to the read height (the first crop correspondence height). Thus, the height of the vehicle body 2 is changed to the first crop correspondence height. As a result, the height of the vehicle body 2 is set to a height higher than or equal to a first crop SM1 or a height higher than the first crop SM1 (see FIG. 53). Thus, when the vehicle body 2 travels with the first crop SM1 located between the left traveling device 3L and the right traveling device 3R, it is possible to avoid contact of the bottom of the vehicle body 2 with the first crop SM1. In the example illustrated in FIG. 53, the first crop correspondence height HC1 of the vehicle body 2 is higher than the height HS1 of the first crop SM1, but may be the same as the height HS1 of the first crop SM1.

When the crop planted in the ground surface is a second crop which is higher than the first crop, the height changing mechanism 90 sets the height of the vehicle body 2 higher than the first crop correspondence height and lower than or equal to the second height (the upper limit height). The storage of the controller 15 stores the height (hereinafter referred to as the "second crop correspondence height") of the vehicle body 2 corresponding to the second crop. The second crop correspondence height is a predetermined height of the vehicle body 2 that corresponds to the second crop, and is higher than the first crop correspondence height and lower than or equal to the second height (the upper limit height).

In the above-described second correspondence table TB2, the second crop correspondence height is set higher than or equal to the height of the second crop or higher than the second crop. The height changing mechanism 90 can change the height of the vehicle body 2 under the condition that the second crop correspondence height is higher than or equal to the height of the second crop or higher than the second crop.

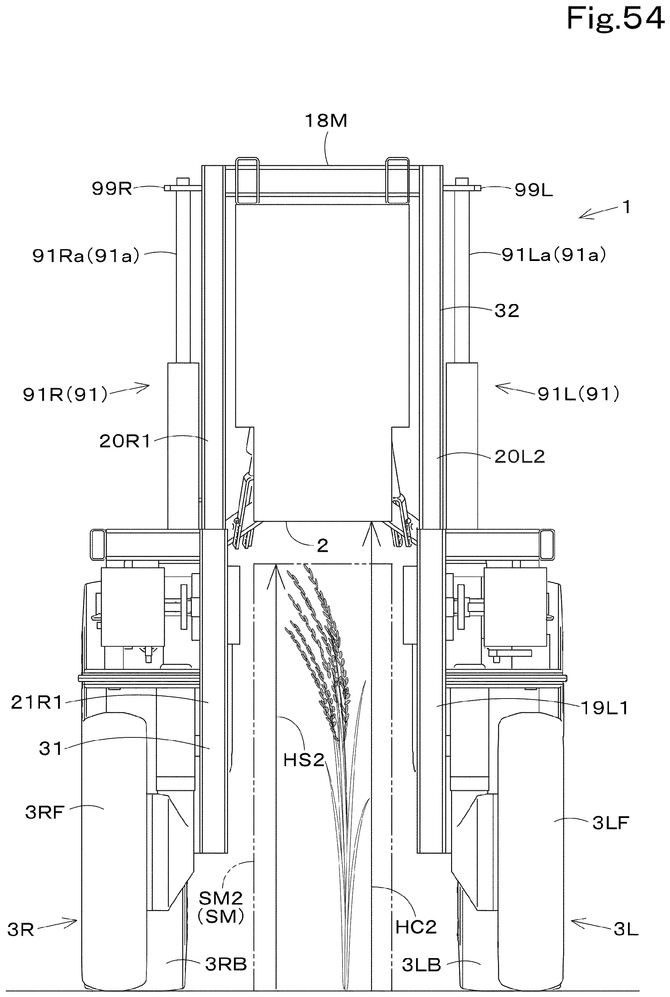

The first detector 70 can detect that the crop planted in the ground surface is the second crop. When the crop detected by the first detector 70 is the second crop, the height changing control unit 15C reads, from the second correspondence table TB2, the height (the second crop correspondence height) of the vehicle body 2 corresponding to the second crop, and transmits a control signal to drive the lifting cylinder 91 of the height changing mechanism 90 such that the height of the vehicle body 2 is set to the read height (the second crop correspondence height). Thus, the height of the vehicle body 2 is changed to the second crop correspondence height. As a result, the height of the vehicle body 2 is set to a height higher than or equal to the height of a second crop SM2 or higher than the second crop SM2 (see FIG. 54). Thus, when the vehicle body 2 travels with the second crop SM2 located between the left traveling device 3L and the right traveling device 3R, it is possible to avoid contact of the bottom of the vehicle body 2 with the second crop SM2. In the example illustrated in FIG. 54, the second crop correspondence height HC2 of the vehicle body 2 is higher than the height HS2 of the second crop SM2, but may be the same as the height HS2 of the second crop SM2.

The height changing mechanism 90 can change the height of the vehicle body 2 to a height at which the position of the vehicle body 2 in the up-down direction overlaps the position of the wheels 30 in the up-down direction, and to a height at which the vehicle body 2 is located higher than the wheels 30 in the up-down direction. In the present embodiment, the height at which the vehicle body 2 overlaps the wheels 30 is the above-mentioned first height (the lower limit height) (see FIG. 4), but may be a height higher than the first height. In the present embodiment, the height at which the vehicle body 2 is upward of the wheels 30 is the above-mentioned second height (the upper limit height) (see FIG. 50), but may be a height lower than the second height.

The height changing mechanism 90 can change the height of the vehicle body 2 to a height at which the position of the vehicle body 2 in the up-down direction overlaps the position of the traveling device 3 in the up-down direction, and to a height at which the vehicle body 2 is located higher the traveling device 3 in the up-down direction. The height at which the vehicle body 2 overlaps the traveling device 3 is such that the vehicle body 2 is interposed between the left traveling device 3L and the right traveling device 3R (see FIG. 4). The height of the vehicle body 2 upward of the traveling device 3 is such that the vehicle body 2 is located above the left traveling device 3L and the right traveling device 3R (see FIG. 50).

In the example illustrated in FIG. 4, the height at which the vehicle body 2 overlaps the traveling device 3 is the same as the above-mentioned height at which the vehicle body 2 overlaps the wheels 30. In short, the height at which the vehicle body 2 overlaps the traveling device 3 is the above-mentioned first height (the lower limit height) in the present embodiment. However, the height at which the vehicle body 2 overlaps the traveling device 3 may be the height of the vehicle body 2 upward of the wheels 30 (that is, the height at which the vehicle body 2 overlaps a portion of the traveling device 3 other than the wheels 30). In other words, the above-mentioned height may be higher than the first height. In the example illustrated in FIG. 50, the height of the vehicle body 2 upward of the traveling device 3 is the second height (the upper limit height), but may be lower than the second height.

As described above, the vehicle body 2 is provided between the left traveling device 3L and the right traveling device 3R. The height changing mechanism 90 changes the height of the vehicle body 2 by raising or lowering the vehicle body 2 between the left traveling device 3L and the right traveling device 3R. In other words, the vehicle body 2 is moved in the up-down direction through the space between the left traveling device 3L and the right traveling device 3R.

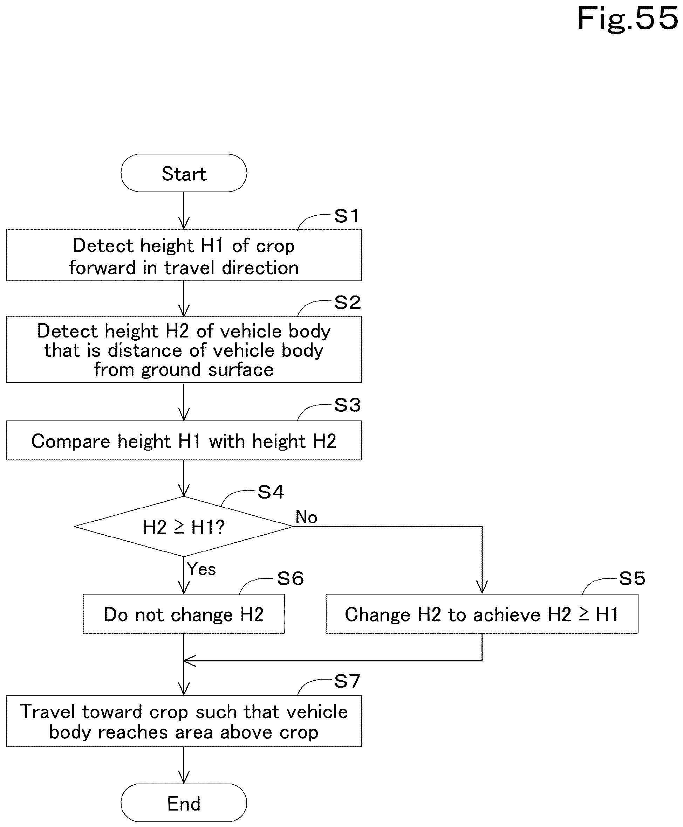

FIG. 55 to FIG. 58 are each a flowchart illustrating an example of the operation of the height changing mechanism 90 controlled by the height changing control unit 15C. Hereinafter, two examples (a first example and a second example) and their variations of the operation of the height changing mechanism 90 controlled by the height changing control unit 15C will be described based on FIG. 55 to FIG. 58. First, the first example of the operation of the height changing mechanism 90 will be described based on FIG. 55.

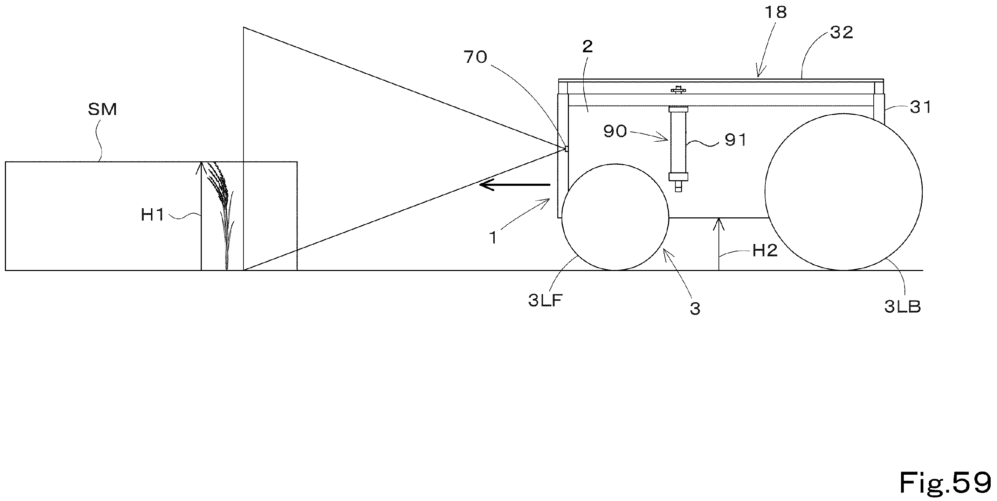

The first example is an example in which the "situation in the surrounding area of the vehicle body 2" detected by the first detector 70 is the "height of crop in front of the vehicle body 2". In this case, the first detector 70 detects the height H1 of crop SM in front of the vehicle body 2 in the travel direction (S1) (see FIG. 59). When the first detector 70 is the camera 71 in this situation, the camera 71 captures an image of the crop SM in front of the vehicle body 2, and generates an image signal. The calculator 73 detects the height H1 of the crop SM based on the generated image signal. The height H1 of the crop SM is detected by the calculator 73, for example, by measuring (estimating) the distance (length) from the ground surface to the upper end of the crop based on the image of the crop.

Meanwhile, the third detector 77 detects the height H2 of the vehicle body 2 that is the distance of the vehicle body 2 from the ground surface (S2). The heights H1 and H2 are detected before the vehicle body 2 reaches the crop. The time of detection of the height H1 and the time of detection of the height H2 may be the same or either one may precede the other. The height changing control unit 15C compares the height H1 of the crop detected by the first detector 70 with the height H2 of the vehicle body 2 detected by the third detector 77 (S3).

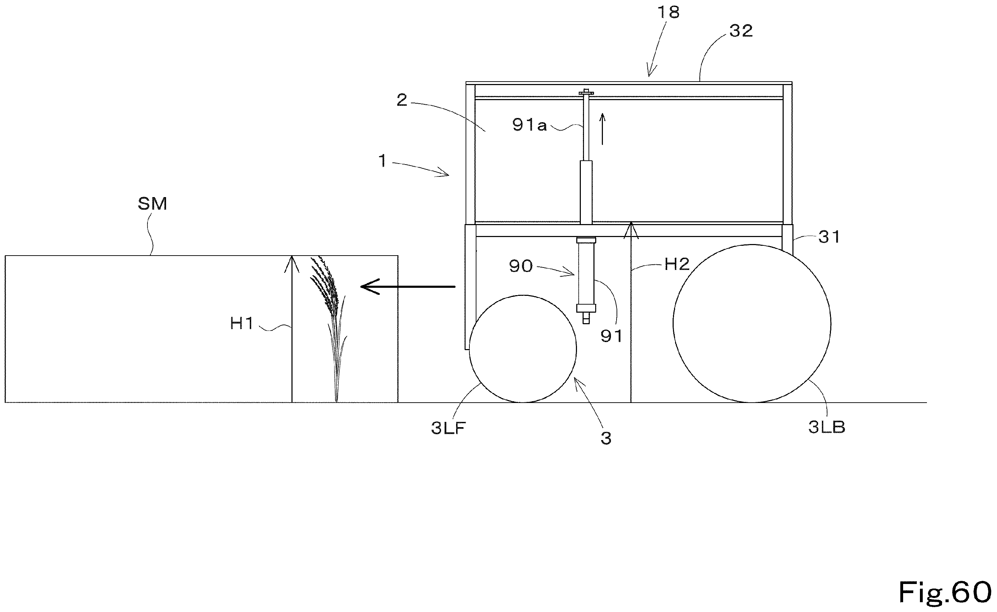

The height changing control unit 15C changes the height H2 of the vehicle body 2 by actuating the height changing mechanism 90 based on the comparison result such that the height H2 is higher than or equal to the height H1 of the crop. When the comparison result is H2 < H1 (No in S4), the height changing mechanism 90 changes the height H2 to achieve H2 ≥ H1 (H2 = H1 or H2 > H1) (S5). Specifically, the height H2 is changed to increase the height of the vehicle body 2 by extending the rod 91a of the lifting cylinder 91 (see FIG. 60). The height H2 is changed by the height changing mechanism 90 during or before travel of the vehicle body 2 to reach an area above the crop SM located in front of the vehicle body 2 in the travel direction. When the comparison result is H2 ≥ H1 (Yes in S4), the height changing mechanism 90 does not change the height H2 (S6). In a state where the height H2 is changed (S5) or a state where the height H2 is not changed (S6), the working vehicle 1 travels toward the crop SM, and the vehicle body 2 reaches an area above the crop SM (S7).

Even if the height H1 of the crop SM is higher than the height H2 of the vehicle body 2, when the vehicle body 2 of the working vehicle 1 reaches an area above the crop SM, H2 ≥ H1 is satisfied by the above-described control operation. Thus, the working vehicle 1 can perform the work on the crop SM while avoiding contact of the vehicle body 2 with the crop SM.

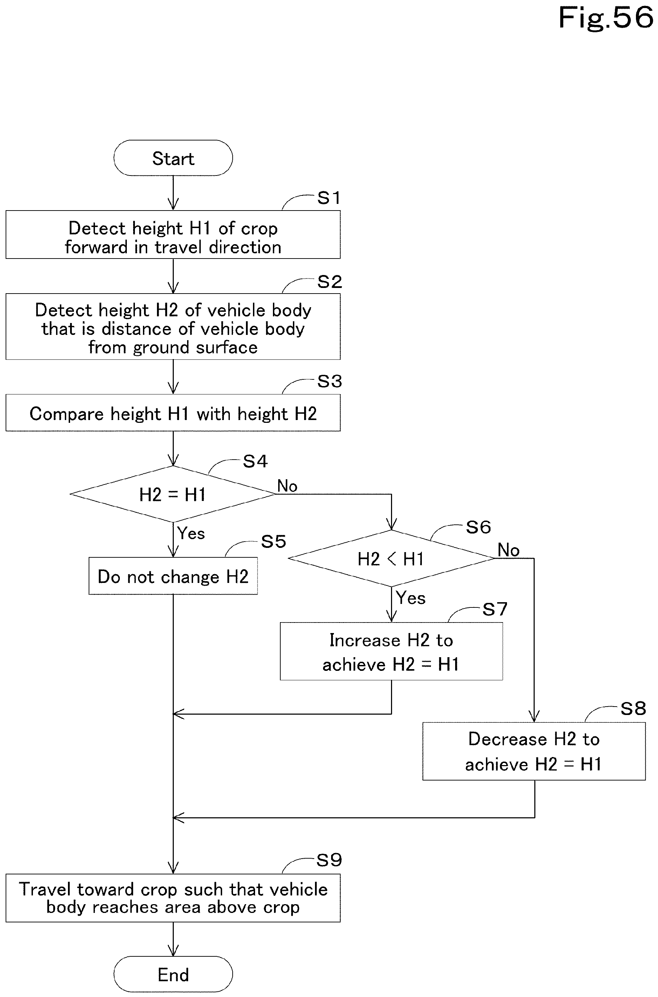

FIG. 56 is a flowchart illustrating a variation of the first example. In the variation, the first step (S1) to the third step (S3) of the operation of the height changing mechanism 90 are the same as the operation in the first example, and the fourth step (S4) and subsequent steps are different from the operation in the first example.

In the fourth step (S4), the height changing control unit 15C determines whether the height H1 of the crop is the same as the height H2 of the vehicle body 2 (S4). When H1 = H2 (Yes in S4), the height changing mechanism 90 does not change the height H2 (S5). When H1 = H2 is not the case (No in S4), the height changing mechanism 90 determines whether H2 < H1 (S6).

When H2 < H1 (Yes in S6), the height changing mechanism 90 changes (increases) the height H2 to achieve H1 = H2 (S7). Specifically, the height H2 is changed to increase the height of the vehicle body 2 by extending the rod 91a of the lifting cylinder 91. When H2 > H1 (No in S6), the height changing mechanism 90 changes (decreases) the height H2 to achieve H1 = H2 (S8). Specifically, the height H2 is changed to decrease the height of the vehicle body 2 by retracting the rod 91a of the lifting cylinder 91. In a state where the height H2 is changed (increased or decreased) (S7, S8) or a state where the height H2 is not changed (S5), the working vehicle 1 travels toward the crop, and the vehicle body 2 reaches an area above the crop SM (S9).

Even if the height H1 of the crop is higher or lower than the height H2 of the vehicle body 2, when the vehicle body 2 of the working vehicle 1 reaches an area above the crop, H1 = H2 is satisfied by the above-described control operation. Thus, the working vehicle 1 can perform the work while traveling in a state where the height H2 of the vehicle body 2 is not too high and not too low, i.e., has an appropriate height with respect to the height H1 of the crop. Thus, the working vehicle 1 can successfully perform the work on the crop.

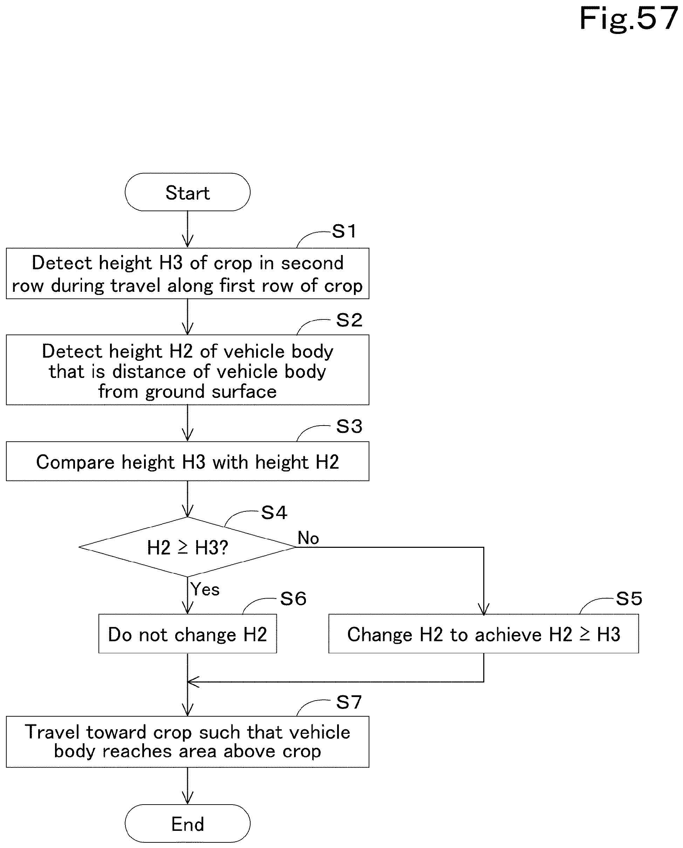

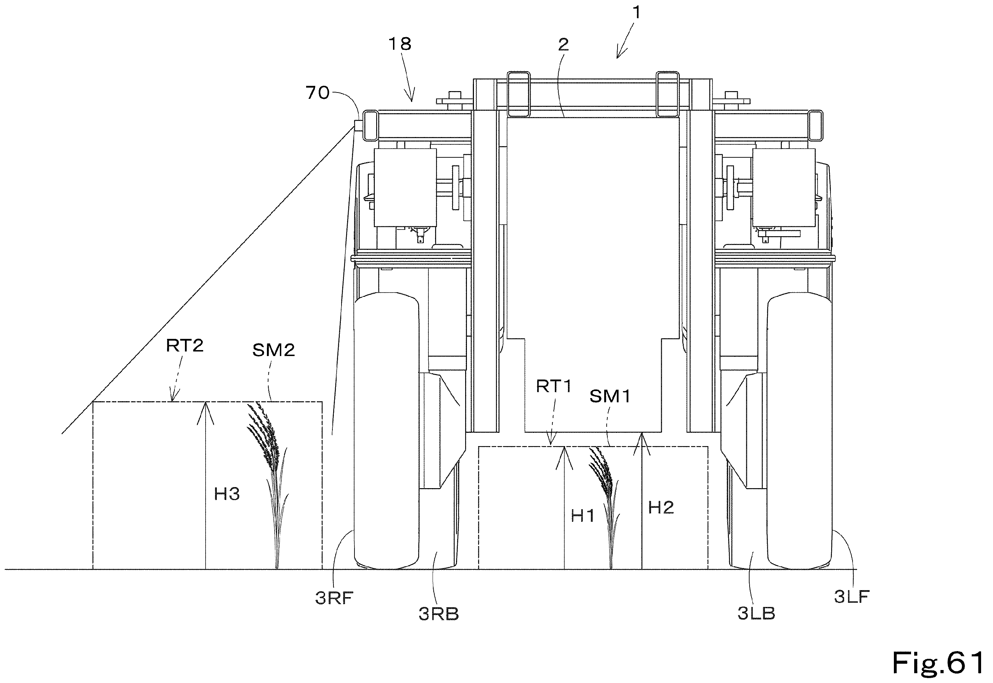

Next, a second example of the control operation performed by the height changing control unit 15C will be described based on FIG. 57. The second example is an example in which the "situation in the surrounding area of the vehicle body 2" detected by the first detector 70 is the "the height of the crop located laterally of the vehicle body 2". In other words, the second example is an example (see FIG. 61) in which the crop SM2 with a height to be detected is located laterally (leftward or rightward) of the vehicle body 2 of the working vehicle 1. The crop SM is planted in multiple rows, and FIG. 61 illustrates a first row RT1 and a second row RT2.

In this case, when the vehicle body 2 is traveling along the first row RT1 of the crop SM1, the first detector 70 detects the height H3 of the crop SM2 in the second row RT2 adjacent to the first row RT1 (S1). The second row RT2 is the row on which the work is performed subsequently after the work on the first row RT1 is finished. The height H3 of the crop SM2 in the second row RT2 can be detected by providing the first detector 70 at a position higher than the crop SM2 in the second row RT2. When the first detector 70 is the camera 71, the camera 71 captures an image of the crop SM2 in the second row RT2 located laterally of the vehicle body 2, and generates an image signal. The calculator 73 detects the height H3 of the crop SM2 in the second row RT2 based on the generated image signal. The method of detecting the height H3 of the crop SM2 by the calculator 73 is similar to the above-described method of detecting the height H1 of the crop SM.

Meanwhile, the third detector 77 detects the height H2 of the vehicle body 2 that is the distance of the vehicle body 2 from the ground surface (S2). The height H2 is detected before the vehicle body 2 reaches the second row RT2. The height changing control unit 15C compares the height H3 of the crop SM2 in the second row RT2 detected by the first detector 70 with the height H2 of the vehicle body 2 detected by the third detector 77 (S3). The height changing control unit 15C changes the height H2 by actuating the height changing mechanism 90 based on the comparison result such that the height H2 of the vehicle body 2 is higher than or equal to the height H3 of the crop SM2.

When the comparison result is H2 < H3 (No in S4), the distance changing mechanism 80 changes the height H2 to achieve H2 ≥ H3 (H2 = H3 or H2 > H3) (S5). Specifically, the height H2 is changed by extending the rod 91a of the lifting cylinder 91. The height changing mechanism 90 changes the height H2 while the vehicle body 2 which has finished traveling along the first row RT1 is turning to start traveling along the second row RT2. However, the height changing mechanism 90 may change the height H2 not during turning, but while the vehicle body 2 is traveling straight before turning or after turning. When the comparison result is H2 ≥ H3 (Yes in S4), the height changing mechanism 90 does not change the height H2 (S6). In a state where the height H2 is changed (S5) or a state where the height H2 is not changed (S6), the working vehicle 1 travels toward the crop, and the vehicle body 2 reaches an area above the crop SM2 (S7).

Even if the height H3 of the crop SM2 is higher than the height H2 of the vehicle body 2, when the vehicle body 2 of the working vehicle 1 reaches an area above the crop SM2, H2 ≥ H3 is satisfied by the above-described control operation. Thus, the working vehicle 1 can perform the work on the crop SM2 while avoiding contact of the vehicle body 2 with the crop SM2.

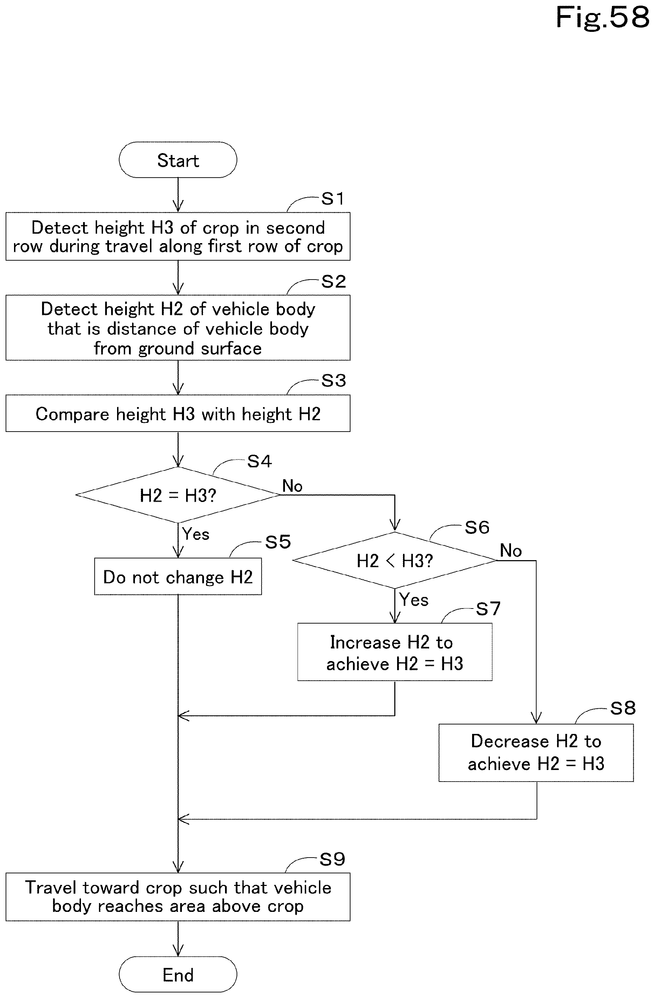

FIG. 58 is a flowchart illustrating a variation of the second example. In the variation, the first step (S1) to the third step (S3) of the operation of the height changing mechanism 90 are the same as the operation in the second example, and the fourth step (S4) and subsequent steps are different from the operation in the second example.

In the fourth step (S4), the height changing control unit 15C determines whether the height H3 of the crop SM2 is the same as the height H2 of the vehicle body 2 (S4). When H2 = H3 (Yes in S4), the height changing mechanism 90 does not change the height H2 (S5). When H2 = H3 is not the case (No in S4), the height changing mechanism 90 determines whether H2 < H3 (S6). When H2 < H3 (Yes in S6), the height changing mechanism 90 changes (increases) the height H2 to achieve H2 = H3 (S7). Specifically, the height H2 is changed to increase the height of the vehicle body 2 by extending the rod 91a of the lifting cylinder 91. When H2 > H3 (No in S6), the height changing mechanism 90 changes (decreases) the height H2 to achieve H2 = H3 (S8). Specifically, the height H2 is changed to decrease the height of the vehicle body 2 by retracting the rod 91a of the lifting cylinder 91. In a state where the height H2 is changed (increased or decreased) (S7, S8) or a state where the height H2 is not changed (S5), the working vehicle 1 travels toward the crop, and the vehicle body 2 reaches an area above the crop SM2 (S9).

Even if the height H3 of the crop SM2 is higher or lower than the height H2 of the vehicle body 2, when the vehicle body 2 of the working vehicle 1 reaches an area above the crop SM2, H2 = H3 is satisfied by the above-described control operation. Thus, the working vehicle 1 can perform the work while traveling in a state where the height H2 of the vehicle body 2 is not too high and not too low, that is, at an appropriate height with respect to the height H3 of the crop SM2. Thus, the working vehicle 1 can successfully perform the work on the crop SM2.

As described above, the height H2 corresponding to the height of the crop SM can be changed by actuating the height changing mechanism 90 to change the height H2 of the vehicle body 2 based on detection results from the first detector 70 and the third detector 77. Thus, even if the height of the crop SM is high, when the working vehicle 1 travels with the crop SM located between the left traveling device 3L and the right traveling device 3R, the working vehicle 1 can travel while avoiding contact of the vehicle body 2 with the crop (see FIG. 54).

When the height of the vehicle body 2 is changed to be the same as the height of the crop SM (see FIG. 56 and FIG. 58), the working vehicle 1 can perform the work while traveling in a state where the height H2 of the vehicle body 2 is at an appropriate height with respect to the height H1 or H3 of the crop. Thus, the working vehicle 1 can successfully perform the work on the crop while avoiding contact of the vehicle body 2 with the crop.

The above-described operation in the first example (including the variation) and operation in the second example (including the variation) can be combined and performed. In this case, when the vehicle body 2 travels along the first row RT1 of the crop, as in the first example, the control operation illustrated in FIG. 55 (or FIG. 56) is performed. Specifically, before the vehicle body 2 reaches the crop, the first detector 70 detects the height H1 of the crop in the first row RT1 in front of the vehicle body 2 in the travel direction, and the third detector 77 detects the height H2 of the vehicle body 2 that is the distance of the vehicle body 2 from the ground surface. Next, the height changing control unit 15C compares the height H1 with the height H2, and changes the height H2 by actuating the height changing mechanism 90 based on the comparison result such that the height H2 is higher than or equal to the height H1 of the crop (or the same as the height H1). Subsequently, the working vehicle 1 travels along the first row RT1.

Next, when the vehicle body 2 travels along the first row RT1, as in the second example, the operation illustrated in FIG. 57 (or FIG. 58) is performed. Specifically, the first detector 70 detects the height H3 of the crop SM in the second row RT2 adjacent to the first row RT1, and the third detector 77 detects the height H2 of the vehicle body 2 that is the distance of the vehicle body 2 from the ground surface. Next, the height changing control unit 15C compares the height H3 with the height H2, and changes the height H2 by actuating the height changing mechanism 90 based on the comparison result such that the height H2 is higher than or equal to the height H3 (or the same as the height H3). Subsequently, the working vehicle 1 travels along the second row RT2.

When there are three or more rows of the crop, it is only necessary to repeat the above-described operation. Specifically, when the vehicle body 2 travels along the second row, it is only necessary to detect the height of the crop SM in the third row adjacent to the second row, compare the height with the height H2 of the vehicle body 2 that is the distance of the vehicle body 2 from the ground surface, and change the height H2 by actuating the height changing mechanism 90 based on the comparison result.

The height changing control unit 15C may change the height of the vehicle body 2 by driving the height changing mechanism 90 before the working vehicle 1 starts to work or while the working vehicle 1 is working. The height of the vehicle body 2 can be changed (finely adjusted) according to the situation of the work by changing the height of the vehicle body 2 while the working vehicle 1 is working.

As illustrated in FIG. 7, the working vehicle 1 includes a position changing mechanism 110. The position changing mechanism 110 changes the position of the power supply apparatus 4. In the present embodiment, the position changing mechanism 110 changes the position of the power supply apparatus 4 with respect to the vehicle body 2. Specifically, the position changing mechanism 110 changes the position of the battery 7 with respect to the vehicle body 2. However, the position changing mechanism 110 may change the position of the power supply apparatus 4 other than the battery 7 rather than the position of the battery 7. The power supply apparatus 4 different from the battery 7, moved by the position changing mechanism 110 includes, e.g., the motor 5, an engine and fuel cells which serve as a substitute for the motor 5.

In the following description, it is assumed that the position changing mechanism 110 changes the position of the battery 7 with respect to the vehicle body 2. The position changing mechanism 110 changes the position of the battery 7 with respect to the vehicle body 2 in the front-rear direction or the lateral direction. In the present embodiment, the position changing mechanism 110 changes the position of the battery 7 with respect to the vehicle body 2 in the front-rear direction.

In the present embodiment, the positional relationship (the positional relationship in the travel direction of the power supply apparatus 4) between the vehicle body 2 and the traveling device 3 is constant (stationary). Thus, the position changing mechanism 110 may be regarded as a mechanism that changes the position of the power supply apparatus 4 with respect to the traveling device 3.

As described above, the battery 7 which is part of the power supply apparatus 4 is housed in the housing frame 2 that constitutes the vehicle body 2. The position changing mechanism 110 changes the position of the battery 7 (power supply apparatus) in the housing frame 2. In other words, the position changing mechanism 110 changes the position of the battery 7 (power supply apparatus) in the vehicle body 2.

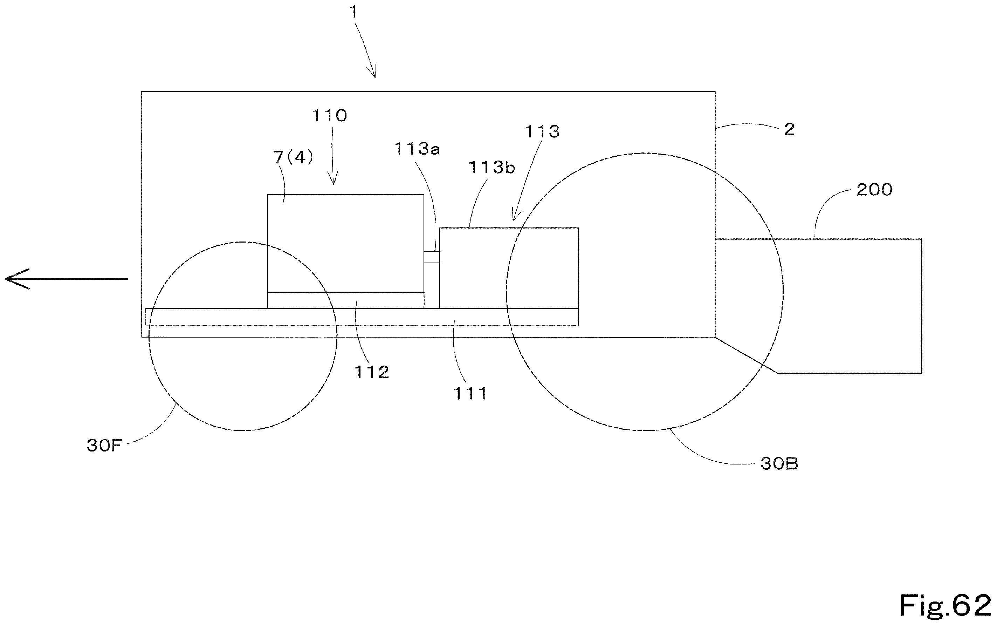

As illustrated in FIG. 62, the position changing mechanism 110 includes a guide rail 111, a slide member 112 and a cylinder 113. Note that the working vehicle 1 is illustrated in a simplified manner in FIG. 62 to facilitate the understanding of the position changing mechanism 110.

The guide rail 111 is fixed to the housing frame (vehicle body) 2, and extends in the front-rear direction. The slide member 112 is located on the guide rail 111, and movable along the guide rail 111 in the front-rear direction. The battery 7 is fixed to the slide member 112. The battery 7 is movable along the guide rail 111 in the front-rear direction with the movement of the slide member 112.

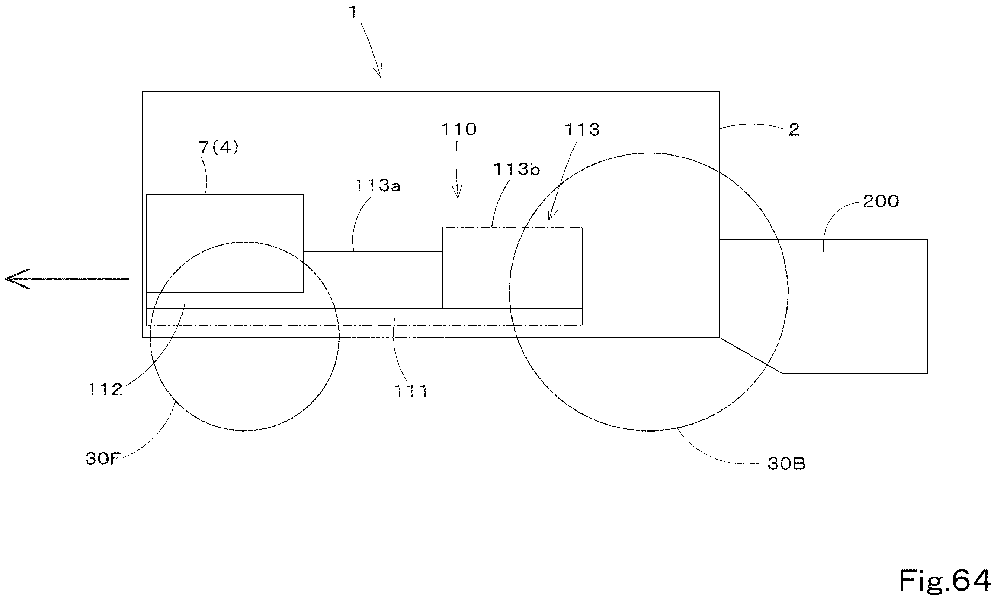

The cylinder 113 includes a hydraulic cylinder. The cylinder 113 includes an extendable and retractable rod 113a, and a cylinder tube 113b. The cylinder tube 113b is fixed to the housing frame 2. The distal end of the rod 113a is attached to the battery 7 or the slide member 112. The slide member 112 moves in the front-rear direction along the guide rail 111 with extension and retraction of the rod 113a. Thus, the battery 7 also moves in the front-rear direction along the guide rail 111 (see FIG. 62, FIG. 63, and FIG. 64).

Note that the position changing mechanism 110 may adopt a configuration in which the position of the battery 7 (power supply apparatus) is changed with the housing frame 2, instead of a configuration in which the position of the battery 7 (power supply apparatus) is changed in the housing frame 2. In this case, it is only necessary to fix the guide rail 111 to the frame structure 18 (see FIG. 8), and attach the housing frame 2 which houses the battery 7 to the slide member 112.

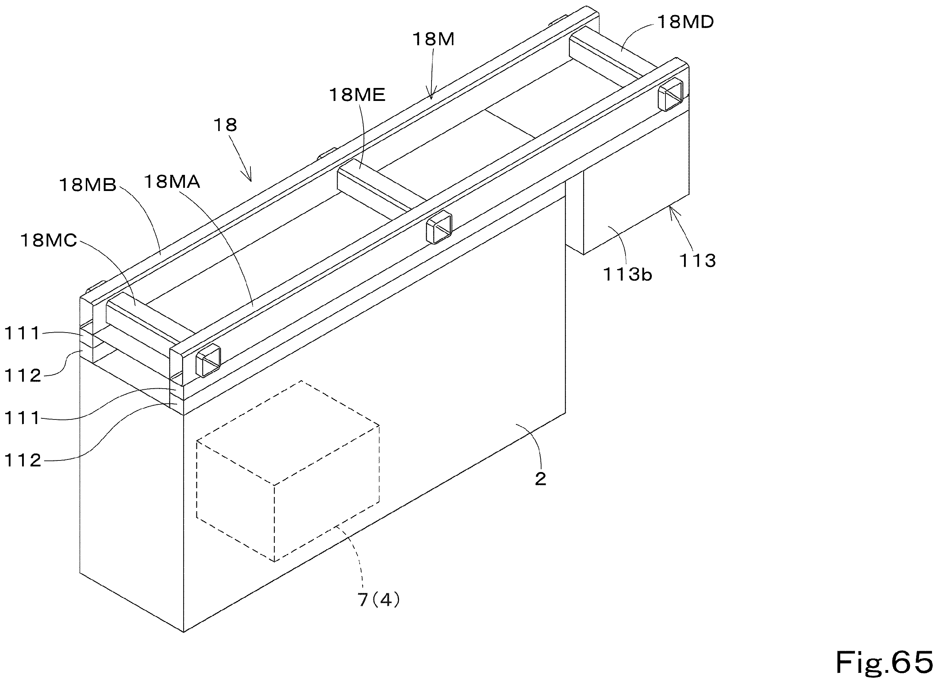

Specifically, for example, as illustrated in FIG. 65, the guide rail 111 is fixed to each of a frame member 18MA and a frame member 18MB of the lateral frame 18M of the frame structure 18, and the housing frame 2 is attached to the slide member 112 which is movable along the guide rail 111. The cylinder tube 113b of the cylinder 113 is fixed to the lateral frame 18M.

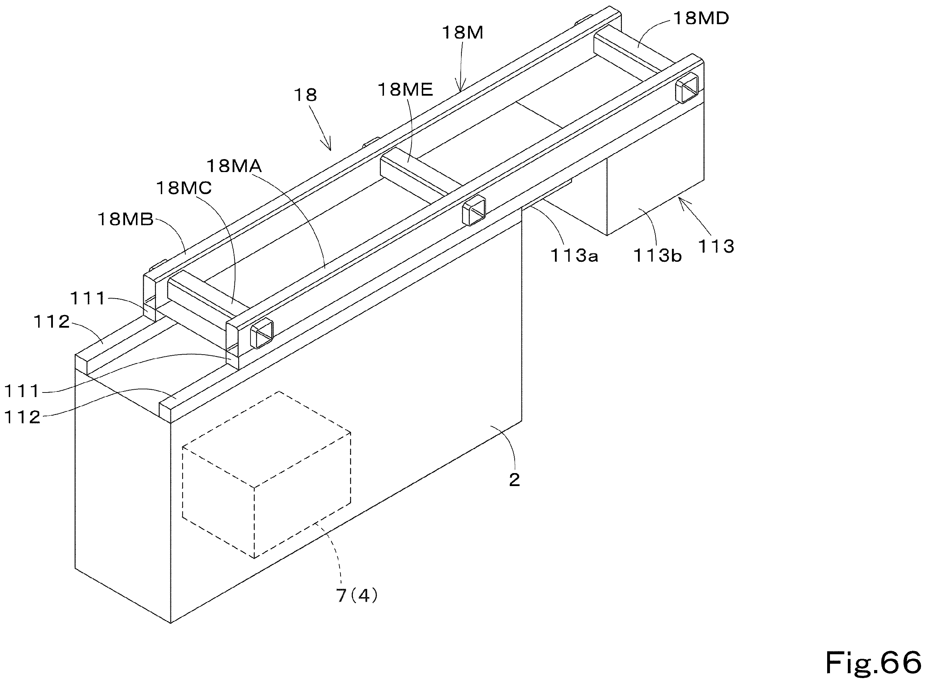

Thus, when the rod 113a of the cylinder 113 extends or retracts, the housing frame 2 moves with the slide member 112 in the front-rear direction along the guide rail 111, and the battery 7 housed in the housing frame 2 also moves in the front-rear direction along the guide rail 111 (see FIG. 65 and FIG. 66). In this manner, when the housing frame 2 moves in the front-rear direction, the position of the housing frame 2 with respect to the traveling device 3 in the front-rear direction changes.

In the above-described embodiment, the housing frame 2 constitutes the entirety of the vehicle body 2; however, the housing frame 2 may constitute part of the vehicle body 2. Thus, the configuration in which the position of the power supply apparatus 4 is changed with the housing frame 2 may be a configuration in which the position of the power supply apparatus 4 is changed with the position of the housing frame which is the entirety of the vehicle body 2, or may be a configuration in which the position of the power supply apparatus 4 is changed with the position of the housing frame which is part of the vehicle body 2. In either configuration, the positions of the housing frame 2 and the power supply apparatus 4 with respect to the traveling device 3 are changed.

In a configuration in which the position of the power supply apparatus 4 is changed with the housing frame which is part of the vehicle body 2 (that is, when the housing frame is part of the vehicle body 2), the position changing mechanism 110 moves the housing frame which is part of the vehicle body 2 with respect to the vehicle body 2. In this case, the housing frame may be any frame that houses at least the power supply apparatus 4 (such as the battery 7).

The operation of the position changing mechanism 110 is controlled by the controller 15. As illustrated in FIG. 7, the controller 15 includes the position changing control unit 15D. Hereinafter, two embodiments of the position changing control unit 15D will be described. The following two embodiments are examples in which the power supply apparatus 4 is the battery 7, but the power supply apparatus 4 is not limited to the battery 7, and may be a motor, an engine, fuel cells or the like. Thus, the description of the following two embodiments holds even if the battery 7 is replaced by the power supply apparatus 4.

First, the position changing control unit 15D in a first embodiment will be described. The position changing control unit 15D in the first embodiment changes the position of the power supply apparatus 4 by actuating the position changing mechanism 110 based on the slip ratio of the wheels 30 at the time of travel of the working vehicle 1.

In the first embodiment, the working vehicle 1 includes a slip ratio measurer 120 to measure the slip ratio of the wheels 30 at the time of travel (see FIG. 7). The slip ratio measurer 120 calculates the slip ratio by the Expression, "the slip ratio = (Vb - Vw)/Vb where Vb is the vehicle body speed, and Vw is the wheel speed (circumferential speed of the wheels)" ... (1)

Specifically, the slip ratio measurer 120 calculates the slip ratio of the rear wheels by the Expression, "the slip ratio = (Vb - Vr)/Vb where Vb is the vehicle body speed, and Vr is the rear wheel speed (circumferential speed of the rear wheels)" ... (2)
The slip ratio measurer 120 calculates the slip ratio of the front wheels by the Expression, "the slip ratio = (Vb - Vf)/Vb where Vb is the vehicle body speed, and Vf is the front wheel speed (circumferential speed of the front wheels)" ... (3)

When the driving wheels of the working vehicle 1 are the rear wheels, the slip ratio measurer 120 calculates the slip ratio using the above Expression (2). When the driving wheels of the working vehicle 1 are the front wheels, the slip ratio measurer 120 calculates the slip ratio using the above Expression (3).

The position changing control unit 15D changes the position of the battery 7 by actuating the position changing mechanism 110 based on the slip ratio of the wheels 30 measured by the slip ratio measurer 120 at the time of travel of the working vehicle 1. Specifically, the position changing control unit 15D changes the position of the battery 7 by extending or retracting the rod 113a by actuating the cylinder 113 of the position changing mechanism 110.

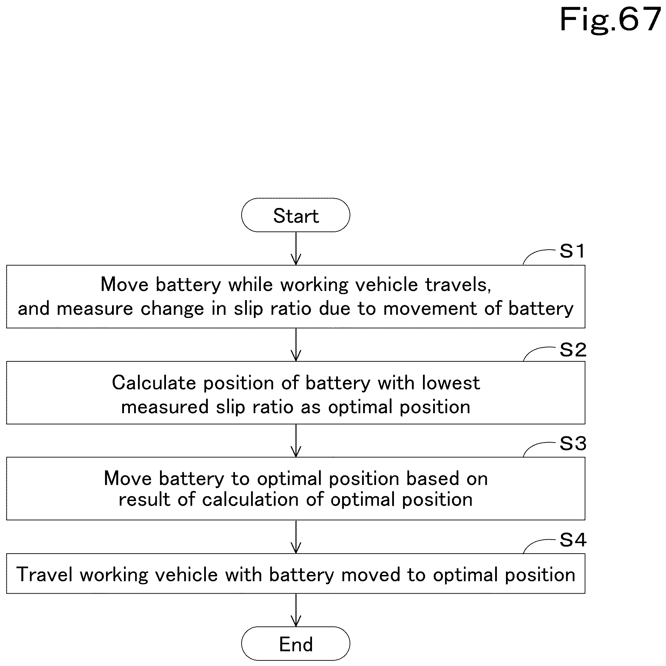

FIG. 67 is a flowchart illustrating an example of the control operation of the position changing control unit 15D in the first embodiment. Hereinafter, an example of the control operation performed by the position changing control unit 15D in the first embodiment will be described based on FIG. 67.

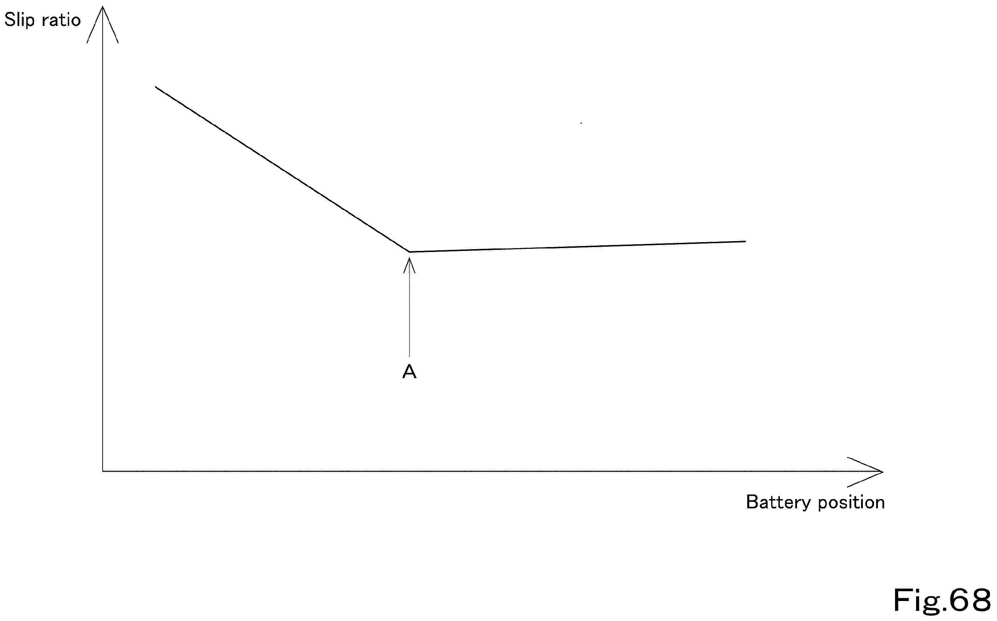

First, the position changing control unit 15D drives the position changing mechanism 110 to move the battery 7 (see FIG. 62 to FIG. 64) while the working vehicle 1 is traveling, and measures the change in the slip ratio due to the movement of the battery 7 by the slip ratio measurer 120 (S1). The graph in FIG. 68 illustrates an example of a change in the slip ratio measured by the slip ratio measurer 120. The horizontal axis of the graph in FIG. 68 indicates the front-rear position (position in the front-rear direction) of the battery 7, the left side of the horizontal axis indicates forward, and the right side of the horizontal axis indicates rearward.

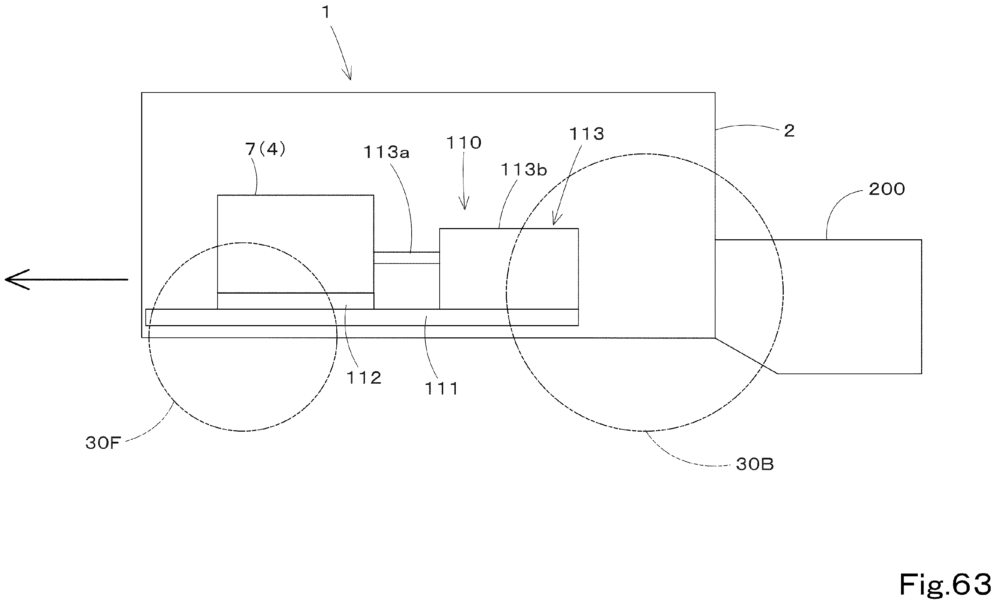

Subsequently, the position changing control unit 15D calculates, as the optimal position, the position of the battery 7 where the slip ratio measured by the slip ratio measurer 120 is the lowest (S2). In the graph in FIG. 68, the slip ratio is the lowest at point A. Thus, the position changing control unit 15D calculates, as the optimal position of the battery 7, the front-rear position of the battery 7 corresponding to the point A. The optimal position of the battery 7 is the position (the optimal center of gravity position) at which the center of gravity of the vehicle body 2 is optimal. Subsequently, the position changing control unit 15D moves the battery 7 to the optimal position (see FIG. 63) by actuating the position changing mechanism 110 based on the result of the calculation of the optimal position (S3). Subsequently, the working vehicle 1 travels with the battery 7 moved to the optimal position (S4).

Thus, the working vehicle 1 can travel stably in a state where the wheels are unlikely to slip. In addition, it is possible to improve the working power when the work is performed with a working device (implement) attached to the mount 10. In the working vehicle 1, the center of gravity position changes due to attachment or detachment of a working device to or from the mount 10 provided at a rear portion of the vehicle body 2, and thus the weight balance changes. In this situation, the weight balance can be normalized by moving the battery 7 by driving the position changing mechanism 110 using the position changing control unit 15D. For example, when a working device is attached to the mount 10 provided at a rear portion of the vehicle body 2, the weight balance of the working vehicle 1 is normalized by moving the battery 7 forward, and thus the working power can be improved.

Note that the position changing control unit 15D calculates the center of gravity position of the vehicle body 2 based on the front-rear position of the battery 7, and may perform the control operation using the front-rear position of the center of gravity of the vehicle body 2 instead of using the front-rear position of the battery 7. In this case, the horizontal axis of the graph in FIG. 68 indicates the front-rear position of the center of gravity of the vehicle body 2. The control operation in this case is given by replacing the "front-rear position of the battery 7" in the above description with the "front-rear position of the center of gravity of the vehicle body 2".

Next, the position changing control unit 15D in a second embodiment will be described. The position changing control unit 15D in the second embodiment changes the position of the battery 7 by actuating the position changing mechanism 110 based on the torque of the wheels 30 at the time of travel of the working vehicle 1.

In the second embodiment, the working vehicle 1 includes a torque measurer 121 to measure the torque of the wheels 30 at the time of travel (see FIG. 7). The torque measurer 121 measures each of the torque of the front wheels 30F and the torque of the rear wheels 30B. The torque measurer 121 measures, e.g., the rotational torque of the motor 5 which drives the wheels 30 (the front wheels 30F and the rear wheels 30B). The torque measurer 121 calculates the measured rotational torque of the motor 5 as the torque of the wheels 30 (the front wheels 30F and the rear wheels 30B).

As described above, the motor 5 includes the motor 5LF to drive the left front wheel 3LF, the motor 5RF to drive the right front wheel 3RF, the motor 5LB to drive the left rear wheel 3LB, and the motor 5RB to drive the right rear wheel 3RB. When the torque measurer 121 measures the rotational torque of the motor 5 which drives the wheels 30, the torque measurer 121 measures the rotational torque of each of four motors (the motor 5LF, the motor 5RF, the motor 5LB, and the motor 5RB). The torque measurer 121 then calculates, as the torque of the front wheels 30F, the average value or the total value of the rotational torques of the motor 5LF and the motor 5RF. Also, the torque measurer 121 calculates, as the torque of the rear wheels 30B, the average value or the total value of the rotational torques of the motor 5LB and the motor 5RB.

The position changing control unit 15D changes the position of the battery 7 by actuating the position changing mechanism 110 based on the torque of the wheels 30 measured by the torque measurer 121 at the time of travel of the working vehicle 1. Specifically, the position changing control unit 15D changes the position of the battery 7 by extending or retracting the rod 113a by actuating the cylinder 113 of the position changing mechanism 110. Specifically, the position changing control unit 15D moves the battery 7 forward when the torque of the rear wheels 30B is less than or equal to a predetermined value, and moves the battery 7 rearward when the torque of the front wheels 30F is less than or equal to a predetermined value.

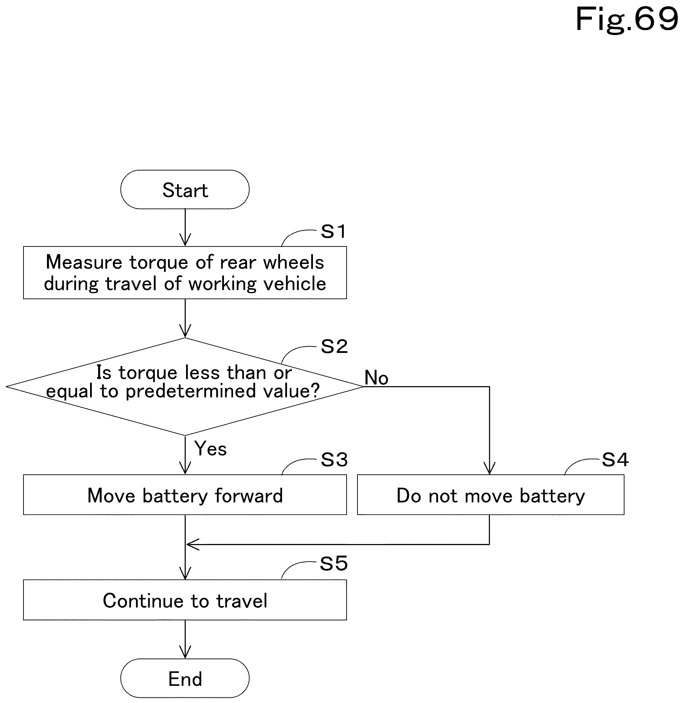

FIG. 69 is a flowchart illustrating an example of the control operation of the position changing control unit 15D in the second embodiment. Hereinafter, an example of the control operation performed by the position changing control unit 15D in the second embodiment will be described based on FIG. 69. Here, the case where the rear wheels are caught in mud or mire and get stuck during travel of the working vehicle 1 will be described as an example. Note that "get stuck" means that the wheels are caught in mud or mire, and the working vehicle becomes immobile.

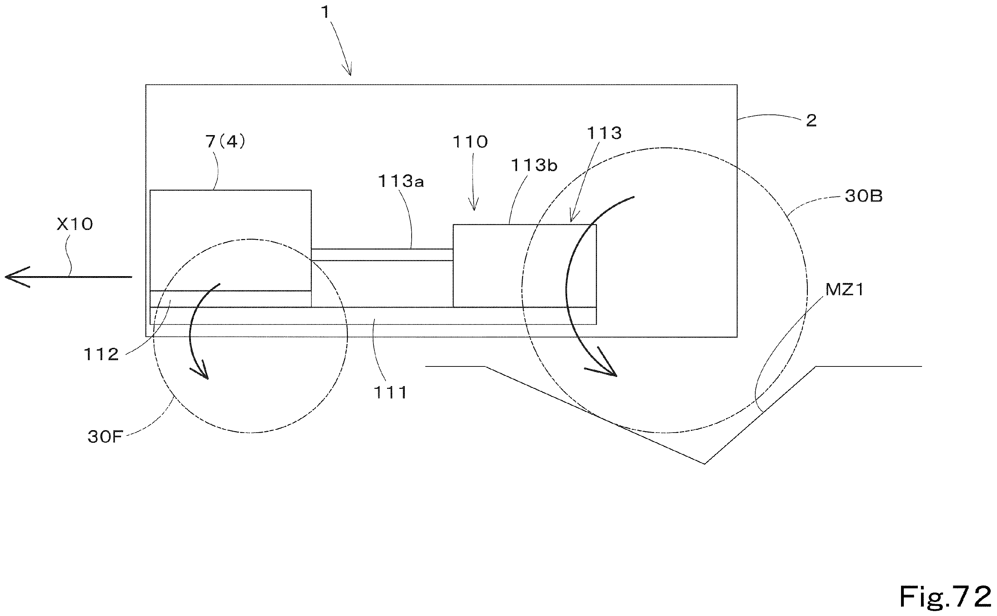

During travel of the working vehicle 1, the torque measurer 121 measures the torque of the rear wheels 30B (S1). The position changing control unit 15D determines whether the torque of the rear wheels 30B measured by the torque measurer 121 is less than or equal to a predetermined value (S2). When the torque of the rear wheels 30B is determined to be less than or equal to a predetermined value (Yes in S2), the position changing control unit 15D moves the battery 7 forward by actuating the position changing mechanism 110 (S3) (see FIG. 72).

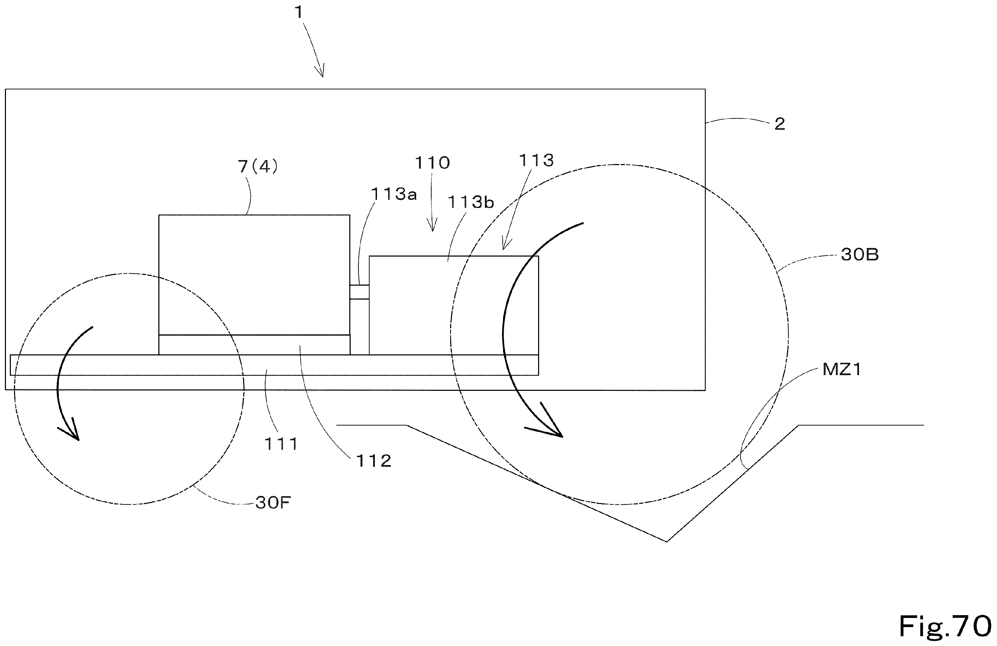

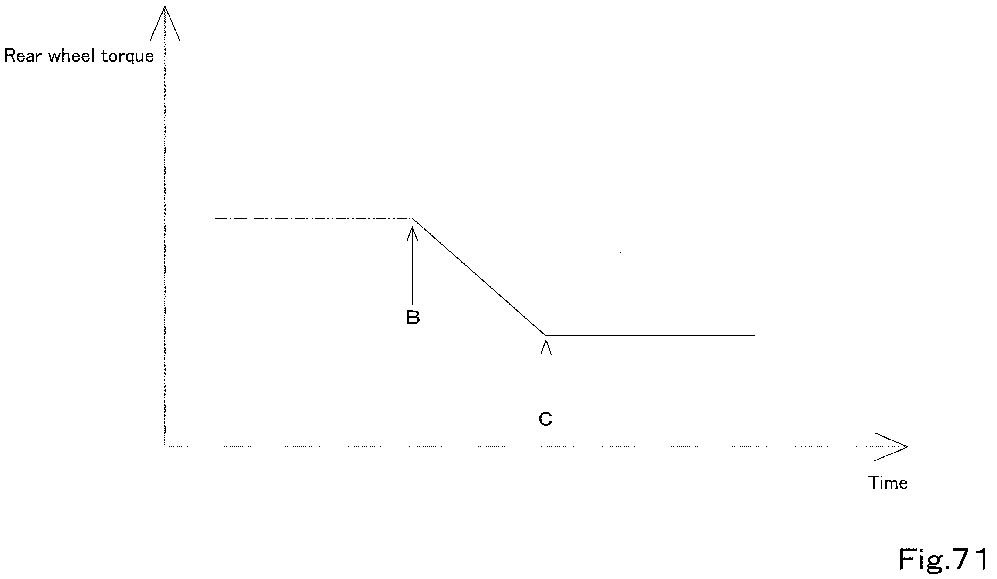

The situation where the torque of the rear wheels 30B is less than or equal to a predetermined value occurs when the rear wheels 30B are caught in a groove MZ1 and the working vehicle 1 gets stuck (see FIG. 70). The graph in FIG. 71 illustrates an example of a change in the torque measured by the torque measurer 121. In the graph in FIG. 71 at and after time B, the torque of the rear wheels suddenly drops, and at and after time C, the torque of the rear wheels 30B has a substantially constant low value. From this observation, it is seen that at and after time C, the rear wheels 30B are spinning, in other words, the working vehicle 1 has got stuck.

When the battery 7 is moved forward by actuating the position changing mechanism 110 (S3), the center of gravity position of the working vehicle 1 moves forward. Consequently, the working vehicle 1 can recover from the stuck state (the state where the rear wheels 30B are spinning), and thus can continue to travel (move forward) (S5) (see an arrow X10 in FIG. 72).

When it is determined that the torque of the rear wheels 30B exceeds a predetermined value (No in S2), the position changing control unit 15D does not actuate the position changing mechanism 110, and thus does not move the battery 7 (S4). When the torque of the rear wheels 30B exceeds a predetermined value, the working vehicle 1 is not in a stuck state (the rear wheels are not spinning), and thus can continue to travel (move forward) without actuating (moving the battery 7) the position changing mechanism 110 to move the center of gravity (S5).

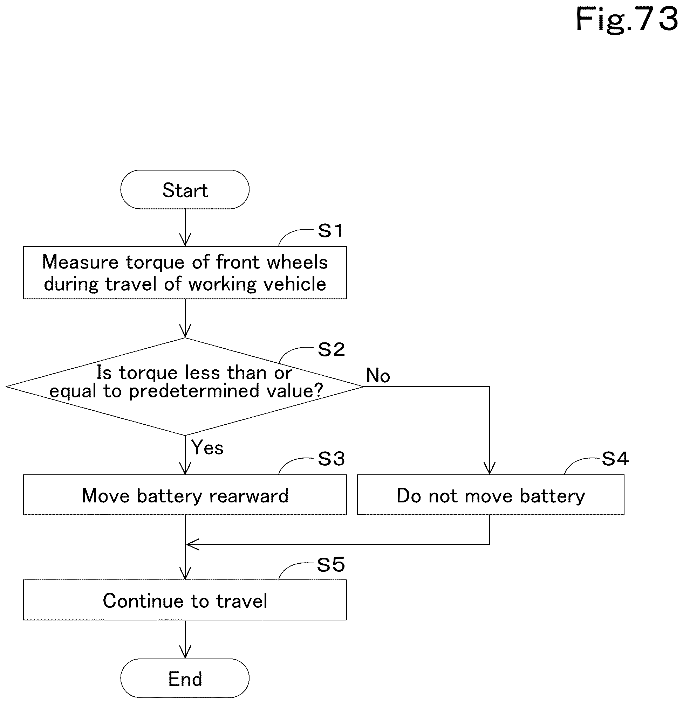

FIG. 73 is a flowchart illustrating an example of the control operation of the position changing control unit 15D when the front wheels get stuck in mud or mire during travel of the working vehicle 1. That is, FIG. 69 illustrates the case where the working vehicle 1 gets stuck due to spinning of the rear wheels, and FIG. 73 illustrates the case where the working vehicle 1 gets stuck due to spinning of the front wheels.

During travel of the working vehicle 1, the torque measurer 121 measures the torque of the front wheels (S1). The position changing control unit 15D determines whether the torque of the front wheels measured by the torque measurer 121 is less than or equal to a predetermined value (S2). The situation where the torque of the front wheels is less than or equal to a predetermined value occurs when the front wheels are caught in a groove and the working vehicle 1 gets stuck. When the torque of the front wheels is determined to be less than or equal to a predetermined value (Yes in S2), the battery 7 is moved rearward by actuating the position changing mechanism 110 (S3).

When the battery 7 is moved rearward by actuating the position changing mechanism 110 (S3), the center of gravity position of the working vehicle 1 moves rearward. Thus, the working vehicle 1 can recover from the stuck state (the state where the front wheels are spinning), and thus can continue to travel (S5).

When it is determined that the torque of the front wheels exceeds a predetermined value (No in S2), the position changing control unit 15D does not actuate the position changing mechanism 110, and thus does not move the battery 7 (S4). When the torque of the front wheels exceeds a predetermined value, the working vehicle 1 is not in a stuck state (the front wheels are not spinning), and thus can continue to travel without actuating (moving the battery 7) the position changing mechanism 110 to move the center of gravity (S5).

When an unmanned working vehicle 1 gets stuck while traveling to perform the work, the work may be stopped for a long time. However, as described above, when the torque of the wheels (front wheels or rear wheels) is less than or equal to a predetermined value, the position changing control unit 15D can eliminate a stuck state of the working vehicle 1 in which the wheels (front wheels or rear wheels) are spinning, by moving the battery 7 forward or rearward by actuating the position changing mechanism 110, and thus the work can be prevented from being stopped for a long time.

As described above, the weight balance of the working vehicle 1 can be adjusted by driving the position changing mechanism 110 to change the position of the power supply apparatus 4 by the position changing control unit 15D. Thus, the weight balance of the working vehicle 1 can be adjusted without using a weight (counterweight) to adjust the weight balance of the working vehicle 1. Thus, the working vehicle 1 including the position changing mechanism 110 does not need to be equipped with a weight to adjust the weight balance of the working vehicle 1. However, the working vehicle 1 may be equipped with a weight. In this case, the weight can be miniaturized.

The situation where the weight balance of the working vehicle 1 is adjusted by driving the position changing mechanism 110 to change the position of the power supply apparatus 4 by the position changing control unit 15D, includes when the wheels (front wheels or rear wheels) are caught in a groove, and the working vehicle 1 gets stuck as mentioned above, when a working device is attached or detached, and additionally when the soil on which the working vehicle 1 travels has changed. For example, when the working vehicle 1 travels on a paved public road and enters an agricultural field, the soil on which the working vehicle 1 travels changes. In this case, even if the soil changes, stable travel can be continued by adjusting the weight balance of the working vehicle 1 by changing the position of the power supply apparatus 4.

The above-described control operation performed by the position changing control unit 15D is to change the front-rear position of the power supply apparatus 4 (battery 7) with respect to the vehicle body 2 by the position changing mechanism 110. However, the control operation performed by the position changing control unit 15D may be to change the position of the power supply apparatus 4 (battery 7) with respect to the vehicle body 2 in the lateral direction by the position changing mechanism 110.

When a configuration is adopted in which the position changing mechanism 110 changes the position of the power supply apparatus 4 (battery 7) with respect to the vehicle body 2 in the lateral direction, it is sufficient that the guide rail 111 be located to extend in the lateral direction, the extension and retraction direction of the rod 113a of the cylinder 113 be set to the lateral direction, and thus the slide member 112 be allowed to be movable in the lateral direction.

According to the configuration in which the position changing mechanism 110 changes the position of the power supply apparatus 4 (battery 7) with respect to the vehicle body 2 in the lateral direction, for example, when the heights of the right and left sides of the vehicle body 2 are different on an inclined ground, the vehicle body 2 can be stabilized by changing the position of the power supply apparatus 4 with respect to the vehicle body 2 in the lateral direction.

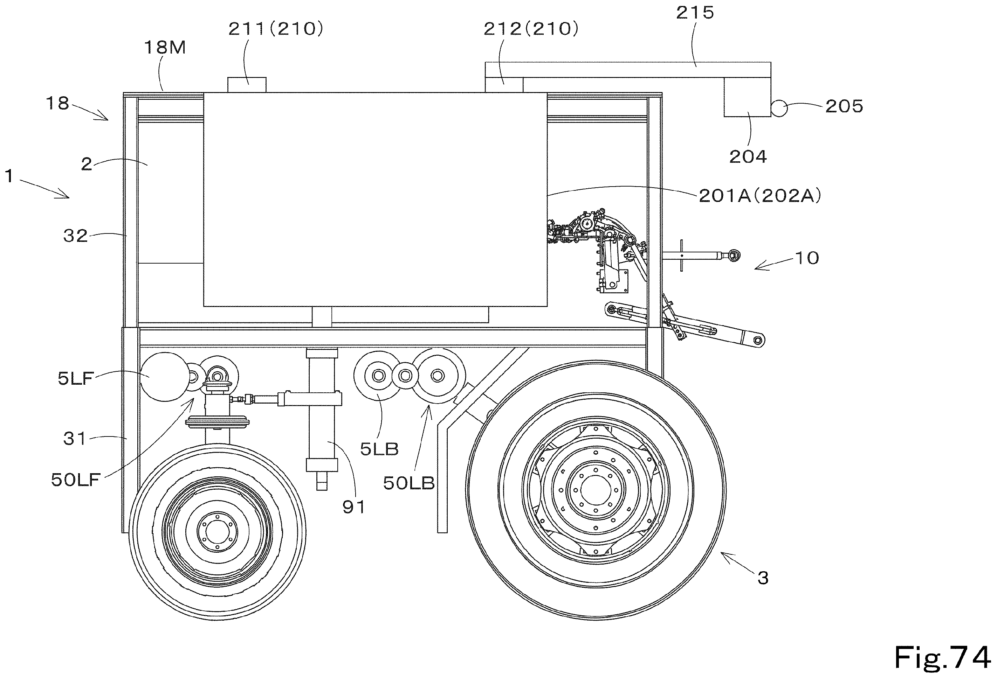

FIG. 74 and FIG. 75 illustrate still another embodiment of the working vehicle 1. The working vehicle 1 includes the vehicle body 2, the traveling device 3 to support the vehicle body 2 such that the vehicle body 2 is allowed to travel, and a working device (implement) 200 to perform the work. The configuration of the vehicle body 2 and the traveling device 3 is as described above. As described above, the working device 200 is a device that performs various types of work such as agricultural work.

As illustrated in FIG. 75, pieces of equipment 201 included in the working device 200 are located at opposite sides of the vehicle body 2 from each other. Hereinafter, one piece of equipment 201 located at one of the opposite sides of the vehicle body 2 is referred to as a first piece of equipment 201A, and one piece of equipment 201 located at the other of the opposite sides of the vehicle body 2 is referred to as a second piece of equipment 201B.

In the present embodiment, the pieces of equipment 201 included in the working device 200 are located leftward Y1 and rightward Y2 at opposite sides of the vehicle body 2 from each other. Specifically, the first piece of equipment 201A is located leftward Y1, and the second piece of equipment 201B is located rightward Y2. However, the pieces of equipment 201 included in the working device 200 may be located forward and rearward at opposite sides of the vehicle body 2 from each other. In this case, the first piece of equipment 201A is located forward, and the second piece of equipment 201B is located rearward.

The pieces of equipment 201 included in the working device 200 may be located leftward and rightward as well as forward and rearward at opposite sides of the vehicle body 2 from each other. In this case, the pieces of equipment 201 may include a first piece of equipment, a second piece of equipment, a third piece of equipment, and a fourth piece of equipment. For example, the first piece of equipment is located leftward, the second piece of equipment is located rightward, the third piece of equipment is located forward, and the fourth piece of equipment is located rearward.

One (the first piece of equipment 201A) of the pieces of equipment located at opposite sides of the vehicle body 2, and the other (the second piece of equipment 201B) may have the same function, or may have different functions. For example, when both the first piece of equipment 201A and the second piece of equipment 201B are tanks to hold liquid, the first piece of equipment 201A and the second piece of equipment 201B have the same function (function of holding liquid). For example, when the first piece of equipment 201A is a tank to hold liquid, and the second piece of equipment 201B is a battery to store electricity, the first piece of equipment 201A and the second piece of equipment 201B have different functions (function of holding liquid and function to store electricity).

In the present embodiment, the working device 200 is a device (agricultural working device) that performs agricultural work. Specifically, the working device 200 is a spreader to spread a liquid substance such as a liquid agricultural chemical or a liquid fertilizer. However, the working device 200 is not limited to the spreader. The working device 200 may be an agricultural working device that performs work other than spreading on an agricultural field, or may be a machine that performs work other than agricultural work. Hereinafter, a description will be given assuming that the working device 200 is a spreader, and it is referred to as the "spreader 200".

In the present embodiment, the piece of equipment 201 included in the spreader 200 is a tank 202 to hold the liquid substance of the spreader 200. The tank 202 includes a first tank 202A located on one side (leftward) of the vehicle body 2, and a second tank 202B located on the other side (rightward) of the vehicle body 2. In other words, the first piece of equipment 201A is the first tank 202A, and the second piece of equipment 201B is the second tank 202B.

The spreader 200 includes a pump 204 and a boom 205. The pump 204 can be driven by the working motor 6 mounted on the vehicle body 2. The pump 204 and the boom 205, and the pump 204 and the tank 202 are each connected by a tube (not illustrated), such as a pipe or a hose, which allows the liquid substance to flow. Although not illustrated, the spreader 200 may have another configuration as appropriate necessary for spreading the liquid substance.

The pump 204 delivers, to the boom 205, the liquid substance stored in the first tank 202A and the second tank 202B. The boom 205 includes a left boom 205L and a right boom 205R. The left boom 205L extends leftward of the vehicle body 2. The right boom 205R extends rightward of the vehicle body 2. The boom 205 (the left boom 205L and the right boom 205R) extend in the lateral direction rearward of an upper portion of the vehicle body 2. The position (direction) of the left boom 205L and the right boom 205R may be changeable to a spread position extending in the horizontal direction (lateral direction), and a storage position extending upward.

The left boom 205L and the right boom 205R include multiple nozzles (not illustrated) arranged in a longitudinal direction. The liquid substance stored in the first tank 202A and the second tank 202B is delivered to the left boom 205L and the right boom 205R by driving the pump 204, and is sprayed downward through the nozzles of the left boom 205L and the right boom 205R.

As illustrated in FIG. 74 and FIG. 75, the working vehicle 1 includes the frame structure 18. As described above, the frame structure 18 includes the left frame 18L, the right frame 18R and the lateral frame 18M (see FIG. 8 and the like). The pieces of equipment 201 include the first piece of equipment 201A located leftward of the left frame 18L, and the second piece of equipment 201B located rightward of the right frame 18R. In the present embodiment, as the first piece of equipment 201A, the first tank 202A is located leftward of the left frame 18L, and as the second piece of equipment 201B, the second tank 202B is located rightward of the right frame 18R.

The working vehicle 1 includes a support frame 210 which supports the pieces of equipment 201 and is attachable and detachable to and from the vehicle body 2. The support frame 210 is located above the pieces of equipment 201. The support frame 210 extends in the lateral direction to be located across the first piece of equipment 201A and the second piece of equipment 201B. The first piece of equipment 201A is attached to a lower left portion of the support frame 210. The second piece of equipment 201B is attached to a lower right portion of the support frame 210. In other words, the support frame 210 extends in the lateral direction to connect an upper portion of the first piece of equipment 201A and an upper portion of the second piece of equipment 201B. Thus, the support frame 210 supports the pieces of equipment 201 (the first piece of equipment 201A and the second piece of equipment 201B) from above.

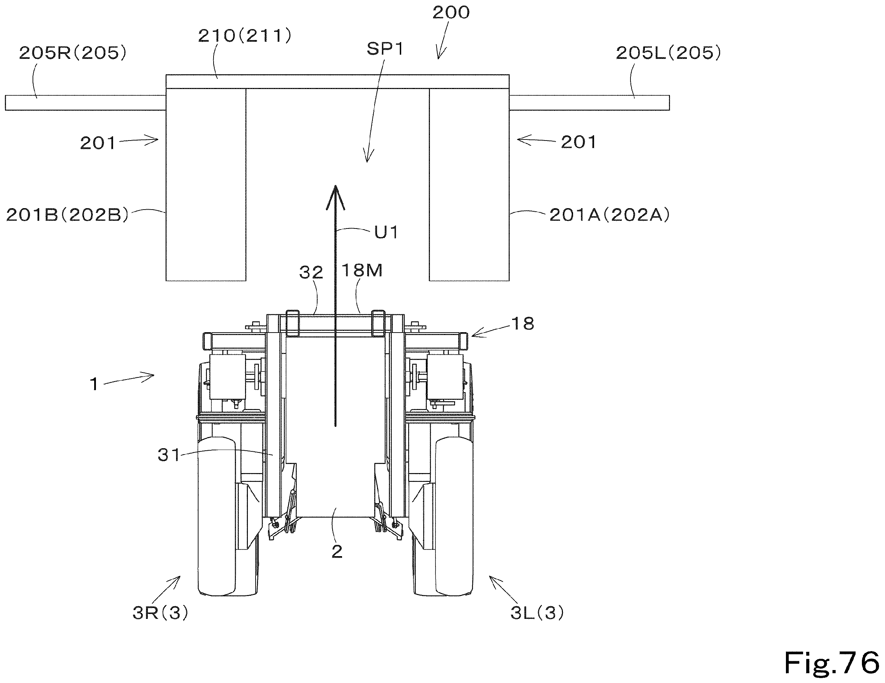

As illustrated in FIG. 75, the distance (distance in the lateral direction) between the first piece of equipment 201A and the second piece of equipment 201B attached to the support frame 210 is longer than the width (length in the lateral direction) of the vehicle body 2. Also, the distance between the first piece of equipment 201A and the second piece of equipment 201B attached to the support frame 210 is longer than the width (length in the lateral direction) of the frame structure 18. Thus, a space SP1 (see FIG. 76) is provided between the first piece of equipment 201A and the second piece of equipment 201B such that the vehicle body 2 and the frame structure 18 can be located in the space SP1. As illustrated in FIG. 75, with the spreader 200 attached to the vehicle body 2, the vehicle body 2 and the frame structure 18 are located in the space SP1.

As illustrated in FIG. 74 and FIG. 75, the support frame 210 includes a first support frame 211 and a second support frame 212. The first support frame 211 and the second support frame 212 are spaced apart in the front-rear direction and located in parallel to each other. The first support frame 211 is attached so as to connect a front upper portion of the first piece of equipment 201A and a front upper portion of the second piece of equipment 201B. The second support frame 212 is attached so as to connect a rear upper portion of the first piece of equipment 201A and a rear upper portion of the second piece of equipment 201B.

Note that the support frame 210 may include one support frame or more than two support frames instead of two support frames: the first support frame 211 and the second support frame 212. The support frame 210 may be any frame that can support the first piece of equipment 201A and the second piece of equipment 201B from above, and its specific shape is not limited to a particular one.

As illustrated in FIG. 74, the pump 204 is attached to the support frame 210. Specifically, the pump 204 is attached to a support member 215 which extends rearward from the second support frame 212. The pump 204 attached to the support member 215 is located rearward of an upper portion of the vehicle body 2. However, the pump 204 may be attached to another position of the working vehicle 1, such as the mount 10 (see FIG. 74).

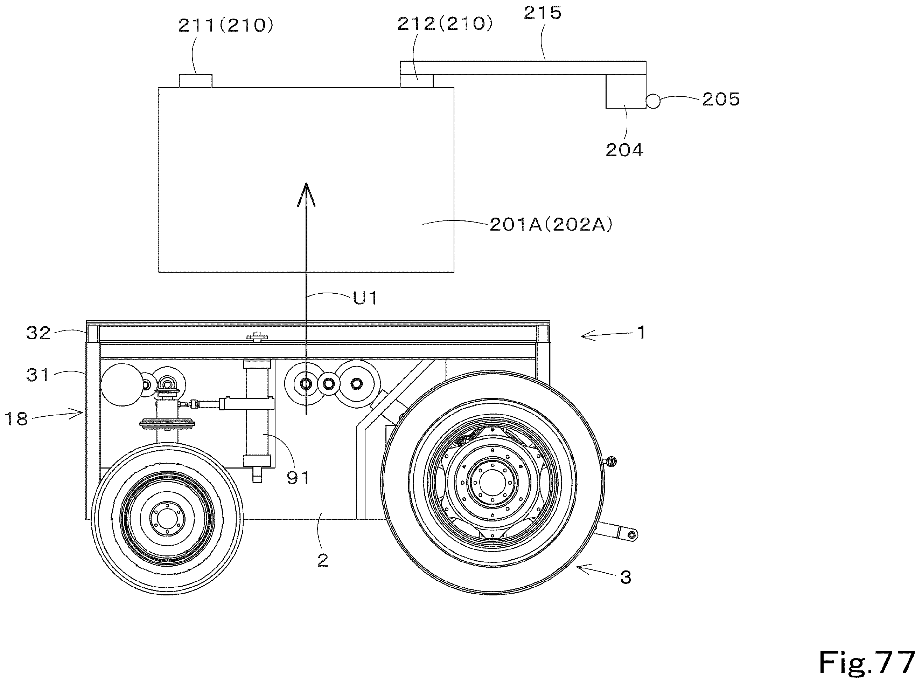

The support frame 210 is attached to the vehicle body 2 from above. Specifically, as illustrated in FIG. 76 and FIG. 77, the support frame 210 is attached to the vehicle body 2 by raising (see an arrow U1) the vehicle body 2 with the movable frame 32 by driving the lifting cylinder 91 of the height changing mechanism 90. Specifically, the support frame 210 is attached to the vehicle body 2 via the frame structure 18 by being placed upward of the frame structure 18.

When the support frame 210 is attached to the vehicle body 2, first, with the vehicle body 2 at a low position (for example, at the first height (the lower limit height)), the support frame 210 is located above the vehicle body 2 (see FIG. 76 and FIG. 77). In this situation, the vehicle body 2 is located between the first piece of equipment 201A and the second piece of equipment 201B in the lateral direction such that the first piece of equipment 201A and the second piece of equipment 201B overlap the vehicle body 2 in the front-rear direction. Next, the vehicle body 2 is raised to a high position (for example, at the second height (the upper limit height)) by driving the height changing mechanism 90 (see an arrow U1 in FIG. 76 and FIG. 77).

Thus, with the vehicle body 2 interposed between the first piece of equipment 201A and the second piece of equipment 201B, and the support frame 210 placed above the frame structure 18 (movable frame 32), the support frame 210 is attached to the vehicle body 2 (see FIG. 74 and FIG. 75).

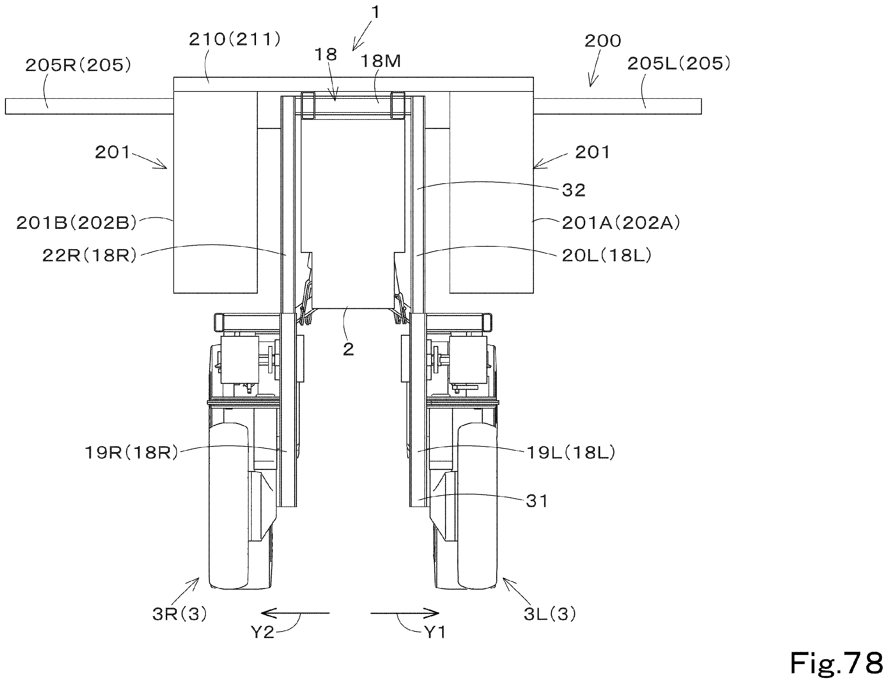

The working vehicle 1 in the embodiment illustrated in FIG. 74 to FIG. 77 adopts a configuration in which the height changing mechanism 90 is provided, but instead of the configuration, a configuration may be adopted in which the height changing mechanism 90 is not provided. FIG. 78 illustrates an embodiment in a configuration in which the working vehicle 1 is not provided with the height changing mechanism 90 (the lifting cylinder 91 and the like). The working vehicle 1 in the embodiment has a structure that allows the vehicle body 2 to be located above the traveling device 3 by the frame structure 18, and the first piece of equipment 201A and the second piece of equipment 201B are respectively located on both sides of the vehicle body 2.

In the working vehicle 1 in the embodiment, the vehicle body 2 is always at a high position (position above the traveling device 3). Thus, the pieces of equipment 201 can be located (attached) leftward and rightward (or forward and rearward) at opposite sides of the vehicle body 2 from each other without moving the vehicle body 2 upward. In the working vehicle 1 in the embodiment, the support frame 210 can be attached to the vehicle body 2 by raising the support frame 210 upward of the vehicle body 2, and lowering the support frame 210.

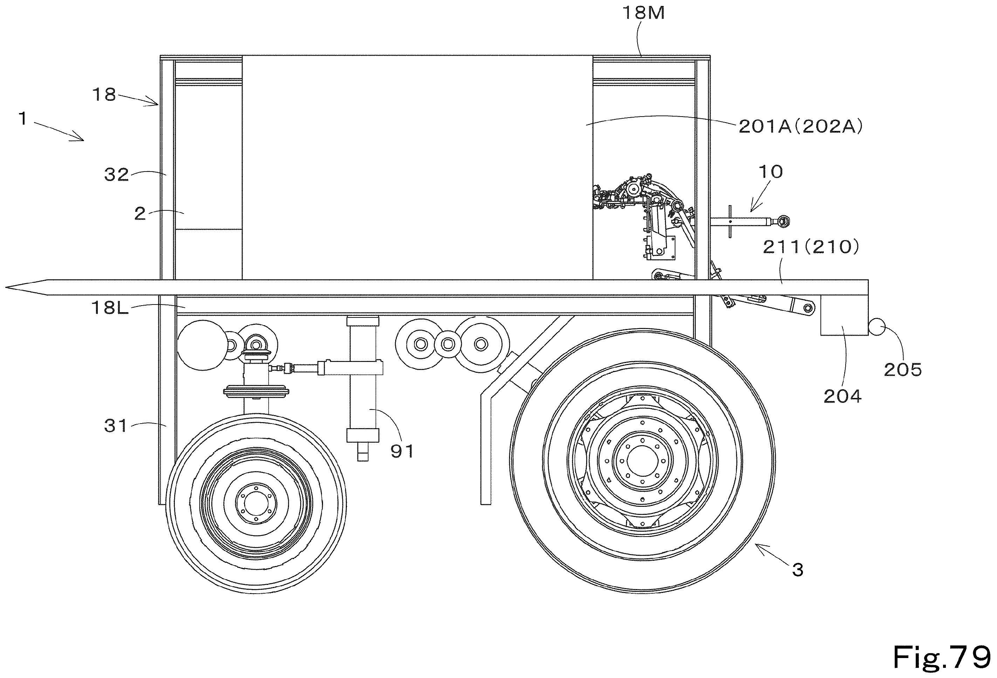

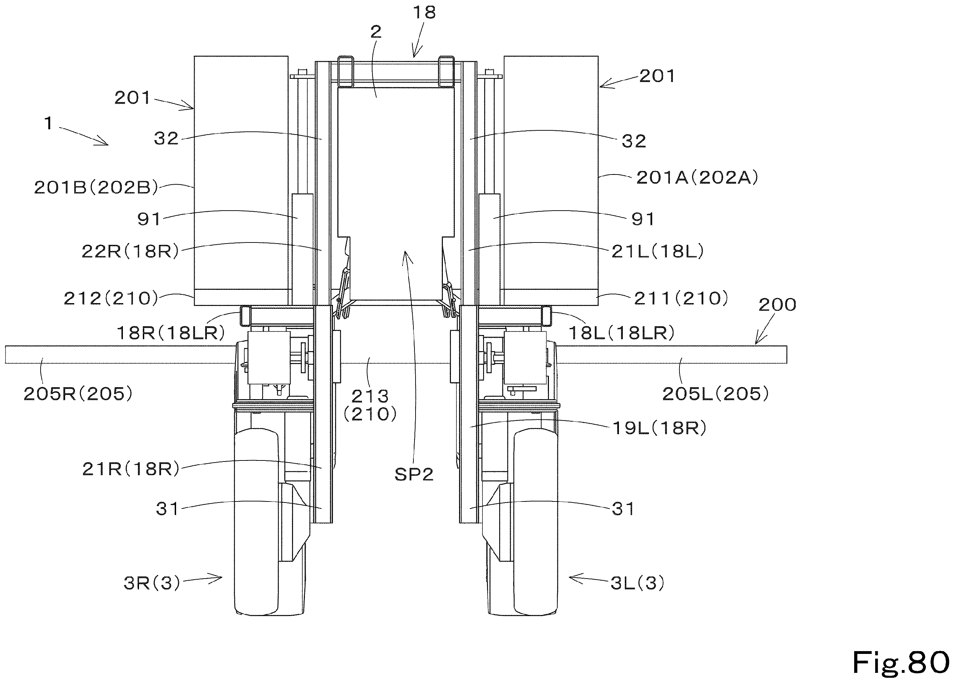

FIG. 79 and FIG. 80 illustrate the working vehicle 1 including the support frame 210 in another embodiment. The support frame 210 in another embodiment is located below the pieces of equipment 201. The support frame 210 extends in the lateral direction to be located across the first piece of equipment 201A and the second piece of equipment 201B. The first piece of equipment 201A is attached to an upper left portion of the support frame 210. The second piece of equipment 201B is attached to an upper right portion of the support frame 210. In other words, the support frame 210 is attached so as to connect a lower portion of the first piece of equipment 201A and a lower portion of the second piece of equipment 201B. Thus, the support frame 210 supports the pieces of equipment 201 (the first piece of equipment 201A and the second piece of equipment 201B) from below.

As illustrated in FIG. 80, the distance (distance in the lateral direction) between the first piece of equipment 201A and the second piece of equipment 201B attached to the support frame 210 is longer than the width (length in the lateral direction) of the vehicle body 2. Also, the distance between the first piece of equipment 201A and the second piece of equipment 201B attached to the support frame 210 is longer than the width of the frame structure 18. Thus, a space SP2 is provided between the first piece of equipment 201A and the second piece of equipment 201B such that the vehicle body 2 and the frame structure 18 can be located in the space SP2. With the spreader 200 attached to the vehicle body 2, the vehicle body 2 and the frame structure 18 are located in the space SP2.

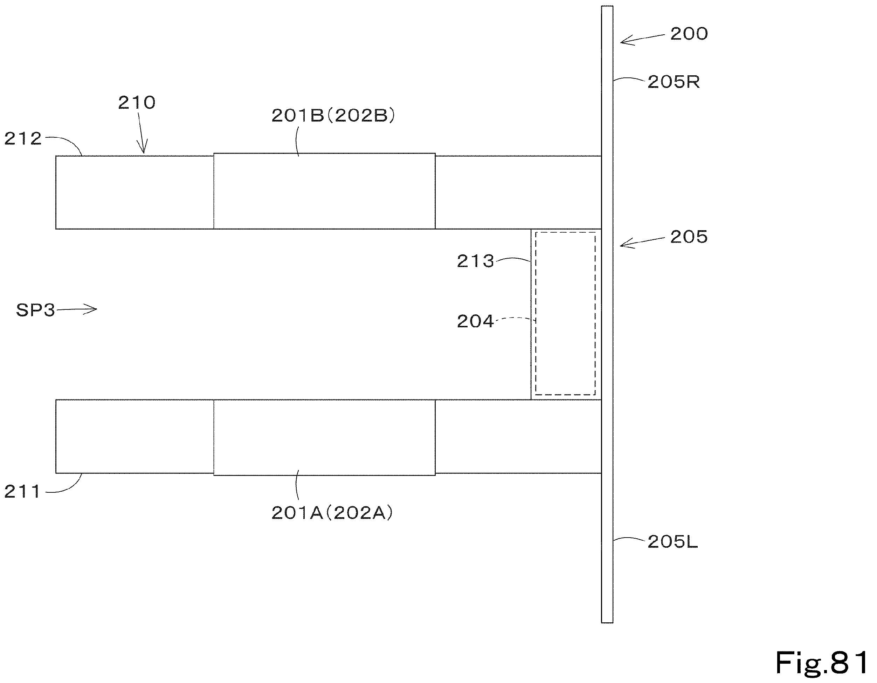

As illustrated in FIG. 81, the support frame 210 includes the first support frame 211, the second support frame 212, and a third support frame 213. The first support frame 211 and the second support frame 212 are spaced apart in the lateral direction, located in parallel to each other and extend in the front-rear direction. The first support frame 211 supports a lower portion of the first piece of equipment 201A. The second support frame 212 supports a lower portion of the second piece of equipment 201B.

The third support frame 213 connects a rear portion of the first support frame 211 and a rear portion of the second support frame 212. A front portion of the first support frame 211 and a front portion of the second support frame 212 are not connected. With the support frame 210 attached to the vehicle body 2, the vehicle body 2 is located in a space SP3 surrounded by the first support frame 211, the second support frame 212 and the third support frame 213.

As illustrated in FIG. 79 and FIG. 81, the pump 204 is attached to the support frame 210. Specifically, the pump 204 is attached to the third support frame 213. The pump 204 attached to the third support frame 213 is located rearward of a lower portion of the vehicle body 2. The boom 205 is located rearward of the third support frame 213. The boom 205 extends in the lateral direction rearward of a lower portion of the vehicle body 2.

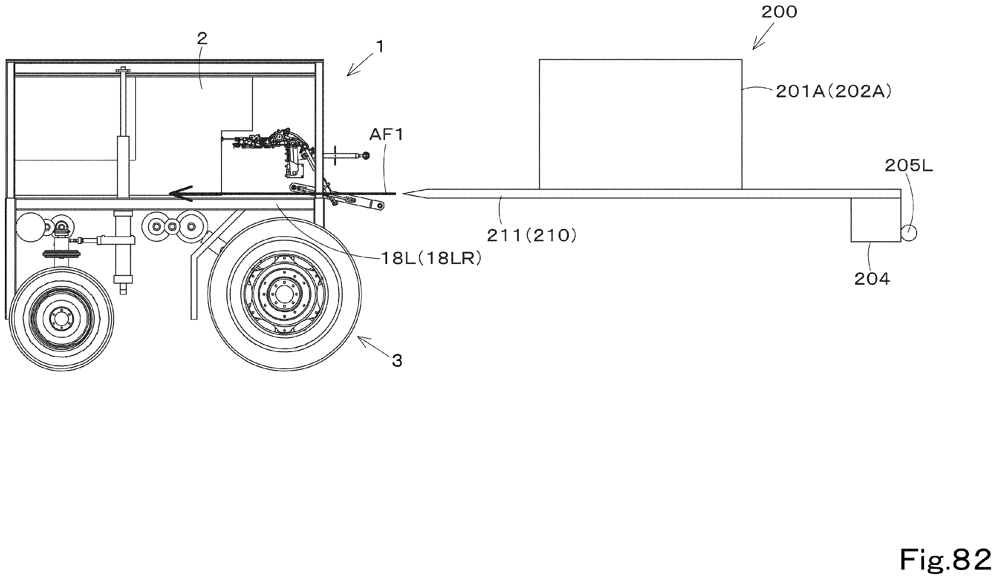

The support frame 210 is attached to the vehicle body 2 from the rear. When the support frame 210 is attached to the vehicle body 2, first, the vehicle body 2 is raised to a high position (for example, at the second height (the upper limit height)) by driving the height changing mechanism 90. Next, with the vehicle body 2 at the high position, the support frame 210 is located rearward of the vehicle body 2 (see FIG. 82). In this situation, the vehicle body 2 is located between the first piece of equipment 201A and the second piece of equipment 201B in the lateral direction such that the first piece of equipment 201A and the second piece of equipment 201B overlap the vehicle body 2 in the up-down direction.

Next, the support frame 210 is moved forward (see an arrow AF1 in FIG. 82). In this situation, the vehicle body 2 is interposed between the first support frame 211 and the second support frame 212. The first support frame 211 is placed on the left frame 18L, and the second support frame 212 is placed on the right frame 18R (see FIG. 80). Thus, with the vehicle body 2 interposed between the first piece of equipment 201A and the second piece of equipment 201B, and the support frame 210 placed above the side frames 18LR (the left frame 18L and the right frame 18R) of the frame structure 18, the support frame 210 is attached to the vehicle body 2 (see FIG. 80). With the support frame 210 attached to the vehicle body 2, the first support frame 211 is located leftward of the vehicle body 2, the second support frame 212 is located rightward of the vehicle body 2, and the third support frame 213 is located rearward of the vehicle body 2.

Note that the support frame 210 may be attached to the vehicle body 2 from the front. In this case, the third support frame 213 connects a front portion of the first support frame 211 and a rear portion of the second support frame 212, and does not connect a rear portion of the first support frame 211 and the rear portion of the second support frame 212. In this case, with the support frame 210 attached to the vehicle body 2, the first support frame 211 is located leftward of the vehicle body 2, the second support frame 212 is located rightward of the vehicle body 2, and the third support frame 213 is located forward of the vehicle body 2.

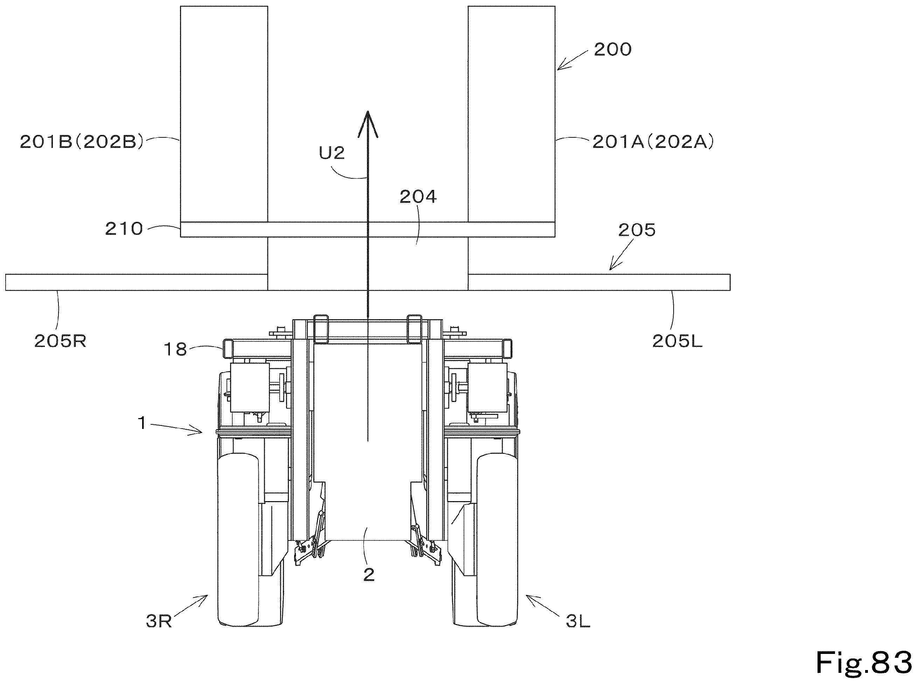

Also, the support frame 210 may be attached to the vehicle body 2 from above. In this case, the support frame 210 is attached to the vehicle body 2 by raising the vehicle body 2 by the above-described height changing mechanism 90. When the support frame 210 is attached to the vehicle body 2, first, with the vehicle body 2 at a low position (for example, at the first height), the support frame 210 is located above the vehicle body 2 (see FIG. 83). In this situation, the vehicle body 2 is located between the first piece of equipment 201A and the second piece of equipment 201B in the lateral direction such that the first piece of equipment 201A and the second piece of equipment 201B overlap the vehicle body 2 in the front-rear direction. Next, the vehicle body 2 is raised to a high position (for example, at the second height) by driving the height changing mechanism 90 (see an arrow U2 in FIG. 83). Thus, with the vehicle body 2 interposed between the first piece of equipment 201A and the second piece of equipment 201B, and the support frame 210 placed above the side frames 18LR (the left frame 18L and the right frame 18R) of the frame structure 18, the support frame 210 is attached to the vehicle body 2 (see FIG. 80).

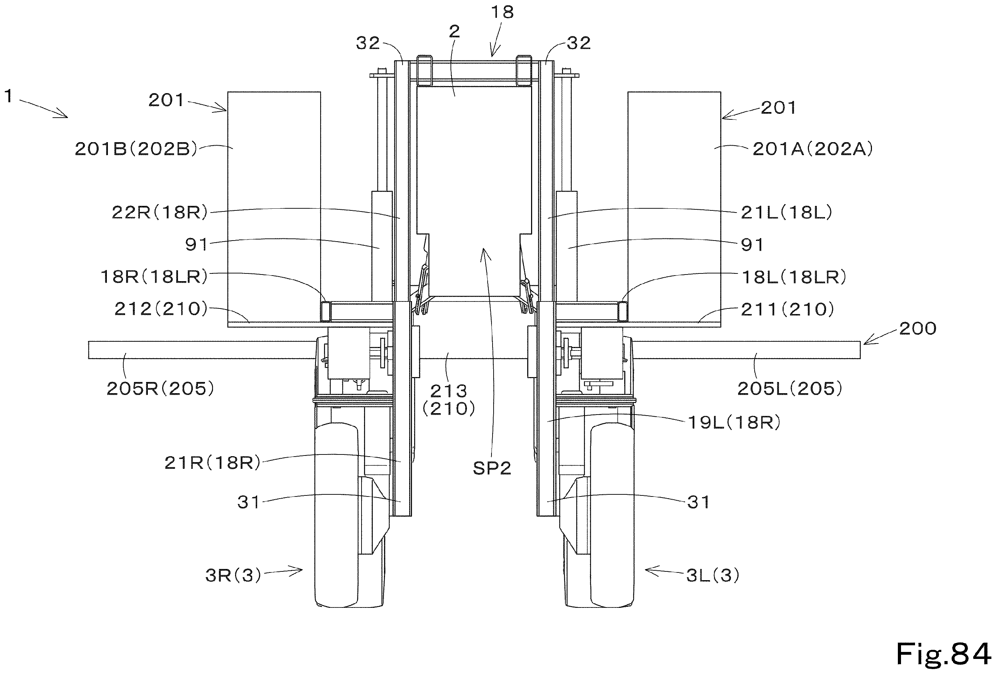

As described above, in the embodiment illustrated in FIG. 80, a configuration is adopted in which when the support frame 210 is attached to the vehicle body 2, the support frame 210 is placed above the side frames 18LR. However, in the present invention, instead of this configuration, a configuration may be adopted in which when the support frame 210 is attached to the vehicle body 2, the support frame 210 is located below the side frames 18LR (see FIG. 84).

In the embodiment illustrated in FIG. 84, the support frame 210 is located below the side frames 18LR. Also, the fixed frame 31 is interposed between the first support frame 211 and the second support frame 212 from the left and the right. The support frame 210 is attached to the frame structure 18 by interposing the fixed frame 31 between the first support frame 211 and the second support frame 212 from the left and the right. The inner surface (right surface) of the first support frame 211 is in contact with the outer surface (left surface) of the first left frame 19L, and the inner surface (left surface) of the second support frame 212 is in contact with the outer surface (right surface) of the first right frame 21R.

The support frame 210 can be attached to the frame structure 18, for example, by locking a fastener provided on the inner surface of the first support frame 211 and the second support frame 212 in a latch provided on the outer surface of the first left frame 19L and the first right frame 21R.

In the above-described embodiment, the piece of equipment 201 included in the working device 200 is the tank 202, but the piece of equipment 201 included in the working device 200 may be a battery. In this case, the battery includes a first battery located on one side (leftward) of the vehicle body 2, and a second battery located on the other side (rightward) of the vehicle body 2. In other words, the first piece of equipment 201A is the first battery, and the second piece of equipment 201B is the second battery. The first battery is located on one side (leftward or forward) of the vehicle body 2. The second battery is located on the other side (rightward or rearward) of the vehicle body 2.

Although the working vehicle 1 according to the present invention has been described above, the working vehicle 1 does not necessarily need to include all components described above. From all the components described above, part of the components may be selected as appropriate and provided according to the application of the working vehicle 1. For example, the controller 15 may include only one or two of the distance changing control unit 15B, the height changing control unit 15C, and the position changing control unit 15D. In this case, the working vehicle 1 may include only one or two of the distance changing mechanism 80, the height changing mechanism 90, and the position changing mechanism 110, the one or two corresponding to the relevant control units.

The main characteristic items and effects of the working vehicles 1 described above are as follows.

(Item A1) A working vehicle 1 including a vehicle body 2, left and right traveling devices 3 to support the vehicle body 2 such that the vehicle body 2 is allowed to travel, a first detector 70 to detect a situation in a surrounding area of the vehicle body 2, and a distance changing mechanism 80 to change a distance between the left and right traveling devices 3L, 3R, wherein the distance changing mechanism 80 is configured to change the distance such that the changed distance corresponds to a detection result from the first detector 70.

With the working vehicle 1, the distance between the left and right traveling devices 3L and 3R can be adjusted according to the situation in the surrounding area. More specifically, the distance between the left and right traveling device 3L and 3R can be adjusted by the distance changing mechanism 80 such that the distance corresponds to the detection result of the situation in the surrounding area of the vehicle body 2 detected by the first detector 70. Thus, it is possible to avoid interference of travel of the working vehicle 1 with an object with a width greater than the distance between the left and right traveling devices.

(Item A2) The working vehicle 1 according to item A1, wherein the first detector 70 is configured to detect, as the situation in the surrounding area of the vehicle body 2, road information including a value relating to a road travelable by the left and right traveling devices 3, and the distance changing mechanism 80 is configured to change the distance such that the changed distance corresponds to the road information.

With the working vehicle 1, the distance between the left and right traveling devices 3L and 3R can be adjusted such that the distance corresponds to road information including a value relating to a road travelable by the traveling device 3.

(Item A3) The working vehicle 1 according to item A2, wherein the first detector 70 is configured to detect, as the road information, a width of a travelable road, and the distance changing mechanism 80 is configured to change the distance such that the changed distance corresponds to the width of the travelable road.

With the working vehicle 1, the distance between the left and right traveling devices 3L and 3R can be adjusted such that the distance corresponds to the width of the travelable road.

(Item A4) The working vehicle 1 according to item A3, wherein the first detector 70 is configured to detect, as the width of the travelable road, a width of a ridge on a ground surface, and the distance changing mechanism 80 is configured to change the distance such that the changed distance corresponds to the width of the ridge.

With the working vehicle 1, the distance between the left and right traveling devices 3L and 3R can be adjusted such that the distance corresponds to the width of the ridge. Thus, even if the width of the ridge is wide, the working vehicle 1 can travel with the ridge located between the left and right traveling devices 3L and 3R.

(Item A5) The working vehicle 1 according to item A4, wherein the first detector 70 is configured to detect the width of the ridge UN which is located in front of the vehicle body 2 in a direction of travel of the vehicle body 2, and the distance changing mechanism 80 is configured to change the distance during or before travel of the vehicle body 2 to reach an area above the ridge UN located in front of the vehicle body 2 in the direction of travel of the vehicle body 2.

With the working vehicle 1, it is possible to avoid contact of the left and right traveling devices 3L and 3R with the ridge in front of the vehicle body 2 in the travel direction.

(Item A6) The working vehicle 1 according to item A4, wherein the first detector 70 is configured to, while the vehicle body 2 is traveling along a first ridge UN1, detect a width of a second ridge UN2 adjacent to the first ridge UN1, and the distance changing mechanism 80 is configured to change the distance while the vehicle body 2 which has finished traveling along the first ridge UN1 is turning to start traveling along the second ridge UN2.

With the working vehicle 1, when the vehicle body 2 moves from the first ridge to the second ridge and travels, it is possible to avoid contact of the left and right traveling devices 3L and 3R with the second ridge.

(Item A7) The working vehicle 1 according to item A3, wherein the first detector 70 is configured to detect, as the width of the travelable road, a width of an obstacle on a ground surface that hinders travel, and the distance changing mechanism 80 is configured to change the distance such that the detected obstacle is located between the left and right traveling devices 3 while the vehicle body 2 is traveling.

With the working vehicle 1, when the vehicle body 2 travels toward an obstacle on the ground surface, it is possible to avoid contact of the left and right traveling devices 3L and 3R with the obstacle.

(Item A8) The working vehicle 1 according to any one of items A1 to A7, wherein the left and right traveling devices 3 include the left traveling device 3L located leftward of the vehicle body 2 and the right traveling device 3L located rightward of the vehicle body 2, the distance changing mechanism 80 includes a left changing mechanism 80L to change a position of the left traveling device 3L in a lateral direction, and a right changing mechanism 80R to change a position of the right traveling device 3R in the lateral direction, and the distance changing mechanism 80 is configured to actuate the left changing mechanism 80L and the right changing mechanism 80R independently of each other based on the detection result from the first detector 70.

In the working vehicle 1, the left changing mechanism 80L and the right changing mechanism 80R can be independently actuated based on detection results from the first detector 70, and thus the position of the left changing mechanism 80L in the lateral direction and the position of the right changing mechanism 80R in the lateral direction can be set to an optimal position independently according to the positional relationship between the vehicle body 2 and the obstacle and the like.

(Item A9) The working vehicle 1 according to item A8, wherein the first detector 70 is configured to detect, as the situation in the surrounding area of the vehicle body 2, an inclination of a ground surface in the lateral direction, and the distance changing mechanism 80 is configured to, based on the detected inclination, move one of the left and right traveling devices 3L, 3R that is located lower than the other away from a widthwise center of the vehicle body 2.

With the working vehicle 1, it is possible to stabilize the working vehicle 1 on an inclined surface with inclination in the lateral direction.

(Item A10) The working vehicle 1 according to any one of items A1 to A9, wherein the left and right traveling devices include the left traveling device 3L located leftward of the vehicle body 2 and the right traveling device 3R located rightward of the vehicle body 2, the left traveling device 3L includes a left front wheel 3LF and a left rear wheel 3LB, the right traveling device 3R includes a right front wheel 3RF and a right rear wheel 3RB, the distance changing mechanism 80 includes a first changing mechanism 801 to change a position of the left front wheel 3LF in a lateral direction, a second changing mechanism 802 to change a position of the left rear wheel 3LB in the lateral direction, a third changing mechanism 803 to change a position of the right front wheel 3RF in the lateral direction, and a fourth changing mechanism 804 to change a position of the right rear wheel 3RB in the lateral direction, and the distance changing mechanism 80 is configured to, based on the detection result from the first detector 70, actuate the first changing mechanism 801, the second changing mechanism 802, the third changing mechanism 803, and the fourth changing mechanism 804 independently of each other.

With the working vehicle 1, the positions of the left front wheel 3LF, the left rear wheel 3LB, the right front wheel 3RF, and the right rear wheel 3RB in the lateral direction can be independently set to an optimal position by independently actuating the first changing mechanism 801, the second changing mechanism 802, the third changing mechanism 803, and the fourth changing mechanism 804, respectively.

(Item A11) The working vehicle 1 according to any one of items A1 to A10, further including a second detector 75 to detect the distance between the left and right traveling devices 3L, 3R.

With the working vehicle 1, the distance between the left and right traveling devices 3L and 3R can be adjusted by the distance changing mechanism 80 based on the detection result of the situation in the surrounding area of the vehicle body 2 detected by the first detector 70, and on the distance between the left and right traveling devices 3L and 3R detected by the second detector 75.

(Item A12) The working vehicle 1 according to item A11, wherein the left and right traveling devices 3 include the left traveling device 3L located leftward of the vehicle body 2 and the right traveling device 3R located rightward of the vehicle body 2, the distance changing mechanism 80 includes a left changing mechanism 80L to change a position of the left traveling device 3L in a lateral direction, and a right changing mechanism 80R to change a position of the right traveling device 3R in the lateral direction, and the second detector 75 is configured to detect the distance between the left and right traveling devices 3L, 3R by detecting the amount of extension or retraction of each of the left and right changing mechanisms 80L, 80R.

In the working vehicle 1, the second detector 75 detects the distance between the left and right traveling devices 3L and 3R by detecting the amount of extension or retraction of each of the left changing mechanism 80L and the right changing mechanism 80R, and thus can detect the distance between the left and right traveling devices 3L and 3R accurately and easily.

(Item A13) The working vehicle 1 according to item A11, wherein the first detector 70 is configured to detect, as the situation in the surrounding area of the vehicle body 2, a width of a ridge on a ground surface, and the distance changing mechanism 80 is configured to, based on the width of the ridge and the distance between the left and right traveling devices 3L, 3R, change the distance such that the changed distance corresponds to the width of the ridge.

With the working vehicle 1, the distance between the left and right traveling devices 3L and 3R can be caused to correspond to the width of the ridge based on the width of the ridge and the distance between the left and right traveling devices 3L and 3R. Thus, even if the width of the ridge is wide, the working vehicle 1 can travel with the ridge located between the left and right traveling devices 3L and 3R.

(Item A14) The working vehicle 1 according to any one of items A1 to A13, wherein the first detector 70 includes a camera 71 to capture an image of a ridge located ahead of the vehicle body 2 in a direction of travel, the camera 71 being provided in or on the vehicle body 2, and a calculator 73 to calculate a width of the ridge based on the image captured by the camera 71.

With the working vehicle 1, it is possible to reliably calculate the width of a ridge located ahead of the vehicle body 2 in the travel direction based on the image captured by the camera 71.

(Item A15) The working vehicle 1 according to any one of items A1 to A13, wherein the first detector 70 includes a sensor 72 to detect a ridge located ahead of the vehicle body 2 in a direction of travel, the sensor 72 being provided in or on the vehicle body 2, and a calculator 73 to calculate a width of the ridge based on detection data from the sensor 72.

With the working vehicle 1, it is possible to reliably calculate the width of a ridge located ahead of the vehicle body 2 in the travel direction based on the detection data from the sensor 72.

(Item B1) A working vehicle 1 including a vehicle body 2, a traveling device 3 to support the vehicle body 2 such that the vehicle body 2 is allowed to travel, and a height changing mechanism 90 to change a height of the vehicle body 2 that is a distance of the vehicle body 2 from a ground surface, wherein the height changing mechanism 90 is configured to change the height of the vehicle body 2 to any height between a first height HA and a second height HB higher than the first height HA.

With the working vehicle 1, it is possible to change the height of the vehicle body according to various situations. Thus, for example, the height of the vehicle body can be changed to a height suitable for the work performed by the working vehicle.

(Item B2) The working vehicle 1 according to item B1, further including a mount 10 provided on the vehicle body 2 to attach and detach a working device 200 thereto and therefrom, wherein the height changing mechanism 90 is configured to change the height of the vehicle body 2 according to work performed by the working device 200.

With the working vehicle 1, the height of the vehicle body 2 can be changed according to the work performed by the working device 200, and thus the working device 200 can be set to an optimal height for the work, and the work can be performed smoothly.

(Item B3) The working vehicle 1 according to item B2, further including a recognizer 102 to recognize the working device 200 attached to the mount 10, wherein the height changing mechanism 90 is configured to change the height of the vehicle body 2 according to the working device 200 recognized by the recognizer 100.

With the working vehicle 1, the height of the vehicle body 2 can be changed according to the working device 200 recognized by the recognizer 100, and thus the height of the vehicle body 2 can be changed such that the height reliably corresponds to the working device 200 attached to the mount 10.

(Item B4) The working vehicle 1 according to item B1, further including a manual operator 101 to be operated to indicate the height of the vehicle body 2, wherein the height changing mechanism 90 is configured to change the height of the vehicle body 2 according to the indication of the height via the manual operator 101.

With the working vehicle 1, the height of the vehicle body 2 can be changed by an operator indicating the height of the vehicle body 2 with the manual operator 101.

(Item B5) The working vehicle 1 according to item B2, wherein the height changing mechanism 90 is configured to control the height of the vehicle body 2 to be a first work height when the working device 200 attached to the mount 10 is a first working device, and control the height of the vehicle body 2 to be a second work height when the working device 200 attached to the mount 10 is a second working device different from the first working device.

With the working vehicle 1, the first working device and the second working device can be set to heights suitable for respective types of work by the height changing mechanism 90.

(Item B6) The working vehicle 1 according to item B1, wherein the height changing mechanism 90 is configured to control the height of the vehicle body 2 to be equal to or greater than the first height HA when a crop SM planted in the ground surface is a first crop SM1.

With the working vehicle 1, it is possible to travel with the first crop SM1 located between the left and right traveling devices while avoiding contact of the vehicle body 2 with the first crop SM1 planted in the ground surface.

(Item B7) The working vehicle 1 according to item B6, wherein the height changing mechanism 90 is configured to, when the crop SM planted in the ground surface is a second crop SM2 higher than the first crop SM1, control the height of the vehicle body 2 to be greater than a predetermined height of the vehicle body 2 corresponding to the first crop SM1 and equal to or less than the second height HB.

In the working vehicle 1, when the crop SM planted in the ground surface is changed to the second crop SM2 higher than the first crop SM1, the height of the vehicle body 2 is controlled to be higher than the predetermined height of the vehicle body 2 corresponding to the first crop SM1 and lower than or equal to the second height HB, and thus the working vehicle 1 can travel with the second crop SM2 located between the left and right traveling devices while avoiding contact of the vehicle body 2 with the second crop SM2.

(Item B8) The working vehicle 1 according to item B7, wherein the height changing mechanism 90 is configured to use the predetermined height of the vehicle body 2 corresponding to the first crop SM1 that is higher than the first crop SM1, and a predetermined height of the vehicle body 2 corresponding to the second crop SM2 that is higher than the second crop SM2.

With the working vehicle 1, when the first crop SM1 and the second crop SM2 with different heights are planted in the ground surface, it is possible to travel with the first crop SM1 and the second crop SM2 located between the left and right traveling devices while avoiding contact of the vehicle body 2 with the first crop SM1 and the second crop SM2.

(Item B9) The working vehicle 1 according to any one of items B1 to B8, wherein the traveling device 3 includes one or more wheels 30, and the height changing mechanism 90 is configured to change the height of the vehicle body 2 between the first height HA at which a position of the vehicle body 2 in an up-down direction overlaps a position of the one or more wheels 30 in the up-down direction and the second height HB at which the vehicle body 2 is located higher than the one or more wheels 30 in the up-down direction.

With the working vehicle 1, it is possible to travel with a crop, an obstacle, and the like located between the left and right traveling devices while avoiding contact with the crop, obstacle, and the like at approximately the same height as the wheels 30.

(Item B10) The working vehicle 1 according to any one of items B1 to B9, wherein the height changing mechanism 90 is configured to change the height of the vehicle body 2 between the first height HA at which a position of the vehicle body 2 in an up-down direction overlaps a position of the traveling device 3 in the up-down direction and the second height HB at which the vehicle body 2 is located higher than the traveling device 3 in the up-down direction.

With the working vehicle 1, it is possible to travel with a crop, an obstacle, and the like located between the left and right traveling devices while avoiding contact with the crop, obstacle, and the like at approximately the same height as the traveling device 3.

(Item B11) The working vehicle 1 according to any one of items B1 to B10, wherein the traveling device 3 includes a left traveling device 3L located leftward of the vehicle body 2 and a right traveling device 3R located rightward of the vehicle body 2, the vehicle body 2 is located between the left traveling device 3L and the right traveling device 3R, and the height changing mechanism 90 is configured to change the height of the vehicle body 2 by raising or lowering the vehicle body 2 at a location between the left traveling device 3L and the right traveling device 3R.

With the working vehicle 1, it is possible to travel with a crop, an obstacle, and the like located between the left traveling device 3L and the right traveling device 3R by positioning the vehicle body 2 higher than the height of the crop, obstacle, and the like.

(Item B12) The working vehicle 1 according to any one of items B1 to B11, further including a frame structure 18 provided at a periphery of the vehicle body 2 and attached to the vehicle body 2, wherein the frame structure 18 includes a left frame 18L located leftward of the vehicle body 2 to extend in an up-down direction, a right frame 18R located rightward of the vehicle body 2 to extend in the up-down direction, and a lateral frame 18M connecting an upper portion of the left frame 18L and an upper portion of the right frame 18R, the vehicle body 2 is positioned such that the vehicle body 2 is in an area defined by the left frame 18L, the right frame 18R, and the lateral frame 18M in a front view, and the height changing mechanism 90 is configured to change the height of the vehicle body 2 that is the distance of the vehicle body 2 from the ground surface by raising or lowering the frame structure 18.

With the working vehicle 1, the vehicle body 2 is located in an area defined by the left frame 18L, the right frame 18R and the lateral frame 18M, and thus the vehicle body 2 can be protected from an external force. The height of the vehicle body 2 that is the distance of the vehicle body 2 from the ground surface can be changed by raising or lowering the frame structure 18, and thus a load on the vehicle body 2 can be reduced as compared to when the vehicle body 2 is directly raised or lowered.

(Item B13) The working vehicle 1 according to item B12, wherein the height changing mechanism 90 includes a lifting cylinder 91 including a rod 91a to extend and retract in the up-down direction and configured to raise and lower the frame structure 18, and the lifting cylinder 91 includes a lower end positioned at the same or substantially the same height from the ground surface as the height of the vehicle body 2 when the vehicle body 2 is at the first height HA.

With the working vehicle 1, when the vehicle body 2 is lowered to the lower limit position, it is possible to minimize the amount of projection by which the upper portion of the lifting cylinder 91 projects upward from the vehicle body 2.

(Item B14) The working vehicle 1 according to any one of items B1 to B13, further including a situation detector (first detector) 70 to detect a situation in a surrounding area of the vehicle body 2, a height detector (third detector) 77 to detect the height of the vehicle body 2 that is the distance of the vehicle body 2 from the ground surface, and a controller 15 configured or programmed to actuate the height changing mechanism 90 based on detection results from the situation detector 70 and the height detector 77 to change the height of the vehicle body 2.

With the working vehicle 1, the height of the vehicle body 2 can be changed based on detection results from the situation detector 70 and the height detector 77, and thus the height of the vehicle body 2 can be reliably set to an optimal height according to the situation in the surrounding area.

(Item B15) The working vehicle 1 according to item B14, wherein the situation detector 70 is configured to detect, as the situation in the surrounding area of the vehicle body 2, a height of an obstacle on the ground surface that hinders travel, and the controller 15 is configured or programmed to compare the height of the obstacle detected by the situation detector 70 with the height of the vehicle body 2 detected by the height detector 77, and actuate the height changing mechanism 90 to change the height of the vehicle body 2 such that the changed height of the vehicle body 2 is equal to or greater than the height of the obstacle.

In the working vehicle 1, the height of the vehicle body 2 can be set to a height which prevents contact with an obstacle, and thus it is possible to reliably avoid contact of the vehicle body 2 with the obstacle.

(Item B16) The working vehicle 1 according to item B15, wherein the situation detector 70 is configured to detect, as the height of the obstacle, a height of a crop SM planted in the ground surface.

In the working vehicle 1, the height of the vehicle body 2 can be set to a height which prevents contact with the crop SM, and thus it is possible to reliably avoid contact of the vehicle body 2 with the crop SM.

(Item B17) The working vehicle 1 according to item B16, wherein the situation detector 70 is configured to detect the height of the crop SM located forward of the vehicle body 2 in a direction of travel of the vehicle body 2, and the controller 15 is configured or programmed to actuate the height changing mechanism 90 to change the height of the vehicle body 2 during or before travel of the vehicle body 2 to reach the crop SM located in front of the vehicle body 2 in the direction of travel of the vehicle body 2.

With the working vehicle 1, it is possible to avoid contact of the left and right traveling devices 3L and 3R with the crop SM in front of the vehicle body 2 in the travel direction.

(Item B18) The working vehicle 1 according to item B16, wherein the situation detector 70 is configured to, while the vehicle body 2 is traveling along a first row RT1 of one or more crops SM, detect a height of one or more crops SM in a second row RT2 adjacent to the first row RT1, and the controller 15 is configured or programmed to actuate the height changing mechanism 90 to change the height of the vehicle body 2 while the vehicle body 2 which has finished traveling along the first row RT1 is turning to start traveling along the second row RT2.

With the working vehicle 1, when the vehicle body 2 moves from the first row RT1 to the second row RT2 and travels, it is possible to avoid contact of the left and right traveling devices 3L and 3R with the crop SM in the second row RT2.

(Item C1) A working vehicle 1 including a vehicle body 2, a traveling device 3 to support the vehicle body 2 such that the vehicle body 2 is allowed to travel, and a height changing mechanism 90 to change a height of the vehicle body 2 that is a distance of the vehicle body 2 from a ground surface, wherein the traveling device 3 includes a left traveling device 3L located leftward of the vehicle body 2 and a right traveling device 3R located rightward of the vehicle body 2, the vehicle body 2 is located between the left traveling device 3L and the right traveling device 3R, and the height changing mechanism 90 is configured to raise and lower the vehicle body 2 at a location between the left traveling device 3L and the right traveling device 3R in a width direction of the vehicle body 2.

With the working vehicle 1, it is possible to travel with a crop and the like reliably located between the left and right traveling devices 3L and 3R by raising and lowering the vehicle body 2 between the left and right traveling devices 3L and 3R.

(Item C2) The working vehicle 1 according to item C1, further including a power supply apparatus 4 to generate power to drive the traveling device 3, wherein the vehicle body 2 includes a housing frame 2 to house the power supply apparatus 4.

With the working vehicle 1, the housing frame 2 which houses the power supply apparatus 4 can be raised and lowered by the height changing mechanism 90.

(Item C3) The working vehicle 1 according to item C2, wherein the power supply apparatus 4 includes a motor 5 and a battery 7 to store electricity to be supplied to the motor 5, and the height changing mechanism 90 is configured to raise and lower the housing frame 2 which houses the battery 7.

With the working vehicle 1, the housing frame 2 which houses the battery 7 can be raised and lowered by the height changing mechanism 90.

(Item C4) The working vehicle 1 according to any one of items C1 to C3, further including a frame structure 18 provided at a periphery of the vehicle body 2, wherein the left traveling device 3L includes a left front wheel 3LF and a left rear wheel 3LB, the right traveling device 3R includes a right front wheel 3RF and a right rear wheel 3RB, and the frame structure 18 includes a left frame 18L connecting the left front wheel 3LF and the left rear wheel 3LB, and a right frame 18R connecting the right front wheel 3RF and the right rear wheel 3RB.

With the working vehicle 1, the left front wheel 3LF and the left rear wheel 3LB of the left traveling device 3L, and the right front wheel 3RF and the right rear wheel 3RB of the right traveling device 3R can be connected together by the frame structure 18 at the periphery (outer side) of the vehicle body 2.

(Item C5) The working vehicle 1 according to item C4, wherein the frame structure 18 includes a fixed frame 31 which has the traveling device 3 attached thereto and a movable frame 32 attached to the vehicle body 2, and the height changing mechanism 90 is configured to raise and lower the movable frame 32 relative to the fixed frame 31.

With the working vehicle 1, the vehicle body 2 can be raised or lowered relative to the traveling device 3 by raising or lowering the movable frame 32 with relative to the fixed frame 31.

(Item C6) The working vehicle 1 according to any one of items C1 to C5, wherein the height changing mechanism 90 is configured to change the height of the vehicle body 2 to any height within a predetermined height range.

With the working vehicle 1, the height of the vehicle body 2 can be changed to an optimal height by the height changing mechanism 90.

(Item C7) The working vehicle 1 according to any one of items C1 to C6, wherein the height changing mechanism 90 is configured to change the height of the vehicle body 2 to a height at which the vehicle body 2 is located between the left traveling device 3L and the right traveling device 3R.

With the working vehicle 1, the height of the vehicle body 2 can be changed to a height between the left traveling device 3L and the right traveling device 3R, and thus the height of the vehicle body 2 can be lowered to reduce the vehicle height (the height of the working vehicle 1).

(Item C8) The working vehicle 1 according to any one of items C1 to C7, wherein the height changing mechanism 90 is configured to change the height of the vehicle body 2 to a height at which the vehicle body 2 is located higher than the left traveling device 3L and the right traveling device 3R.

With the working vehicle 1, the height of the vehicle body 2 can be changed to a height at which the vehicle body 2 is higher than the left traveling device 3L and the right traveling device 3R, and thus it is possible to travel with crop SM and the like located between the left traveling device 3L and the right traveling device 3R, the crop SM and the like being equivalent in height to the left traveling device 3L and the right traveling device 3R.

(Item C9) The working vehicle 1 according to item C4 or C5, wherein the vehicle body 2 is positioned between the left frame 18L and the right frame 18R.

With the working vehicle 1, the leftward area and the rightward area of the vehicle body 2 can be protected by the left frame 18L and the right frame 18R.

(Item C10) The working vehicle 1 according to any one of items C4, C5, and C9, wherein the frame structure 18 includes a lateral frame 18M connecting the left frame 18L and the right frame 18R.

With the working vehicle 1, it is possible to obtain a highly rigid frame structure 18 in which the left frame 18L, the right frame 18R, and the lateral frame 18M are integral with each other.

(Item C11) The working vehicle 1 according to item C10, wherein the lateral frame 18M connects an upper portion of the left frame 18L and an upper portion of the right frame 18R, and the vehicle body 2 is positioned such that the vehicle body 2 is in an area defined by the left frame 18L, the right frame 18R, and the lateral frame 18M in a front view.

With the working vehicle 1, the leftward area, the rightward area, and the upper area of the vehicle body 2 can be protected by the left frame 18L, the right frame 18R, and the lateral frame 18M.

(Item C12) The working vehicle 1 according to item C5, wherein the height changing mechanism 90 includes lifting cylinders 91 to raise and lower a respective plurality of the movable frames 32, the plurality of movable frames 32 are included in the left frame 18L and the right frame 18R, respectively, and a plurality of the fixed frames 31 are included in the left frame 18L and the right frame 18R, respectively, and the lifting cylinders 91 include a left lifting cylinder 91L to raise and lower the corresponding movable frame 32 of the left frame 18L, and a right lifting cylinder 91R to raise and lower the corresponding movable frame 32 of the right frame 18R.

With the working vehicle 1, each of the movable frame 32 of the left frame 18L and the movable frame 32 of the right frame 18R can be independently raised and lowered by the lifting cylinders 91.

(Item D1) A working vehicle 1 including a vehicle body 2, a traveling device 3 to support the vehicle body 2 such that the vehicle body 2 is allowed to travel, a power supply apparatus 4 to drive the traveling device 3, and a position changing mechanism 110 to change a position of the power supply apparatus 4.

With the working vehicle 1, the weight balance of the working vehicle 1 can be adjusted without requiring a weight, and the center of gravity position of the working vehicle 1 can be changed according to the situation. Thus, the working vehicle 1 can stably travel and perform the work according to the situation in the surrounding area. The center of gravity position of the working vehicle 1 is changed by changing the position of the existing power supply apparatus 4 in the front-rear direction, and thus another heavy object (for example, liquid) does not need to be separately mounted on the vehicle body 2 for the purpose of changing the center of gravity position, therefore, increases in the weight of the vehicle body can be prevented.

(Item D2) The working vehicle 1 according to item D1, wherein the position changing mechanism 110 is configured to change the position of the power supply apparatus 4 in a front-rear direction.

With the working vehicle 1, the weight balance of the working vehicle 1 in the front-rear direction can be adjusted without requiring a weight, and the center of gravity position of the working vehicle 1 in the front-rear direction can be changed according to the situation.

(Item D3) The working vehicle 1 according to item D1 or D2, wherein the power supply apparatus 4 includes a motor 5, and a battery 7 to store electricity to be supplied to the motor 5, and the position changing mechanism 110 is configured to change a position of the battery 7.

With the working vehicle 1, the weight balance of the working vehicle 1 can be easily adjusted by changing the position of the battery 7 which is a heavy object.

(Item D4) The working vehicle 1 according to any one of items D1 to D3, further including a housing frame 2 to house the power supply apparatus 4, wherein the position changing mechanism 110 is configured to change the position of the power supply apparatus 4 in the housing frame 2.

With the working vehicle 1, the center of gravity position of the working vehicle 1 can be changed according to the situation by changing the position of the power supply apparatus 4 in the housing frame 2.

(Item D5) The working vehicle 1 according to any one of items D1 to D3, further including a housing frame 2 to house the power supply apparatus 4, wherein the position changing mechanism 110 is configured to change the position of the power supply apparatus 4 together with the housing frame 2.

With the working vehicle 1, the center of gravity position of the working vehicle 1 can be changed according to the situation by changing the position of the power supply apparatus 4 together with the housing frame 2.

(Item D6) The working vehicle 1 according to any one of items D1 to D5, further including a slip ratio measurer 120 to measure a slip ratio of one or more wheels 30 of the traveling device 3 during travel, and a controller 15 configured or programmed to change the position of the power supply apparatus 4 by actuating the position changing mechanism 110 based on the slip ratio measured by the slip ratio measurer 120.

With the working vehicle 1, it is possible to achieve stable travel in a state where the wheels are unlikely to slip, by changing the position of the power supply apparatus 4 based on the slip ratio measured by the slip ratio measurer 120.

(Item D7) The working vehicle 1 according to item D6, wherein the controller 15 is configured or programmed to calculate, as an optimal position, the position of the power supply apparatus 4 where the slip ratio is lowest, and to move the power supply apparatus 4 to the optimal position by actuating the position changing mechanism 110 based on a result of the calculation.

With the working vehicle 1, it is possible to achieve stable travel in a state where the wheels are unlikely to slip, by moving the power supply apparatus 4 to the optimal position where the slip ratio is the lowest.

(Item D8) The working vehicle 1 according to item D6, wherein the traveling device 3 includes one or more front wheels 30F provided at a front portion of the vehicle body 2, and one or more rear wheels 30B provided at a rear portion of the vehicle body 2, and the slip ratio measurer 120 is configured or programmed to calculate the slip ratio using Expression (1) below, "the slip ratio = (Vb - Vw)/Vb, where Vb is a vehicle body speed, and Vw is a wheel speed " ... (1).

With the working vehicle 1, the slip ratio can be accurately calculated based on the vehicle body speed Vb and the wheel speed Vw.

(Item D9) The working vehicle 1 according to any one of items D1 to D5, further including a torque measurer 121 to measure a torque of one or more wheels 30 of the traveling device 3 during travel, and a controller 15 configured or programmed to change the position of the power supply apparatus 4 by actuating the position changing mechanism 110 based on the torque measured by the torque measurer 121.

With the working vehicle 1, when the working vehicle 1 gets stuck and wheelspin occurs, resulting in reduced torque, it is possible to recover from the stuck state by changing the center of gravity position of the vehicle by changing the position of the power supply apparatus 4.

(Item D10) The working vehicle 1 according to item D9, wherein the traveling device 3 includes one or more front wheels 30F provided at a front portion of the vehicle body 2, and one or more rear wheels 30B provided at a rear portion of the vehicle body 2, the torque measurer 121 is configured or programmed to measure each of a torque of the one or more front wheels 30F and a torque of the one or more rear wheels 30B, and the controller 15 is configured or programmed to, when the torque of the one or more rear wheels 30B is less than or equal to a predetermined value, move the power supply apparatus 4 forward, and when the torque of the one or more front wheels 30F is less than or equal to a predetermined value, move the power supply apparatus 4 rearward.

With the working vehicle 1, in both cases where the front wheels spin and where the rear wheels spin, it is possible to recover from the stuck state by changing the center of gravity position of the vehicle forward or rearward by changing the position of the power supply apparatus 4.

(Item D11) The working vehicle 1 according to any one of items D1 to D10, wherein a weight to adjust a weight balance of the working vehicle 1 is not provided, and the position changing mechanism 110 is configured to adjust the weight balance of the working vehicle 1 by changing the position of the power supply apparatus 4 without using the weight.

With the working vehicle 1, a weight is not provided, and thus the working vehicle 1 can be made lighter, and the weight balance of the working vehicle 1 can be adjusted by causing the power supply apparatus 4 to function as a substitute for a weight.

(Item E1) A working vehicle 1 including a vehicle body 2, a traveling device 3 to support the vehicle body 2 such that the vehicle body 2 is allowed to travel, and a working device 200 to perform work, wherein the working device 200 includes pieces of equipment 201 located at opposite sides of the vehicle body 2 from each other.

With the working vehicle 1, the center of gravity position of the working vehicle 1 can be lowered as compared to when the pieces of equipment 201 included in the working device 200 are mounted on the vehicle body 2, and thus the stability of the working vehicle 1 can be improved.

(Item E2) The working vehicle 1 according to item E1, wherein the opposite sides of the vehicle body 2 at which the pieces of equipment 201 are located are left and right sides of the vehicle body 2.

With the working vehicle 1, the right and left weight balance of the working device 200 can be made appropriate while lowering the center of gravity position of the working vehicle 1.

(Item E3) The working vehicle 1 according to item E1, wherein the opposite sides of the vehicle body 2 at which the pieces of equipment 201 are located are front and rear sides of the vehicle body 2.

With the working vehicle 1, the front and rear weight balance of the working device 200 can be made appropriate while lowering the center of gravity position of the working vehicle 1.

(Item E4) The working vehicle 1 according to any one of items E1 to E3, wherein the pieces of equipment 201A, 201B located at the opposite sides of the vehicle body 2 from each other have the same function.

In the working vehicle 1, the pieces of equipment having the same function can be arranged on one of the opposite sides and the other of the opposite sides with the vehicle body 2 therebetween. Thus, the center of gravity position of the working vehicle 1 can be prevented from being raised by providing the pieces of equipment having the same function in or on the vehicle body 2. Also, the right and left weight balance of the working vehicle 1 can be made appropriate.

(Item E5) The working vehicle 1 according to any one of items E1 to E3, wherein the pieces of equipment 201A, 201B located at the opposite sides of the vehicle body 2 from each other have respective different functions.

With the working vehicle 1, the pieces of equipment having different functions can be arranged on one of the opposite sides and the other of the opposite sides with the vehicle body 2 therebetween. Thus, the center of gravity position of the working vehicle 1 can be prevented from being raised by providing the pieces of equipment having different functions in or on the vehicle body 2. Also, the right and left weight balance of the working vehicle 1 can be made appropriate.

(Item E6) The working vehicle 1 according to any one of items E1 to E5, wherein the working device 200 is a spreader to spread a liquid substance, the pieces of equipment 201 are tanks 202 to store the liquid substance to be spread, and the tanks 202 include a first tank 202A and a second tank 202B located at the opposite sides of the vehicle body 2 from each other.

With the working vehicle 1, a plurality of tanks (the first tank 202A and the second tank 202B) can be arranged on one of the opposite sides and the other of the opposite sides with the vehicle body 2 therebetween. Thus, the center of gravity position of the working vehicle 1 can be prevented from being raised by providing the plurality of tanks in or on the vehicle body 2. Also, the right and left weight balance of the working vehicle 1 can be made appropriate.

(Item E7) The working vehicle 1 according to any one of items E1 to E6, wherein the pieces of equipment of the working device 200 include batteries 7, and the batteries 7 include a first battery and a second battery located at the opposite sides of the vehicle body 2 from each other.

With the working vehicle 1, a plurality of batteries (the first battery and the second battery) can be arranged on one of opposite sides and the other of the opposite sides with the vehicle body 2 therebetween. Thus, the center of gravity position of the working vehicle 1 can be prevented from being raised by providing the plurality of batteries in or on the vehicle body 2. Also, the right and left weight balance of the working vehicle 1 can be made appropriate.

(Item E8) The working vehicle 1 according to any one of items E1 to E7, further including a support frame 210 to support the pieces of equipment and attachable to and detachable from the vehicle body 2, wherein the support frame 210 is located above the pieces of equipment.

With the working vehicle 1, the pieces of equipment can be attached to and detached from the vehicle body 2 with the support frame 210 as needed. The support frame 210 is located above the pieces of equipment, and thus placing the support frame 210 in or on the vehicle body 2 allows the pieces of equipment to be arranged at one of opposite sides and the other of the opposite sides with the vehicle body 2 therebetween.

(Item E9) The working vehicle 1 according to any one of items E1 to E7, further including a support frame 210 to support the pieces of equipment and attachable to and detachable from the vehicle body 2, wherein the support frame 210 is located below the pieces of equipment.

With the working vehicle 1, the pieces of equipment can be attached to and detached from the vehicle body 2 with the support frame 210 as needed. The support frame 210 is located below the pieces of equipment, and thus the pieces of equipment can be reliably supported by the support frame 210.

(Item E10) The working vehicle 1 according to item E2, further including a frame structure 18 provided at a periphery of the vehicle body 2 and attached to the vehicle body 2, wherein the frame structure 18 includes a left frame 18L located leftward of the vehicle body 2 to extend in an up-down direction, a right frame 18R located rightward of the vehicle body 2 to extend in the up-down direction, and a lateral frame 18M connecting the left frame 18L and the right frame 18R, and the pieces of equipment include a first piece of equipment 201A located leftward of the left frame 18L and a second piece of equipment 201B located rightward of the right frame 18R.

With the working vehicle 1, the vehicle body 2 can be protected by the frame structure 18, and the first piece of equipment 201A can be located leftward of the vehicle body 2, and the second piece of equipment 201B can be located rightward of the vehicle body 2 without being interfered by the frame structure 18.

(Item E11) The working vehicle 1 according to item E8, wherein the support frame 210 is configured to be attached to the vehicle body 2 from above.

With the working vehicle 1, when there is no enough space in the periphery of the vehicle body 2, the pieces of equipment can be attached to the vehicle body 2 with the support frame 210 from above.

(Item E12) The working vehicle 1 according to item E9, wherein the support frame 210 is configured to be attached to the vehicle body 2 from front or rear.

In the working vehicle 1, when there is no enough space on the sides of or above the vehicle body 2, the pieces of equipment can be attached to the vehicle body 2 with the support frame 210 from the front side or the rear side.

(Item E13) The working vehicle 1 according to any one of items E1 to E11, further including a height changing mechanism 90 to change a height of the vehicle body 2 that is a distance of the vehicle body 2 from a ground surface.

With the working vehicle 1, the pieces of equipment can be easily attached to the vehicle body 2 with the support frame 210 from above by changing the height of the vehicle body 2 by the height changing mechanism 90.

(Item F1) A working vehicle 1 including a vehicle body 2, at least one wheel 30 located at a side of the vehicle body 2, and a drive assembly 40 to drive the at least one wheel 30, wherein at least a portion of the drive assembly 40 is located at a position which is radially outward of and faces a tread portion 30a of the at least one wheel 30 and which overlaps a position of the at least one wheel 30 in the width direction of the vehicle body 2.

With the working vehicle 1, as compared to when the drive assembly 40 is located inward (on the vehicle body 2 side) of the wheel 30, it is possible to achieve an area for steering the wheel that is larger by an amount of the overlap OW1 between the width OW2 of the drive assembly 40 in the lateral direction and the outer overlapping position OP1. Thus, a large steering angle of the wheels 30 can be achieved.

(Item F2) The working vehicle 1 according to item F1, wherein the drive assembly 40 includes a steering mechanism 60 to change a direction of the at least one wheel 30, a drive device 45 to generate power, and a transmission mechanism 50 to transmit the power generated by the drive device 45 to the at least one wheel 30, and the at least a portion of the drive assembly 40 at the position overlapping the position of the at least one wheel 30 is the steering mechanism 60.

With the working vehicle 1, as compared to when the steering mechanism 60 is located inward (on the vehicle body 2 side) of the wheel 30, it is possible to achieve an area for steering the wheel that is larger by an amount of overlap between the width of the steering mechanism 60 in the lateral direction and the outer overlapping position OP1. Thus, a large steering angle of the wheels 30 can be achieved.

(Item F3) The working vehicle 1 according to item F1, wherein the drive assembly 40 includes a steering mechanism 60 to change a direction of the at least one wheel 30, a drive device 45 to generate power, and a transmission mechanism 50 to transmit the power generated by the drive device 45 to the at least one wheel, and the at least a portion of the drive assembly 40 at the position overlapping the position of the at least one wheel 30 is the drive device 45.

With the working vehicle 1, as compared to when the drive device 45 is located inward (on the vehicle body 2 side) of the wheel 30, it is possible to achieve an area for steering the wheel that is larger by an amount of overlap between the width of the drive device 45 in the lateral direction and the outer overlapping position OP1. Thus, a large steering angle of the wheels 30 can be achieved.

(Item F4) The working vehicle 1 according to item F1, wherein the drive assembly 40 includes a steering mechanism 60 to change a direction of the at least one wheel 30, a drive device 45 to generate power, and a transmission mechanism 50 to transmit the power generated by the drive device 45 to the at least one wheel 30, and the at least a portion of the drive assembly 40 at the position overlapping the position of the at least one wheel 30 is the transmission mechanism 50.

With the working vehicle 1, as compared to when the transmission mechanism 50 is located inward (on the vehicle body 2 side) of the wheel 30, it is possible to achieve an area for steering the wheel that is larger by an amount of overlap between the width of the transmission mechanism 50 in the lateral direction and the outer overlapping position OP1. Thus, a large steering angle of the wheels 30 can be achieved.

(Item F5) The working vehicle 1 according to item F2, wherein the steering mechanism 60 includes a rotating body 61 to rotate about an axis extending in an up-down direction when the at least one wheel 30 is steered, and an axis AX1 of the rotating body 61 is located above the at least one wheel 30.

With the working vehicle 1, as compared to when the axis AX1 of the rotating body 61 is located inward (on the vehicle body 2 side) of the wheel, a large steering angle of the wheels 30 can be achieved.

(Item F6) The working vehicle 1 according to item F4, wherein the transmission mechanism 50 includes a first transmission shaft 501 which is located above the at least one wheel 30 and extends in an up-down direction.

With the working vehicle 1, the first transmission shaft 501 extends in the up-down direction above the wheel 30, and thus it is possible to eliminate or reduce the likelihood that the movement of the wheel at the time of steering will be hindered by the portion of the transmission mechanism 50 that projects greatly inward (the vehicle body 2 side) from the wheel 30.

(Item F7) The working vehicle 1 according to item F6, wherein the transmission mechanism 50 includes a second transmission shaft 502 to receive power transmitted from the first transmission shaft 501 to rotate, and the second transmission shaft 502 is located inward of the at least one wheel 30 and extends in an up-down direction.

With the working vehicle 1, the second transmission shaft 502 is located inward of the wheel 30 and extends in the up-down direction, and thus power can be easily and reliably transmitted from the second transmission shaft 502 to the wheel 30.

(Item F8) The working vehicle 1 according to item F7, further including a height changing mechanism 90 configured to change a height of the vehicle body 2 that is a distance of the vehicle body 2 from a ground surface, wherein the first transmission shaft 501 or the second transmission shaft 502 is extendable and retractable as the height of the vehicle body 2 is changed by the height changing mechanism 90.

With the working vehicle 1, even when the height of the vehicle body 2 is changed by the height changing mechanism 90, power can be reliably transmitted by the transmission mechanism 50.

(Item F9) The working vehicle 1 according to item F8, wherein the first transmission shaft 501 includes an upper shaft 501a to which power from the drive device 45 is transmitted, and a lower shaft 501b to transmit, to the second transmission shaft 502, the power transmitted to the upper shaft 501a, an axis of the upper shaft 501a and an axis of the lower shaft 501b are located on the same straight line, and a distance between an upper end of the upper shaft 501a and a lower end of the lower shaft 501b changes as the height of the vehicle body 2 is changed by the height changing mechanism 90.

With the working vehicle 1, when the height of the vehicle body 2 is changed by the height changing mechanism 90, the first transmission shaft 501 can be extended or retracted by changing the distance between the upper end of the upper shaft 501a and the lower end of the lower shaft 501b.

(Item F10) The working vehicle 1 according to item F9, wherein the first transmission shaft 501 includes a tubular intermediate shaft 501c including an upper portion 501c1 in which the upper shaft 501a is inserted, and a lower portion 501c2 to be inserted in the lower shaft 501b, an outer surface of the upper shaft 501a includes a first spline, the lower shaft 501b is tubular and an inner surface thereof includes a second spline, the intermediate shaft 501c includes an inner spline provided on an inner surface thereof, and an outer spline provided on an outer surface, and the first spline is engaged with the inner spline, and the second spline is engaged with the outer spline.

With the working vehicle 1, when the height of the vehicle body 2 is changed by the height changing mechanism 90, the first transmission shaft 501 can be extended or retracted while maintaining power transmission between the upper shaft 501a, the intermediate shaft 501c, and the lower shaft 501b.

(Item F11) The working vehicle 1 according to item F5, wherein the steering mechanism 60 includes a cylinder 113 including a rod 113a to extend and retract in a direction perpendicular to the axis, the rotating body 61 includes a first connection portion 61a to be connected to the rod 113a, and a second connection portion 61b to be connected to the at least one wheel 30, and the cylinder 113 is configured to cause the at least one wheel 30 to rotate about the axis by rotating the rotating body 61 about the axis by extension or retraction of the rod 113a.

With the working vehicle 1, the steering mechanism 60 can be compactly placed around the wheel 30, and the wheel 30 can be reliably steered by extending and retracting the rod 113a.

(Item F12) The working vehicle 1 according to any one of items F1 to F11, wherein the at least one wheel30 includes a left front wheel 3LF, a right front wheel 3RF, a left rear wheel 3LB, and a right rear wheel 3RB, the drive assembly 40 includes a first drive assembly 41 to drive the left front wheel 3LF, a second drive assembly 42 to drive the right front wheel 3RF, a third drive assembly 43 to drive the left rear wheel 3LB, and a fourth drive assembly 44 to drive the right rear wheel 3RB, the first drive assembly 41 includes a portion provided at a periphery of the left front wheel 3LF, the second drive assembly 42 includes a portion provided at a periphery of the right front wheel 3RF, the third drive assembly 43 includes a portion provided at a periphery of the left rear wheel 3LB, and the fourth drive assembly 44 includes a portion provided at a periphery of the right rear wheel 3RB.

With the working vehicle 1, the left front wheel 3LF, the right front wheel 3RF, the left rear wheel 3LB, and the right rear wheel 3RB can be independently driven by different drive assemblies (the first drive assembly 41, the second drive assembly 42, the third drive assembly 43, and the fourth drive assembly 44), respectively. The first drive assembly 41, the second drive assembly 42, the third drive assembly 43, and the fourth drive assembly 44 can be provided in the respective peripheries of the wheels, and thus a large steering angle of each wheel can be achieved.

(Item F13) The working vehicle 1 according to any one of items F1 to F12, further including a frame structure 18 to support the vehicle body 2, wherein the drive assembly 40 is attached to the frame structure 18.

With the working vehicle 1, the drive assembly 40 is not provided on the vehicle body 2, but is attached to the frame structure 18, and thus it is easy to position at least a portion of the drive assembly 40 at a position which is radially outward of and faces the tread portion 30a of the wheel 30 and which overlaps the position of the wheel 30 in the width direction of the vehicle body 2.

(Item F14) The working vehicle 1 according to item F13, wherein the frame structure 18 includes side frames 18LR located at sides of the vehicle body 2, and an upper frame 18M located above the vehicle body 2, the drive assembly 40 includes a drive device 45 to generate power to drive the at least one wheel 30, and the drive device 45 is attached to each of the side frames 18LR.

With the working vehicle 1, the drive device 45 to generate power to drive the wheels 30 can be located at a side of the vehicle body 2, and thus it is easy to position the drive device 45 at a position which is radially outward of and faces the tread portion 30a of the wheel 30 and which overlaps the position of the wheel 30 in the width direction of the vehicle body 2.

(Item F15) The working vehicle 1 according to item F13, wherein the frame structure 18 includes side frames 18LR located at sides of the vehicle body 2, and an upper frame 18M located above the vehicle body 2, the drive assembly 40 includes a drive device 45 to generate power to drive the at least one wheel 30, and the drive device 45 is attached to the upper frame 18M.

With the working vehicle 1, the drive device 45 to generate power to drive the wheels 30 can be located above the vehicle body 2, and thus when the vehicle body 2 is raised or lowered, the drive device 45 can be raised or lowered with the vehicle body 2.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working vehicle
- 2: vehicle body
- 3: traveling device
- 3L: left traveling device
- 3LF: left front wheel
- 3LB: left rear wheel
- 3R: right traveling device
- 3RF: right front wheel
- 3RB: right rear wheel
- 4: power supply apparatus
- 5: motor
- 7: battery
- 10: mount
- 15: controller
- 18: frame structure
- 18L: left frame
- 18R: right frame
- 18M: lateral frame
- 30: wheel
- 31: fixed frame
- 32: movable frame
- 70: situation detector (first detector)
- 77: height detector (third detector)
- 90: height changing mechanism
- 91: lifting cylinder
- 91a: rod
- 100: recognizer
- 101: manual operator
- 200: working device
- HA: first height
- HB: second height
- RT1: first row
- RT2: second row
- SM1: first crop
- SM2: second crop
- SM: crop

## Claims

1. A working vehicle comprising:
a vehicle body;
a traveling device to support the vehicle body such that the vehicle body is allowed to travel; and
a height changing mechanism to change a height of the vehicle body that is a distance of the vehicle body from a ground surface; wherein
the height changing mechanism is configured to change the height of the vehicle body to any height between a first height and a second height higher than the first height.

2. The working vehicle according to claim 1, further comprising a mount provided on the vehicle body to attach and detach a working device thereto and therefrom; wherein
the height changing mechanism is configured to change the height of the vehicle body according to work performed by the working device.

3. The working vehicle according to claim 2, further comprising a recognizer to recognize the working device attached to the mount; wherein
the height changing mechanism is configured to change the height of the vehicle body according to the working device recognized by the recognizer.

4. The working vehicle according to claim 1, further comprising a manual operator to be operated to indicate the height of the vehicle body; wherein
the height changing mechanism is configured to change the height of the vehicle body according to the indication of the height via the manual operator.

5. The working vehicle according to claim 2, wherein the height changing mechanism is configured to:
control the height of the vehicle body to be a first work height when the working device attached to the mount is a first working device; and
control the height of the vehicle body to be a second work height when the working device attached to the mount is a second working device different from the first working device.

6. The working vehicle according to claim 1, wherein the height changing mechanism is configured to control the height of the vehicle body to be equal to or greater than the first height when a crop planted in the ground surface is a first crop.

7. The working vehicle according to claim 6, wherein the height changing mechanism is configured to, when the crop planted in the ground surface is a second crop higher than the first crop, control the height of the vehicle body to be greater than a predetermined height of the vehicle body corresponding to the first crop and equal to or less than the second height.

8. The working vehicle according to claim 7, wherein the height changing mechanism is configured to use the predetermined height of the vehicle body corresponding to the first crop that is higher than the first crop, and a predetermined height of the vehicle body corresponding to the second crop that is higher than the second crop.

9. The working vehicle according to claim 1, wherein
the traveling device includes one or more wheels; and
the height changing mechanism is configured to change the height of the vehicle body between the first height at which a position of the vehicle body in an up-down direction overlaps a position of the one or more wheels in the up-down direction and the second height at which the vehicle body is located higher than the one or more wheels in the up-down direction.

10. The working vehicle according to claim 1, wherein the height changing mechanism is configured to change the height of the vehicle body between the first height at which a position of the vehicle body in an up-down direction overlaps a position of the traveling device in the up-down direction and the second height at which the vehicle body is located higher than the traveling device in the up-down direction.

11. The working vehicle according to claim 1, wherein
the traveling device includes a left traveling device located leftward of the vehicle body and a right traveling device located rightward of the vehicle body;
the vehicle body is located between the left traveling device and the right traveling device; and
the height changing mechanism is configured to change the height of the vehicle body by raising or lowering the vehicle body at a location between the left traveling device and the right traveling device.

12. The working vehicle according to claim 11, further comprising a frame structure provided at a periphery of the vehicle body and attached to the vehicle body; wherein
the frame structure includes:
a left frame located leftward of the vehicle body to extend in an up-down direction;
a right frame located rightward of the vehicle body to extend in the up-down direction; and
a lateral frame connecting an upper portion of the left frame and an upper portion of the right frame;
the vehicle body is positioned such that the vehicle body is in an area defined by the left frame, the right frame, and the lateral frame in a front view; and
the height changing mechanism is configured to change the height of the vehicle body that is the distance of the vehicle body from the ground surface by raising or lowering the frame structure.

13. The working vehicle according to claim 12, wherein
the height changing mechanism includes a lifting cylinder including a rod to extend and retract in the up-down direction and configured to raise and lower the frame structure; and
the lifting cylinder includes a lower end positioned at the same or substantially the same height from the ground surface as the height of the vehicle body when the vehicle body is at the first height.

14. The working vehicle according to claim 1, further comprising:
a situation detector to detect a situation in a surrounding area of the vehicle body;
a height detector to detect the height of the vehicle body that is the distance of the vehicle body from the ground surface; and
a controller configured or programmed to actuate the height changing mechanism based on detection results from the situation detector and the height detector to change the height of the vehicle body.

15. The working vehicle according to claim 14, wherein
the situation detector is configured to detect, as the situation in the surrounding area of the vehicle body, a height of an obstacle on the ground surface that hinders travel; and
the controller is configured or programmed to compare the height of the obstacle detected by the situation detector with the height of the vehicle body detected by the height detector, and actuate the height changing mechanism to change the height of the vehicle body such that the changed height of the vehicle body is equal to or greater than the height of the obstacle.

16. The working vehicle according to claim 15, wherein the situation detector is configured to detect, as the height of the obstacle, a height of a crop planted in the ground surface.

17. The working vehicle according to claim 16, wherein
the situation detector is configured to detect the height of the crop located forward of the vehicle body in a direction of travel of the vehicle body; and
the controller is configured or programmed to actuate the height changing mechanism to change the height of the vehicle body during or before travel of the vehicle body to reach the crop located in front of the vehicle body in the direction of travel of the vehicle body.

18. The working vehicle according to claim 16, wherein
the situation detector is configured to, while the vehicle body is traveling along a first row of one or more crops, detect a height of one or more crops in a second row adjacent to the first row; and
the controller is configured or programmed to actuate the height changing mechanism to change the height of the vehicle body while the vehicle body which has finished traveling along the first row is turning to start traveling along the second row.

19. A working vehicle comprising:
a vehicle body;
a traveling device to support the vehicle body such that the vehicle body is allowed to travel; and
a height changing mechanism to change a height of the vehicle body that is a distance of the vehicle body from a ground surface; wherein
the traveling device includes a left traveling device located leftward of the vehicle body and a right traveling device located rightward of the vehicle body;
the vehicle body is located between the left traveling device and the right traveling device; and
the height changing mechanism is configured to raise and lower the vehicle body at a location between the left traveling device and the right traveling device in a width direction of the vehicle body.

20. The working vehicle according to claim 19, further comprising a power supply apparatus to generate power to drive the traveling device; wherein
the vehicle body includes a housing frame to house the power supply apparatus.

21. The working vehicle according to claim 20, wherein
the power supply apparatus includes a motor and a battery to store electricity to be supplied to the motor; and
the height changing mechanism is configured to raise and lower the housing frame which houses the battery.

22. The working vehicle according to claim 19, further comprising a frame structure provided at a periphery of the vehicle body; wherein
the left traveling device includes a left front wheel and a left rear wheel;
the right traveling device includes a right front wheel and a right rear wheel; and
the frame structure includes:
a left frame connecting the left front wheel and the left rear wheel; and
a right frame connecting the right front wheel and the right rear wheel.

23. The working vehicle according to claim 22, wherein
the frame structure includes a fixed frame which has the traveling device attached thereto and a movable frame attached to the vehicle body; and
the height changing mechanism is configured to raise and lower the movable frame relative to the fixed frame.

24. The working vehicle according to claim 19, wherein the height changing mechanism is configured to change the height of the vehicle body to any height within a predetermined height range.

25. The working vehicle according to claim 19, wherein the height changing mechanism is configured to change the height of the vehicle body to a height at which the vehicle body is located between the left traveling device and the right traveling device.

26. The working vehicle according to claim 25, wherein the height changing mechanism is configured to change the height of the vehicle body to a height at which the vehicle body is located higher than the left traveling device and the right traveling device.

27. The working vehicle according to claim 22, wherein the vehicle body is positioned between the left frame and the right frame.

28. The working vehicle according to claim 27, wherein the frame structure includes a lateral frame connecting the left frame and the right frame.

29. The working vehicle according to claim 28, wherein
the lateral frame connects an upper portion of the left frame and an upper portion of the right frame; and
the vehicle body is positioned such that the vehicle body is in an area defined by the left frame, the right frame, and the lateral frame in a front view.

30. The working vehicle according to claim 23, wherein
the height changing mechanism includes lifting cylinders to raise and lower a respective plurality of the movable frames;
the plurality of movable frames are included in the left frame and the right frame, respectively, and a plurality of the fixed frames are included in the left frame and the right frame, respectively; and
the lifting cylinders include a left lifting cylinder to raise and lower the corresponding movable frame of the left frame, and a right lifting cylinder to raise and lower the corresponding movable frame of the right frame.
